# EUROPÄISCHE PATENTSCHRIFT

(11) **EP 4 426 955 B1**
(45) Veröffentlichungstag und Bekanntmachung des Hinweises auf die Patenterteilung: **12.02.2025**
(21) Anmeldenummer: 22818796.9
(22) Anmeldetag: 21.11.2022
(51) Int. Cl.: F16B 21/00, F16B 3/00

(54) **VERBINDUNGSVORRICHTUNG**
CONNECTION DEVICE
DISPOSITIF DE RACCORDEMENT

(30) Priorität: 30.11.2021 DE 102021213558
(43) Veröffentlichungstag der Anmeldung: 11.09.2024
(73) Patentinhaber: Fidlock GmbH, 30659 Hannover (DE)
(72) Erfinder: RICHTER, David, 30167 Hannover (DE); FIEDLER, Joachim, 30519 Hannover (DE); BOTKUS, Breido, 30175 Hannover (DE)
(74) Vertreter: Maikowski & Ninnemann Patentanwälte Partnerschaft mbB
(86) Internationale Anmeldenummer: PCT/EP2022/082639
(87) Internationale Veröffentlichungsnummer: WO 2023/099265

(56) Entgegenhaltungen:
- WO-A1-2014/090926
- DE-T2- 69 813 479

## Beschreibung

Die Erfindung betrifft eine Verbindungsvorrichtung nach dem Oberbegriff des Anspruchs 1.

Eine derartige Verbindungsvorrichtung umfasst ein erstes Verbindungsteil, das einen ersten Grundkörper und zumindest einen starr an dem ersten Grundkörper angeordneten Eingriffsvorsprung aufweist. Die Verbindungsvorrichtung umfasst zudem ein in eine Schließrichtung an das erste Verbindungsteil ansetzbares, zweites Verbindungsteil, das einen zweiten Grundkörper mit einem starr an dem zweiten Grundkörper angeordneten Eingriffsabschnitt aufweist, wobei der Eingriffsabschnitt entlang einer von der Schließrichtung unterschiedlichen Eingriffsrichtung mit dem zumindest einen Eingriffsvorsprung des ersten Verbindungsteils in Eingriff bringbar ist, sodass in einer verbundenen Stellung des ersten Verbindungsteils und des zweiten Verbindungsteils der Eingriffsabschnitt mit dem zumindest einen Eingriffsvorsprung des ersten Verbindungsteils in Eingriff steht. Das erste Verbindungsteil weist eine erste Magneteinrichtung und das zweite Verbindungsteil eine zweite Magneteinrichtung auf. Die erste Magneteinrichtung und die zweite Magneteinrichtung wirken zum Unterstützen des Ansetzens des ersten Verbindungsteils und des zweiten Verbindungsteils aneinander entlang der Schließrichtung magnetisch anziehend zusammen.

Bei der Verbindungsvorrichtung sind ein oder mehrere Eingriffsvorsprünge starr an dem ersten Grundkörper des ersten Verbindungsteils geformt. Mit dem zumindest einen starren Eingriffsvorsprung kann das zweite Verbindungsteil in Eingriff gebracht werden, indem ein Eingriffsabschnitt des zweiten Verbindungsteils mit dem zumindest einen Eingriffsvorsprung des ersten Verbindungsteils in Eingriff gebracht wird. Das Ansetzen des ersten Verbindungsteils und des zweiten Verbindungsteils aneinander erfolgt hierbei entlang einer Schließrichtung, entlang derer Magneteinrichtungen der Verbindungsteile eine magnetische Anziehungskraft zur Verfügung stellen, sodass die Verbindungsteile entlang der Schließrichtung zueinander hin gezogen werden. Das Ineingriffbringen des Eingriffsabschnitts des zweiten Verbindungsteils mit dem zumindest einen Eingriffsvorsprung des ersten Verbindungsteils erfolgt demgegenüber entlang einer Eingriffsrichtung, die quer zur Schließrichtung gerichtet ist. In der verbundenen Stellung steht der Eingriffsabschnitt mit dem zumindest einen Eingriffsvorsprung formschlüssig oder kraftformschlüssig in Eingriff, sodass die Verbindungsteile aneinander gehalten sind.

Darunter, dass die Eingriffsrichtung von der Schließrichtung unterschiedlich ist, ist vorliegend zu verstehen, dass die Eingriffsrichtung senkrecht oder unter einem schrägen Winkel zur Schließrichtung gerichtet ist. Die Eingriffsrichtung ist dabei nicht zwingend exakt senkrecht zur Schließrichtung gerichtet, sondern kann unter einem schrägen Winkel zur Schließrichtung erstreckt sein. Die Eingriffsrichtung ist aber nicht entlang der Schließrichtung, insbesondere auch nicht entgegengesetzt zur Schließrichtung, gerichtet. Bei einer aus der EP 3 616 553 A1 bekannten Verschlussvorrichtung zum lösbaren Verbinden zweier Teile kann ein erstes Verbindungsteil an ein zweites Verbindungsteil angesetzt werden, um die Verbindungsteile miteinander zu verbinden. An einem der Verbindungsteile ist hierbei ein Schnürsenkel angeordnet, der durch Verbinden der Verbindungsteile miteinander gespannt werden kann.

Aus der EP 3 192 388 B1 ist eine Verschlussvorrichtung bekannt, bei der ein erstes Verbindungsteil einen starren Eingriffsvorsprung aufweist und mit einem zweiten Verbindungsteil verbunden werden kann. An dem zweiten Verbindungsteil ist ein Gurt verstellbar angeordnet.

Aus der WO 2014/090926 A1 ist eine Verschlussvorrichtung zum lösbaren Verbinden zweier Teile bekannt,

Bei einer Verbindungsvorrichtung der genannten Art ist generell wünschenswert, ein Verbinden der Verbindungsteile in einfacher, komfortabler, haptisch angenehmer Weise für einen Nutzer zu ermöglichen. Das Verbinden soll dabei vorzugsweise in lagetoleranter Weise ermöglicht werden, bei unpräzisem Ansetzen der Verbindungsteile aneinander. In einer verbundenen Stellung der Verbindungsteile soll eine sichere, belastbare Verbindung geschaffen werden.

Aufgabe der vorliegenden Erfindung ist es, eine Verbindungsvorrichtung zur Verfügung zu stellen, bei der die Verbindungsteile in einfacher, komfortabler Weise aneinander angesetzt werden können und in einer verbundenen Stellung einen sicheren, belastbaren Halt aneinander bereitstellen.

Diese Aufgabe wird durch einen Gegenstand mit den Merkmalen des Anspruchs 1 gelöst.

Demnach weist der erste Grundkörper einen Formschlussabschnitt auf, an dem der zweite Grundkörper in der verbundenen Stellung des ersten Verbindungsteils und des zweiten Verbindungsteils zum Entgegenwirken gegen ein Verkippen des zweiten Verbindungsteils relativ zu dem ersten Verbindungsteil anliegt, wobei der zweite Grundkörper in der verbundenen Stellung in einem ersten Bereich an dem ersten Grundkörper anliegt, in einem in die Eingriffsrichtung an den ersten Bereich anschließenden, zweiten Bereich nicht an dem ersten Grundkörper anliegt, sodass betrachtet entlang der Schließrichtung ein Freiraum zwischen dem ersten Grundkörper und dem zweiten Grundkörper gebildet ist, und ein in die Eingriffsrichtung an den zweiten Bereich anschließender oder beabstandeter, dritter Bereich an dem Formschlussabschnitt abgestützt ist.

Der erste Grundkörper weist einen Formschlussabschnitt auf, an dem der zweite Grundkörper in der verbundenen Stellung des ersten Verbindungteils und des zweiten Verbindungsteils zum Entgegenwirken gegen ein Verkippen des zweiten Verbindungsteils relativ zum ersten Verbindungsteil anliegt. Der Formschlussabschnitt ist insbesondere in einem mit Bezug auf die Eingriffsrichtung vorderen Bereich des ersten Grundkörpers geformt und ist starr an dem ersten Grundkörper ausgebildet. An dem Formschlussabschnitt ist der zweite Grundkörper insbesondere gegen eine Bewegung in die Schließrichtung abgestützt, sodass ein Verkippen des zweiten Verbindungsteils relativ zum ersten Verbindungsteil durch die Abstützung an dem Formschlussabschnitt zumindest erschwert ist.

Bei der Verbindungsvorrichtung kann eine Lastrichtung, entlang derer bei bestimmungsgemäßer Belastung in einem belasteten Zustand eine Lastkraft an dem zweiten Verbindungsteil wirkt, vorzugsweise zumindest mit einer Richtungsvektorkomponente in die Eingriffsrichtung gerichtet sein. In belastetem Zustand wird das zweite Verbindungsteil somit in die Eingriffsrichtung relativ zu dem ersten Verbindungsteil belastet und somit in Richtung eines Eingriffs mit dem zumindest einen starr an dem ersten Verbindungsteil geformten Eingriffsvorsprung.

Aufgrund einer solchen Belastung kann ein Drehmoment an dem zweiten Verbindungsteil wirken, das das zweite Verbindungsteil in Richtung eines Verkippens um eine zur Schließrichtung und zur Eingriffsrichtung senkrechte Querrichtung belastet. Um einem solchen Verkippen entgegenzuwirken, ist der Formschlussabschnitt an dem ersten Grundkörper geformt, der eine Abstützung für den zweiten Grundkörper insbesondere in einem vorderen Bereich schafft, sodass der zweite Grundkörper entgegen einem Verkippen insbesondere um die Querrichtung abgestützt ist und damit eine Belastung nicht zu einem ungewollten Lösen der Verbindungsteile voneinander führen kann.

Durch den Formschlussabschnitt und die dadurch geschaffene Abstützung werden die Verbindungsteile somit in verbundener Stellung sicher, zuverlässig und belastbar aneinandergehalten, ohne dass Belastungskräfte zu einem Lösen der Verbindungsteile voneinander führen können.

In verbundener Stellung liegt der zweite Grundkörper in einem ersten Bereich an dem ersten Grundkörper an. Beispielsweise kann der zweite Grundkörper mit einer Basisfläche an einer Bodenfläche des ersten Grundkörpers anliegen, sodass in dem ersten Bereich eine flächige Anlage zwischen dem zweiten Grundkörper und dem ersten Grundkörper besteht. In einem an den ersten Bereich in die Eingriffsrichtung anschließenden, zweiten Bereich ist der zweite Grundkörper demgegenüber nicht mit dem ersten Grundkörper in Anlage, sodass betrachtet entlang der Schließrichtung ein Freiraum zwischen dem ersten Grundkörper und dem zweiten Grundkörper gebildet ist. An diesen zweiten Bereich schließt ein dritter Bereich an oder ist entlang der Eingriffsrichtung zu dem zweiten Bereich beabstandet. Dieser dritte Bereich des zweiten Grundkörpers ist an dem Formschlussabschnitt des ersten Grundkörpers abgestützt.

Es wird somit eine Abstützung des zweiten Grundkörpers an dem ersten Grundkörper nach Art einer Zwei-Punkt-Auflage mit einem dazwischen geschaffenen Freiraum bereitgestellt (wobei angemerkt sei, dass eine Anlage auch an mehr als zwei Bereichen bestehen kann). Der dritte Bereich kann insbesondere in einem in die Eingriffsrichtung vorderen Bereich des zweiten Grundkörpers geformt sein, sodass über den dritten Bereich insbesondere eine Abstützung entgegen einem Verkippen um eine zur Schließrichtung und zur Eingriffsrichtung senkrechte Querrichtung erfolgen kann. Der erste Bereich kann demgegenüber, mit Bezug auf die Eingriffsrichtung, in einem hinteren Bereich des zweiten Grundkörpers geformt sein.

Über den zwischen dem zweiten Bereich des zweiten Grundkörpers und dem ersten Grundkörper geschaffenen Freiraum kann insbesondere ein einfaches Ansetzen der Verbindungsteile aneinander und ein einfaches Trennen der Verbindungsteile voneinander ermöglicht werden. So kann es zum Beispiel beim Trennen der Verbindungsteile voneinander erforderlich oder vorteilhaft sein, das zweite Verbindungsteil zunächst um einen (kleinen) Weg entgegen der Eingriffsrichtung zum ersten Verbindungsteil zu bewegen und sodann um die Querrichtung zum ersten Verbindungsteil zu verkippen. Bei einem Verkippen kann zum Beispiel der zweite und oder dritte Bereich sich in den Freiraum hinein bewegen, sodass hierdurch eine Kippbewegung des zweiten Verbindungsteils zu relativ zu dem ersten Verbindungsteil in haptisch angenehmer und komfortabel zu bedienender Weise für einen Nutzer ermöglicht wird.

Mit anderen Worten ausgedrückt ist in der verbundenen Stellung das zweite Verbindungsteil insbesondere bei Belastung unter Beschränkung der Freiheitsgrade an dem ersten Verbindungsteil festgelegt. Beim Öffnen werden die Verbindungsteile (zum Beispiel im Rahmen eines Spiels) entgegen der Eingriffsrichtung oder durch geringfügiges Verkippen zueinander bewegt, sodass das zweite Verbindungsteil vom Formschlussabschnitt abgleitet und somit die Beschränkung der Freiheitsgrade reduziert wird. Ein Verkippen der Verbindungsteile zueinander wird somit ermöglicht. Durch das Eintauchen in den Freiraum wird beim Öffnen nach einer anfänglichen Bewegung somit eine (stärkere) Kipp- bzw. Schwenkbewegung der Verbindungsteile zueinander ermöglicht, die ein haptisch angenehmes und komfortabel zu bedienendes Trennen der Verbindungsteile voneinander für einen Nutzer ermöglicht.

Dadurch, dass der zumindest eine Eingriffsvorsprung starr und unverformbar (bei einer bestimmungsgemäß wirkenden Last) an dem ersten Grundkörper des ersten Verbindungsteils geformt ist, kann der Eingriffsvorsprung bei Eingriff mit dem Eingriffsabschnitt des zweiten Grundkörpers Kräfte zuverlässig aufnehmen und ableiten. Der zumindest eine Eingriffsvorsprung ist hierbei vorzugsweise einstückig mit dem ersten Grundkörper des ersten Verbindungsteils geformt, wobei der erste Grundkörper insgesamt starr und unverformbar ausgestaltet ist.

Unter "unverformbar" soll in diesem Zusammenhang eine im Wesentlichen steife Geometrie und Materialwahl des Grundkörpers verstanden werden, die bewirkt, dass sich der Grundkörper des ersten Verbindungsteils mit dem daran geformten Eingriffsvorsprung bei einer bestimmungsgemäßen Last nicht verformt, der Grundkörper also nicht elastisch ausgebildet ist. Beispielsweise kann der Grundkörper des ersten Verbindungsteils aus Metall oder einem harten Kunststoffmaterial ausgebildet sein.

Ebenso ist der Grundkörper des zweiten Verbindungsteils mit dem daran geformten Eingriffsabschnitt starr und unverformbar und dazu zum Beispiel aus Metall oder einem harten Kunststoffmaterial ausgebildet.

Das Ansetzen der Verbindungsteile aneinander wird magnetisch unterstützt. Hierzu weisen das erste Verbindungsteil eine erste Magneteinrichtung und das zweite Verbindungsteil eine zweite Magneteinrichtung auf. Die erste Magneteinrichtung und die zweite Magneteinrichtung wirken in der verbundenen Stellung magnetisch anziehend zusammen und unterstützen insbesondere auch das Ansetzen der Verbindungsteile aneinander. Die Magneteinrichtungen wirken entlang der Schließrichtung magnetisch anziehend, sodass die Magneteinrichtungen eine magnetische Anziehungskraft entlang der Schließrichtung bewirken und die Verbindungsteile beim Ansetzen entlang der Schließrichtung hin zueinander ziehen. Die Magneteinrichtungen können zum Beispiel jeweils durch einen Permanentmagneten ausgebildet sein. Möglich ist aber auch, eine der Magneteinrichtungen durch einen Permanentmagneten und die andere der Magneteinrichtungen durch einen magnetischen Anker und somit durch ein passivmagnetisches Element auszugestalten.

In einer Ausgestaltung ist der zweite Grundkörper dazu ausgebildet, bei einem Verkippen des ersten Verbindungsteils und des zweiten Verbindungsteils relativ zueinander, zum Beispiel beim Trennen der Verbindungsteile voneinander, sich mit dem zweiten und/oder dritten Bereich in die Schließrichtung dem ersten Grundkörper unter Verkleinerung des Freiraums anzunähern. Beispielsweise kann sich bei einem solchen Verkippen der dritte Bereich des zweiten Grundkörpers in den Freiraum hinein bewegen, wobei der dritte Bereich hierbei außer Anlage von dem Formschlussabschnitt gelangt und somit ein Verkippen der Verbindungsteile zueinander ermöglicht wird.

In einer Ausgestaltung weist der erste Grundkörper eine Eintauchöffnung auf, in die der dritte Bereich des zweiten Grundkörpers bei einem Verkippen des zweiten Verbindungsteils relativ zu dem ersten Verbindungsteil in die Schließrichtung eintauchen kann. Die Eintauchöffnung kann insbesondere in einem (mit Bezug auf die Eingriffsrichtung) vorderen Bereich des ersten Grundkörpers gebildet und beispielsweise als Vertiefung an dem ersten Grundkörper geformt sein. In die Eintauchöffnung kann der zweite Grundkörper insbesondere mit einem vorderen, den dritten Bereich ausbildenden Kantenabschnitt eintauchen, wenn die Verbindungsteile (beim Verbinden oder Trennen) zueinander verkippt werden.

Die Eintauchöffnung kann beispielsweise als Vertiefung relativ zu einer Bodenfläche des ersten Grundkörpers geformt sein. Die Eintauchöffnung schließt in diesem Fall beispielsweise an die Bodenfläche an, ist gegenüber der Bodenfläche aber vertieft und somit entlang der Schließrichtung zurückversetzt. Mit der Bodenfläche ist der zweite Grundkörper über seinen ersten Bereich in der verbundenen Stellung beispielsweise in Anlage. Die Eintauchöffnung kann sich dabei insbesondere unterhalb des zumindest einen Eingriffsvorsprungs erstrecken und somit im Bereich des zumindest einen Eingriffsvorsprungs einen Raum zur Verfügung stellen, zu dem der zweite Bereich des zweiten Grundkörpers in der verbundenen Stellung zur Schaffung des Freiraums (mit Bezug auf die Schließrichtung) beabstandet ist und in den der dritte Bereich des zweiten Verbindungsteils eintauchen kann, wenn die Verbindungsteile zum Schließen der Verbindungsvorrichtung aneinander angesetzt werden und auch wenn die Verbindungsteile zum Öffnen der Verbindungsvorrichtung voneinander getrennt werden.

Allgemein kann durch ein Spiel zwischen dem Eingriffsabschnitt des zweiten Verbindungsteils und dem zumindest einen Eingriffsvorsprung des ersten Verbindungsteils ein Verkippen der Verbindungsteile relativ zueinander zum Herstellen der Verbindung und auch zum Trennen erleichtert werden. Das Verkippen wird zudem über den Freiraum zwischen dem zweiten Bereich des zweiten Grundkörpers und dem ersten Grundkörper erleichtert, indem der dritte Bereich des zweiten Grundkörpers nach vorhergehender geringfügiger Betätigung entgegen der Eingriffsrichtung und anschließender kippender Betätigung von dem Formschlussabschnitt abgleiten und in den Freiraum eintauchen kann.

Die Eintauchöffnung kann als Vertiefung oder als Durchgangsöffnung an dem ersten Grundkörper ausgestaltet sein.

Der Formschlussabschnitt kann beispielsweise durch eine Stufe gebildet sein, auf der der zweite Grundkörper in der verbundenen Stellung aufliegt. Der Formschlussabschnitt kann hierbei insbesondere einen senkrecht oder schräg zur Schließrichtung gerichteten Flächenabschnitt aufweisen, der eine Abstützung des zweiten Grundkörpers schafft.

In anderer Ausgestaltung kann der Formschlussabschnitt auch als Eingriffsöffnung, zum Beispiel in Form einer Einkerbung, geformt sein. Über den Formschlussabschnitt wird eine Abstützung an dem ersten Grundkörper senkrecht zur Eingriffsrichtung, nämlich entlang der Schließrichtung, geschaffen, sodass die Verbindungsteile in der verbundenen Stellung bei Belastung nicht ohne weiteres ungewollt zueinander verkippen können, sondern über den Formschlussabschnitt gegen ein (ungewolltes) Verkippen abgestützt sind.

In einer Ausgestaltung ist der Formschlussabschnitt, betrachtet entlang der Schließrichtung, zu dem zumindest einen Eingriffsvorsprung beabstandet. Der Formschlussabschnitt kann sich hierbei, betrachtet entlang der Schließrichtung, oberhalb oder unterhalb des zumindest einen Eingriffsvorsprungs erstrecken.

Zusätzlich oder alternativ kann der Formschlussabschnitt, betrachtet entlang der Eingriffsrichtung, zu dem zumindest einen Eingriffsvorsprung beabstandet sein. Der Formschlussabschnitt befindet sich somit, mit Bezug auf die Eingriffsrichtung, an einem anderen Ort als der zumindest eine Eingriffsvorsprung. Insbesondere kann der Formschlussabschnitt dem zumindest einen Eingriffsvorsprung in die Eingriffsrichtung vorgelagert sein. Der Formschlussabschnitt kann insbesondere bei einer vorteilhaften drehbaren Bauform radial außerhalb des zumindest einen Eingriffsvorsprungs angeordnet sein. Auf diese Weise kann eine günstige Abstützung über den Formschlussabschnitt gegen ein Verkippen der Verbindungsteile zueinander geschaffen werden, indem der zweiten Grundkörper mit günstigem Hebelarm in Anlage mit dem Formschlussabschnitt gelangen kann, wenn Belastungskräfte zwischen den Verbindungsteilen wirken.

In einer Ausgestaltung weist der erste Grundkörper einen starr an dem ersten Grundkörper geformten Stützabschnitt auf, wobei in der verbundenen Stellung der zweite Grundkörper mit dem Stützabschnitt für eine Lastaufnahme entlang der Eingriffsrichtung abgestützt ist. Der zweite Grundkörper kann zum Beispiel einen Kantenabschnitt ausbilden, der bei Belastung in die Eingriffsrichtung mit dem Stützabschnitt in abstützende Anlage gelangt. Der Kantenabschnitt kann zum Beispiel in einem vorderen Bereich des zweiten Grundkörpers geformt sein, wobei der Kantenabschnitt auch umfänglich an dem zweiten Grundkörper umlaufen kann. Der Stützabschnitt ist in einem mit Bezug auf die Eingriffsrichtung vorderen Bereich des ersten Verbindungsteils geformt, sodass der Stützabschnitt eine Abstützung für den zweiten Grundkörper in die Eingriffsrichtung zur Verfügung stellen kann. Bei Belastung des zweiten Verbindungsteils relativ zum ersten Verbindungsteil in die Eingriffsrichtung wird der Kantenabschnitt somit gegen den Stützabschnitt gedrückt und somit an dem Stützabschnitt abgestützt. Über den Kantenabschnitt kann der zweiten Grundkörper in der verbundenen Stellung somit in Anlage mit dem Stützabschnitt am ersten Grundkörper des ersten Verbindungsteils gelangen, sodass darüber Belastungskräfte von dem zweiten Verbindungsteil in das erste Verbindungsteil eingeleitet werden können.

Hierbei ist denkbar, dass der Kantenabschnitt in der verbundenen Stellung stets in die Eingriffsrichtung in Anlage mit dem Stützabschnitt ist. Alternativ kann auch vorgesehen sein, dass in einer unbelasteten Stellung der Kantenabschnitt nicht mit dem Stützabschnitt in die Eingriffsrichtung in Anlage ist, sondern erst bei einer Belastung der Verbindungsteile relativ zueinander in Anlage mit dem Stützabschnitt gelangt.

Über den Stützabschnitt und die Abstützung des Kantenabschnitts des zweiten Grundkörpers an dem Stützabschnitt können Kräfte in vorteilhafter Weise von dem zweiten Verbindungsteil in das erste Verbindungsteil eingeleitet werden. Beispielsweise bei Ausgestaltung der Verbindungsvorrichtung als Gurtbandverschluss kann eine Lastrichtung, entlang derer bei bestimmungsgemäßer Verwendung der Verbindungsvorrichtung eine Kraft zwischen den Verbindungsteilen wirkt, entlang der Eingriffsrichtung gerichtet sein, sodass bei Belastung der Eingriffsabschnitt in Richtung des Eingriffs mit dem zumindest einen Eingriffsvorsprung belastet ist. Dabei gelangt der Kantenabschnitt des zweiten Grundkörpers in abstützende Anlage an dem Stützabschnitt, sodass in die Eingriffsrichtung wirkende Kräfte über die Anlage des Kantenabschnitts an dem Stützabschnitt abgeleitet werden. Der zumindest eine Eingriffsvorsprung dient hierbei insbesondere zur Abstützung entlang der Schließrichtung und somit zur Sicherung des Halts der Verbindungsteile aneinander, wobei Belastungskräfte in die Eingriffsrichtung vorrangig über den Stützabschnitt aufgenommen und abgeleitet werden.

In einer Ausgestaltung ist der Stützabschnitt in einer zur Schließrichtung senkrechten Querschnittsebene bogenförmig gekrümmt. Entsprechend kann auch der Kantenabschnitt bogenförmig gekrümmt sein, wobei die Bogenform des Kantenabschnitts vorteilhafterweise komplementär zu der Bogenform des Stützabschnitts ist und somit der Kantenabschnitt in flächige Anlage mit dem Stützabschnitt gelangen kann.

In einer Ausgestaltung ist der Stützabschnitt, betrachtet entlang der Schließrichtung, zu dem zumindest einen Eingriffsvorsprung beabstandet. Der Stützabschnitt kann sich hierbei, betrachtet entlang der Schließrichtung, oberhalb oder unterhalb des zumindest einen Eingriffsvorsprungs erstrecken.

Zusätzlich oder alternativ kann der Stützabschnitt, betrachtet entlang der Eingriffsrichtung, zu dem zumindest einen Eingriffsvorsprung beabstandet sein. Der Stützabschnitt befindet sich somit, mit Bezug auf die Eingriffsrichtung, an einem anderen Ort als der zumindest eine Eingriffsvorsprung. Insbesondere kann der Stützabschnitt dem zumindest einen Eingriffsvorsprung in die Eingriffsrichtung vorgelagert sein, sodass der Stützabschnitt radial außerhalb des zumindest einen Eingriffsvorsprungs angeordnet ist. Auf diese Weise kann eine günstige Abstützung über den Stützabschnitt geschaffen werden, indem der zweite Grundkörper mit günstigem Hebelarm in Anlage mit dem Stützabschnitt gelangen kann, wenn Belastungskräfte zwischen den Verbindungsteilen wirken.

Der Stützabschnitt ist in einer Ausgestaltung durch einen Flächenabschnitt gebildet, der parallel oder schräg zur Schließrichtung gerichtet ist. Der Stützabschnitt ist hierbei starr an dem ersten Grundkörper des ersten Verbindungsteils geformt. Bei Belastung gelangt der Stützabschnitt am ersten Verbindungsteil in Anlage mit dem zweiten Grundkörper des zweiten Verbindungsteils, sodass in die Eingriffsrichtung wirkende Belastungskräfte in günstiger Weise aufgenommen und abgeleitet werden können.

In einer Ausgestaltung ist das zweite Verbindungsteil in der verbundenen Stellung um die Schließrichtung zu dem ersten Verbindungsteil verdrehbar. Dies kann zum einen ein winkeltolerantes Ansetzen der Verbindungsteile aneinander ermöglichen. Zudem ist dadurch möglich, das zweite Verbindungsteil relativ zu dem ersten Verbindungsteil zu verdrehen, wenn sich die Verbindungsteile in der verbundenen Stellung befinden. Bei einem Verdrehen behalten der Eingriffsabschnitt und der zumindest eine Eingriffsvorsprung hierbei ihren Eingriff bei. Zudem bleibt auch eine Blockierung des Eingriffs durch einen (nachfolgend noch beschriebenen) Blockierabschnitt des ersten Grundkörpers bei einem Verdrehen bestehen. Ein Verdrehen der Verbindungsteile um die Schließrichtung zueinander in der verbundenen Stellung führt somit nicht zu einem Trennen der Verbindungsteile voneinander.

Die Drehbarkeit zwischen den Verbindungsteilen in der verbundenen Stellung kann eine beliebige rotatorische Bewegung um einen beliebigen Winkel ermöglichen. Denkbar ist aber auch, dass die Bewegung der Verbindungsteile zum Beispiel durch Anschläge oder dergleichen auf einen vorbestimmten Drehwinkel beschränkt ist. Der Drehwinkel ist hierbei vorzugsweise größer als 10°, weiter vorzugsweise größer als 20°, besonders bevorzugt größer als 45° oder gar größer als 90°.

In einer Ausgestaltung weist das erste Verbindungsteil einen starr an dem ersten Grundkörper angeordneten Blockierabschnitt auf, der ausgebildet ist, in der verbundenen Stellung mit dem zweiten Verbindungsteil zusammenzuwirken, um den Eingriff des Eingriffsabschnitts mit dem zumindest einen Eingriffsvorsprung entgegen der Eingriffsrichtung zu blockieren. Das zweite Verbindungsteil ist in der verbundenen Stellung um die Schließrichtung zu dem ersten Verbindungsteil verdrehbar. Bei einem Verdrehen bleibt der Eingriff des Eingriffsabschnitts mit dem zumindest einen Eingriffsvorsprung und die Blockierung des Eingriffs durch den Blockierabschnitt bestehen. Das zweite Verbindungsteil ist dabei zu dem ersten Verbindungsteil verkippbar, um zum Trennen des ersten Verbindungsteils und des zweiten Verbindungsteils voneinander die Blockierung entgegen der Eingriffsrichtung aufzuheben und ein Außereingriffbringen des Eingriffsabschnitts und des zumindest einen Eingriffsvorsprungs zu ermöglichen.

Die Verbindungsteile sind entlang der Schließrichtung aneinander anzusetzen, wobei das Ansetzen der Verbindungsteile aneinander magnetisch durch die Magneteinrichtungen der Verbindungsteile unterstützt wird. Die Verbindungsteile werden beim Ansetzen durch die Magneteinrichtung magnetisch zueinander hin gezogen und in der verbundenen Stellung auch magnetisch aneinander gehalten.

Beim Ansetzen der Verbindungsteile gelangt der Eingriffsabschnitt des zweiten Verbindungsteils in die quer oder schräg zur Schließrichtung weisende Eingriffsrichtung in Eingriff mit dem zumindest einen Eingriffsvorsprung des ersten Verbindungsteils, sodass in der verbundenen Stellung eine formschlüssige oder kraftformschlüssige Verbindung zwischen den Verbindungsteilen besteht und die Verbindungsteile somit durch den Eingriff des Eingriffsabschnitts mit dem zumindest einen Eingriffsvorsprung belastbar aneinander gehalten sind.

Der Eingriff zwischen dem Eingriffsabschnitt des zweiten Verbindungsteils und dem zumindest einen Eingriffsvorsprung des ersten Verbindungsteils wird hierbei in der verbundenen Stellung durch den starr an dem ersten Grundkörper des ersten Verbindungsteils geformten Blockierabschnitt des ersten Verbindungsteils gesichert, indem der Blockierabschnitt blockierend entgegen der Eingriffsrichtung mit einem zugeordneten Abschnitt des zweiten Verbindungsteils zusammenwirkt und der Eingriffsabschnitt somit nicht, zumindest nicht ohne Aufheben der Blockierung, entgegen der Eingriffsrichtung zu dem zumindest einen Eingriffsvorsprung bewegt werden kann. Aufgrund der blockierenden Wirkung des Blockierabschnitts ist der Eingriffsabschnitt somit in seinem Eingriff mit dem zumindest einen Eingriffsvorsprung gesperrt, sodass die Verbindungsteile in der verbundenen Stellung zueinander gesichert sind.

Die Verbindungsteile werden hierbei aufgrund der Magnetwirkung der Magneteinrichtungen in der verbundenen Stellung so zueinander gehalten, dass die Verbindungsteile durch den Blockierabschnitt des ersten Verbindungsteils entgegen der Eingriffsrichtung zueinander blockiert sind. Durch eine (reine) Verschiebebewegung entgegen der Eingriffsrichtung können die Verbindungsteile somit nicht voneinander gelöst werden.

Vielmehr ist zum Lösen der Verbindungsteile voneinander erforderlich, dass die Verbindungsteile zueinander verkippt werden, um das zweite Verbindungsteil so in einer durch die Schließrichtung und die Eingriffsrichtung aufgespannten Kippebene zu dem ersten Verbindungsteil zu bewegen, dass das zweite Verbindungsteil entgegen der Eingriffsrichtung zu dem Blockierabschnitt bewegt werden kann. Durch Verkippen des zweiten Verbindungsteils relativ zu dem ersten Verbindungsteil kann die Blockierwirkung des Blockierabschnitts aufgehoben werden, sodass das zweite Verbindungsteil über den Blockierabschnitt hinwegbewegt und somit der Eingriffsabschnitt des zweiten Verbindungsteils außer Eingriff von dem zumindest einen Eingriffsvorsprung des ersten Verbindungsteils gebracht werden kann.

Durch die Blockierwirkung des starr an dem ersten Grundkörper des ersten Verbindungsteils angeordneten Blockierabschnitts wird erreicht, dass das zweite Verbindungsteil nicht linear entgegen der Eingriffsrichtung zu bewegen ist, sondern zum Trennen der Verbindungsteile voneinander in einer durch die Schließrichtung und die Eingriffsrichtung aufgespannten Kippebene zu verkippen ist. Die Kippbewegung kann hierbei um eine definierte Kippachse erfolgen. Die Kippbewegung kann aber auch entlang einer in der Kippebene gelegenen, gekrümmten Bewegungsbahn erfolgen, wobei infolge der Kippbewegung das zweite Verbindungsteil relativ zum ersten Verbindungsteil verkippt wird. Die Kippbewegung kann hierbei durch eine geradlinige Bewegung entgegen der Eingriffsrichtung und/oder entgegen der Schließrichtung überlagert sein.

Angemerkt sei, dass die Verbindungsteile zum Trennen der Verbindungsteile zueinander verkippbar sind. Auch das Herstellen der Verbindung zwischen den Verbindungsteilen erfolgt hierbei jedoch nicht in einer geradlinigen Schließbewegung, sondern dadurch, dass die Verbindungsteile taumelnd unter Verkippung zueinander aneinander angesetzt und miteinander in Eingriff bewegt werden. Auch beim Herstellen der Verbindung kann das zweite Verbindungsteil zu dem ersten Verbindungsteil kippen, um das Ineingriffbringen des Eingriffsabschnitts des zweiten Verbindungsteils mit dem zumindest einen Eingriffsvorsprung des ersten Verbindungsteils zu ermöglichen.

Beim Verkippen zum Trennen der Verbindungsteile voneinander wird der zweite Grundkörper mit seinem dritten Bereich durch geringfügige Bewegung entgegen der Eingriffsrichtung im Rahmen eines Spiels außer Wechselwirkung von dem Formschlussabschnitt am ersten Grundkörper gebracht. Hierbei kann ein Spiel zwischen dem zweiten Verbindungsteil und dem Blockierabschnitt des ersten Verbindungsteils, das eine (geringfügige) Verschiebebewegung des zweiten Verbindungsteils entgegen der Eingriffsrichtung ermöglicht, oder ein Spiel zwischen dem zweiten Verbindungsteil und dem zumindest einen Eingriffsvorsprung, das eine (geringfügige) Kippbewegung und eine anschließende Verschiebebewegung des zweiten Verbindungsteils entgegen der Eingriffsrichtung ermöglicht, vorgesehen sein. Durch die Bewegung im Rahmen des Spiels gelangt der dritte Bereich außer Wirkverbindung von dem Formschlussabschnitt, beispielsweise indem der dritte Bereich von dem zum Beispiel nach Art einer Stufe geformten Formschlussabschnitt abgleitet. Anschließend können die Verbindungsteile (stärker) zueinander verkippt werden, sodass die Verbindungsteile voneinander getrennt werden können.

Die entlang der Eingriffsrichtung gemessene Tiefe des Eingriffsvorsprungs kann hierbei größer sein als die entlang der Eingriffsrichtung gemessene Tiefe der durch den Formschlussabschnitt geschaffenen Auflagefläche, sodass der dritte Bereich zunächst von dem Formschlussabschnitt abgleitet und erst anschließend bei weiterer Bewegung entgegen der Eingriffsrichtung der Eingriffsabschnitt des zweiten Verbindungsteils außer Eingriff von dem zumindest einen Eingriffsvorsprung am ersten Verbindungsteil gelangt.

In einer Ausgestaltung weist das zweite Verbindungsteil ein starr an dem zweiten Grundkörper angeordnetes Blockierelement zum Zusammenwirken mit dem Blockierabschnitt des ersten Verbindungsteils auf. Das Blockierelement ist an dem zweiten Grundkörper geformt und steht beispielsweise entlang der Schließrichtung von einer Basisfläche des zweiten Grundkörpers vor. In der verbundenen Stellung wirkt das Blockierelement mit dem Blockierabschnitt des ersten Verbindungsteils zusammen, sodass eine Bewegung der Verbindungsteile entgegen der Eingriffsrichtung zueinander blockiert ist. Durch Verkippen der Verbindungsteile zueinander kann das Blockierelement jedoch über den Blockierabschnitt gehoben werden, um auf diese Weise die Blockierung aufzuheben und die Verbindungsteile unter Verkippen entgegen der Eingriffsrichtung relativ zueinander zu bewegen, sodass der Eingriff zwischen dem Eingriffsabschnitt des zweiten Verbindungsteils und dem zumindest einen Eingriffsvorsprung des ersten Verbindungsteils aufgehoben und die Verbindungsteile voneinander getrennt werden können.

In der verbundenen Stellung ist das Blockierelement vorzugsweise um die Schließrichtung zu dem Blockierabschnitt verdrehbar, wobei bei einem Verdrehen die Blockierung des Eingriffs des Eingriffsabschnitts mit dem zumindest einen Eingriffsvorsprung bestehen bleibt. Beispielsweise kann das Blockierelement hierzu kreiszylindrisch geformt sein.

In einer Ausgestaltung weist der erste Grundkörper eine Aussparung auf, die zumindest abschnittsweise durch den Blockierabschnitt begrenzt ist. In der verbundenen Stellung liegt das Blockierelement in der Aussparung ein, sodass der Eingriff des Eingriffsabschnitts mit dem zumindest einen Eingriffsvorsprung entgegen der Eingriffsrichtung blockiert ist. Die Aussparung kann beispielsweise als Vertiefung an einer Bodenfläche des ersten Grundkörpers des ersten Verbindungsteils geformt sein. Die Aussparung ist somit in die Bodenfläche eingeformt. Mit der Aussparung wird das Blockierelement in Eingriff gebracht, wenn die Verbindungsteile aneinander angesetzt werden, sodass durch den Eingriff das zweite Verbindungsteil an dem zumindest einen Eingriffsvorsprung des ersten Verbindungsteils gehalten wird.

In einer Ausgestaltung ist die Aussparung (in einer zur Schließrichtung senkrechten Querschnittsebene) durch zumindest eine den Blockierabschnitt verwirklichende Begrenzungswandung begrenzt, die entlang eines Kreisbogens erstreckt ist. Die Aussparung kann beispielsweise eine kreisförmige Grundform aufweisen, bei der die zumindest eine Begrenzungswandung entlang eines (gedachten) zu einer Achse zentrischen Kreises bogenförmig erstreckt ist.

Beispielsweise ist die Aussparung durch zwei bogenförmige Begrenzungswandungen begrenzt, die gemeinsam den Blockierabschnitt ausbilden und in der verbundenen Stellung das Blockierelement des zweiten Verbindungsteils zwischen sich aufnehmen und so eine Bewegung entgegen der Eingriffsrichtung des zweiten Verbindungsteils relativ zum ersten Verbindungsteil sperren. Die eine oder die mehreren Begrenzungswandungen sind hierbei beispielsweise in einem rechten Winkel zur Bodenfläche angeordnet und stellen damit Stützflächen für das Blockierelement zur Verfügung, sodass bei einer Belastung das Blockierelement an den Begrenzungswandungen abgestützt und somit relativ zum ersten Verbindungsteil blockiert ist.

In einer Ausgestaltung weist der Blockierabschnitt eine Auflaufschräge auf. Die Auflaufschräge ist ausgebildet, eine Gleitführung für das Blockierelement entgegen der Eingriffsrichtung bei einem Verkippen des zweiten Verbindungsteils relativ zu dem ersten Verbindungsteils bereitzustellen. Bei Verkippen der Verbindungsteile relativ zueinander kann beispielsweise ein Blockierelement des zweiten Verbindungsteils in Anlage mit der Auflaufschräge gelangen, sodass das Blockierelement auf die Auflaufschräge auflaufen und somit über den Blockierabschnitt hinweg bewegt werden kann. Durch eine solche Auflaufschräge kann das Trennen der Verbindungsteile voneinander somit erleichtert werden.

In einer Ausgestaltung ist das zweite Verbindungsteil zum Verkippen relativ zu dem ersten Verbindungsteil an einer von dem zumindest einen Eingriffsvorsprung abgewandten Seite entgegen der Schließrichtung von dem ersten Verbindungsteil abhebbar. Das zweite Verbindungsteil steht in der verbundenen Stellung über den starr an dem zweiten Grundkörper geformten Eingriffsabschnitt mit dem zumindest einen Eingriffsvorsprung am ersten Grundkörper des ersten Verbindungsteils in Eingriff, wobei dieser Eingriff in einem - in Bezug auf die Eingriffsrichtung gesehen - vorderen Bereich des zweiten Verbindungsteils erfolgt. Mit einem mit Bezug auf die Eingriffsrichtung hinteren Bereich kann das zweite Verbindungsteil in der verbundenen Stellung entgegen der Schließrichtung von dem ersten Verbindungsteil abgehoben werden, um auf diese Weise das zweite Verbindungsteil relativ zu dem ersten Verbindungsteil zu verkippen und dadurch die Blockierwirkung des Blockierabschnitts des ersten Verbindungsteils aufzuheben, sodass das zweite Verbindungsteil zu dem Blockierabschnitt des ersten Verbindungsteils bewegt und der Eingriffsabschnitt entgegen der Eingriffsrichtung außer Eingriff von dem zumindest einen Eingriffsvorsprung gebracht werden kann.

Um die Handhabung für einen Nutzer zu erleichtern, kann das zweite Verbindungsteil beispielsweise einen Betätigungsabschnitt aufweisen, an dem ein Nutzer zum Verkippen des zweiten Verbindungsteils relativ zu dem ersten Verbindungsteil angreifen kann. Der Betätigungsabschnitt kann beispielsweise durch eine Lasche im hinteren Bereich des zweiten Verbindungsteils gebildet sein, an der ein Nutzer ziehen kann, um das zweite Verbindungsteil mit dem hinteren Bereich entgegen der Schließrichtung von dem ersten Verbindungsteil abzuheben. Der Betätigungsabschnitt kann aber auch beispielsweise durch eine Griffmulde oder einen anderen Griffabschnitt geformt sein, an dem ein Nutzer angreifen kann, um auf diese Weise das zweite Verbindungsteil relativ zum ersten Verbindungsteil zu verkippen.

In einer Ausgestaltung ist der zumindest eine Eingriffsvorsprung um die Schließrichtung bogenförmig gekrümmt. Ist ein (einziger) Eingriffsvorsprung vorgesehen, so erstreckt sich dieser somit bogenförmig um die Schließrichtung. Sind mehrere Eingriffsvorsprünge vorgesehen, so kann sich jeder Eingriffsvorsprung zum Beispiel bogenförmig um die Schließrichtung erstrecken. Zusätzlich oder alternativ können die Eingriffsvorsprünge entlang einer um die Schließrichtung weisenden Umfangsrichtung aneinander angereiht sein, sodass die Eingriffsvorsprünge entlang einer bogenförmigen Linie aneinander angereiht sind und gemeinsam einen Eingriff mit dem Eingriffsabschnitt des zweiten Verbindungsteils herstellen, wenn sich die Verbindungsteile in der verbundenen Stellung befinden.

Der zumindest eine Eingriffsvorsprung erstreckt sich um die Schließrichtung um einen Winkel kleiner als 180°, vorzugsweise kleiner als 150°, um zu ermöglichen, dass der Eingriffsabschnitt in die Eingriffsrichtung mit dem zumindest einen Eingriffsvorsprung in Eingriff gebracht werden kann.

Der zumindest eine Eingriffsvorsprung bildet vorzugsweise einen Hinterschnitt mit Bezug auf die Schließrichtung aus. Der zumindest eine Eingriffsvorsprung ist somit mit Bezug auf die Schließrichtung hinterschnitten, indem der zumindest eine Eingriffsvorsprung quer zur Schließrichtung von einem zugeordneten Abschnitt des ersten Verbindungsteils vorspringt.

Der Hinterschnitt kann hierbei durch eine zur Schließrichtung senkrecht oder schräg (unter spitzem oder stumpfen Winkel) erstreckte Fläche gebildet sein.

Ebenso bildet der Eingriffsabschnitt des zweiten Verbindungsteils vorzugsweise einen Hinterschnitt mit Bezug auf die Schließrichtung aus. Der Eingriffsabschnitt ist somit mit Bezug auf die Schließrichtung hinterschnitten, indem der Eingriffsabschnitt quer zur Schließrichtung von einem zugeordneten Abschnitt des zweiten Verbindungsteils vorspringt.

Der Hinterschnitt kann hierbei wiederum durch eine zur Schließrichtung senkrecht oder schräg (unter spitzem oder stumpfen Winkel) erstreckte Fläche gebildet sein.

In einer Ausgestaltung erstreckt sich der Eingriffsabschnitt umfänglich um die Schließrichtung. Der Eingriffsabschnitt kann hierbei zum Beispiel an einem Zapfenelement angeordnet sein und quer zur Schließrichtung von dem Zapfenelement vorstehen.

Beispielsweise ist der Eingriffsabschnitt mit Bezug auf die Schließrichtung rotationssymmetrisch ausgebildet. Dies ermöglicht, den Eingriffsabschnitt in beliebiger Drehstellung des zweiten Verbindungsteils relativ zum ersten Verbindungsteil mit dem zumindest einen Eingriffsvorsprung am ersten Verbindungsteil in Eingriff zu bringen, sodass ein Eingriff zwischen dem Eingriffsabschnitt und dem zumindest einen Eingriffsvorsprung in beliebiger Drehstellung des zweiten Verbindungsteils relativ zum ersten Verbindungsteil besteht und die Verbindungsteile somit zueinander verdreht werden können, ohne dass der Eingriff des Eingriffsabschnitts mit dem zumindest einen Eingriffsvorsprung aufgehoben wird.

In einer Ausgestaltung weist der zweite Grundkörper des zweiten Verbindungsteils einen Basisabschnitt auf.

Der Basisabschnitt kann hierbei in einer Ausgestaltung den Eingriffsabschnitt ausbilden, sodass der Eingriffsabschnitt zum Eingriff mit dem zumindest einen Eingriffsvorsprung des ersten Verbindungsteils an dem Basisabschnitt, zum Beispiel an einem umlaufenden Randabschnitt des Basisabschnitts, geformt ist.

In anderer Ausgestaltung ist der Eingriffsabschnitt zu dem Basisabschnitt entlang der Schließrichtung beabstandet. Der Eingriffsabschnitt ist somit räumlich getrennt von dem Basisabschnitt, beispielsweise indem sich der Basisabschnitt entlang einer ersten Ebene und der Eingriffsabschnitt entlang einer zu der ersten Ebene entlang der Schließrichtung beabstandeten, zweiten Ebene erstreckt.

Wenn der Eingriffsabschnitt zu dem Basisabschnitt räumlich beabstandet ist, so ist der Eingriffsabschnitt beispielsweise an einem Zapfenelement geformt, der entlang der Schließrichtung von dem Basisabschnitt vorsteht. Der Eingriffsabschnitt steht hierbei entlang der Eingriffsrichtung von dem Zapfenabschnitt vor und bildet somit einen Hinterschnitt aus, sodass der Eingriffsabschnitt mit dem zumindest einen Eingriffsvorsprung des ersten Verbindungsteils zum Herstellen einer formschlüssigen oder kraftformschlüssigen Verbindung in Eingriff gebracht werden kann.

Der Eingriffsabschnitt kann beispielsweise umfänglich an dem Zapfenelement geformt sein. Auf diese Weise kann ein pilzförmiges Eingriffselement zur Verfügung gestellt werden, das in beliebiger Drehstellung mit dem zumindest einen Eingriffsvorsprung des ersten Verbindungsteils in Eingriff gebracht werden kann, um die Verbindungsteile miteinander zu verbinden und in der verbundenen Stellung aneinander zu halten.

Wenn der Eingriffsabschnitt zu dem Basisabschnitt räumlich beabstandet ist, kann sich der Basisabschnitt radial zur Schließrichtung weiter als der Eingriffsabschnitt erstrecken und den Eingriffsabschnitt somit radial überragen. Der Eingriffsabschnitt befindet sich somit in einer radial inneren Position, während ein äußerer Rand des Basisabschnitts radial außerhalb des Eingriffsabschnitts angeordnet ist. Auf diese Weise kann über den Basisabschnitt eine günstige Abstützung des zweiten Verbindungsteils an dem ersten Verbindungsteil geschaffen werden, wenn sich die Verbindungsteile in ihrer verbundenen Stellung befinden.

In einer Ausgestaltung ist der Basisabschnitt beispielsweise scheibenförmig geformt. Der Basisabschnitt kann hierbei zum Beispiel eine kreiszylindrische Grundform mit einem kreisförmigen Querschnitt aufweisen.

An dem Basisabschnitt kann beispielsweise ein Befestigungsabschnitt geformt sein, über den ein Gurt mit dem zweiten Verbindungsteil verbunden ist.

In einer Ausgestaltung weist der Basisabschnitt eine Basisfläche und der erste Grundkörper eine Bodenfläche auf. Die Basisfläche und die Bodenfläche sind jeweils senkrecht zur Schließrichtung erstreckt. In der verbundenen Stellung sind die Basisfläche am Basisabschnitt des zweiten Verbindungsteils und die Bodenfläche am ersten Grundkörper des ersten Verbindungsteils einander zugewandt.

Beispielsweise kann in der verbundenen Stellung eine Anlage zwischen der Basisfläche und der Bodenfläche bestehen. Bei einem Verdrehen der Verbindungsteile um die Schließrichtung relativ zueinander werden die Basisfläche und die Bodenfläche somit gleitend aneinander bewegt.

Dies ist jedoch nicht zwingend. Denkbar ist auch, dass in der verbundenen Stellung ein Abstand (und somit keine Anlage) zwischen der Basisfläche und der Bodenfläche besteht.

In einer Ausgestaltung ist der Basisabschnitt um eine zur Schließrichtung und zur Eingriffsrichtung senkrechte Kippachse zu dem ersten Verbindungsteil verkippbar, um die Verbindungsteile relativ zueinander zu verkippen. Das Verkippen der Verbindungsteile zum Trennen der Verbindungsteile voneinander erfolgt somit dadurch, dass der Basisabschnitt um eine Kippachse relativ zum ersten Grundkörper des ersten Verbindungsteils verkippt wird. Die Kippachse kann hierbei durch eine Anlagelinie zwischen dem Basisabschnitt und dem ersten Grundkörper definiert sein. Denkbar ist aber auch, dass die Kippachse einer gedachten Linie entspricht, die durch den Basisabschnitt hindurch oder außerhalb des Basisabschnitts erstreckt ist und einer solchen Linie entspricht, um die der Basisabschnitt bei einem Verkippen der Verbindungsteile relativ zueinander verschwenkt wird.

In einer Ausgestaltung weist der zumindest eine Eingriffsvorsprung zum Beispiel eine Gleitschräge auf, die als Führungsschräge dient, um die Verbindungsteile beim Ansetzen aneinander so zu führen, dass die Verbindungsteile in leichter, vorzugsweise weitestgehend selbsttätiger Weise miteinander in Eingriff gebracht werden können. Vorzugsweise ist die Gleitschräge dazu ausgebildet, das zweite Verbindungsteil bei einem Ansetzen an das erste Verbindungsteil entlang der Schließrichtung so an dem zumindest einen Eingriffsvorsprung zu führen, dass das zweite Verbindungsteil entgegen der Eingriffsrichtung zu dem ersten Verbindungsteil versetzt und dadurch an dem zumindest einen Eingriffsvorsprung vorbei bewegt wird. Nach dem Vorbeibewegen ist das zweite Verbindungsteil dann in die Eingriffsrichtung mit dem zumindest einen Eingriffsvorsprung des ersten Verbindungsteils in Eingriff bringbar. Durch Gleiten an dem zumindest einen Eingriffsvorsprung wird das zweite Verbindungsteil somit so relativ zu dem ersten Verbindungsteil geführt, dass das zweite Verbindungsteil an dem zumindest einen Eingriffsvorsprung vorbei bewegt wird. Hat das zweite Verbindungsteil mit seinem Eingriffsabschnitt den zumindest einen Eingriffsvorsprung passiert, so kann der Eingriffsabschnitt in die Eingriffsrichtung mit dem zumindest einen Eingriffsvorsprung am ersten Verbindungsteil in Eingriff gebracht werden.

In einer Ausgestaltung weist ein Gurtbandverschluss eine Verbindungsvorrichtung nach der vorangehend beschriebenen Art auf. Insbesondere das zweite Verbindungsteil kann hierbei mit einem Gurt verbunden sein, wobei der Gurt fest und nicht verstellbar, gegebenenfalls aber auch verstellbar an dem zweiten Verbindungteil angeordnet sein kann.

Das erste Verbindungsteil kann ebenfalls mit einem Gurt verbunden sein, kann aber auch fest an einer zugeordneten Baugruppe, zum Beispiel einem textilen Gegenstand oder einem anderen Gegenstand, angeordnet sein.

In einer Ausgestaltung weist das erste Verbindungsteil bei Verwendung der Verbindungsvorrichtung an einem Gurtbandverschluss zwei Eingriffsvorsprünge auf, die derart quer zur Schließrichtung und quer zur Eingriffsrichtung zueinander beabstandet sind, dass der Gurt in der verbundenen Stellung des ersten Verbindungteils und des zweiten Verbindungsteils zwischen den Eingriffsvorsprüngen hindurchgeführt werden kann. Der Gurt wird somit zwischen den Eingriffsvorsprüngen aufgenommen, sodass über die Eingriffsvorsprünge beidseits des Gurts eine Abstützung des zweiten Verbindungsteils zu dem ersten Verbindungsteil geschaffen wird.

In anderer Verwendung kann eine Objektbefestigungseinrichtung zum Befestigen eines Objekts an einer Baugruppe eine Verbindungsvorrichtung der beschriebenen Art aufweisen. Das Objekt kann hierbei beispielsweise an einem der Verbindungsteile angeordnet, beispielsweise in das Verbindungsteil integriert sein. Das andere der Verbindungsteile ist demgegenüber an der Baugruppe angeordnet, sodass durch Verbinden der Verbindungsteile das Objekt an der Baugruppe festgelegt werden kann.

Die nachstehend aufgelisteten Verwendungsmöglichkeiten sollen die vielfältige Verwendbarkeit der Verbindungsvorrichtung illustrieren, sind aber nicht beschränkend und insbesondere auch nicht abschließend zu verstehen. So kann die Verbindungsvorrichtung verwendet werden für:
- Helmverschluss
- Pferdehalfter,
- abnehmbare (Brust-)Beutel,
- Taschen, Rucksäcke
- für Rolltops, zum Verschließen mit (elastischem) Gurtband
- Jackenverschlüsse (z.B. am Ärmel, Revers, Knopfleiste, oder hochbinden der Hemdärmel)
- Rollos in Wohnmobilen, Sichtschutz Caravan
- Verdecke
- Sonnensegel, Planen, Campingzelte, Zeltabspannungen
- Befestigen oder Verschließen von Gepäcktaschen bzw. Satteltaschen (Bike, Motorrad)
- Gepäck- und Ladungssicherung, oder Sicherung Fahrrad/ Kinderwagen in und an Fahrzeugen öfftl. Verkehrsmitteln
- Sortierung- & Sicherungssystem für Handwerker im Fahrzeug
- Bandverschluss, Rückhaltesysteme und Verschlussvorrichtungen für Trageeinrichtungen
- Brustgurte, Hüftgurte, Schultergurte
- abnehmbare Handgriffe oder Trageriemen an Taschen
- Sonnenschutz zum Aufklappen, z.B. an Kinderwagen
- Bewegliche und abnehmbare oder öffenbare Anbindung von Rucksack-Trageriemen
- Aufhängung für Kleiderbügel
- Möbel, zum Beispiel zum Befestigen von Sitzelementen
- Schlafsäcke, Isomatten, Yogamatten (zum Zusammenrollen und Befestigen)
- Handtuchhalter
- Schlüsselhalter
- Gürtel
- Handwerkergürtel mit Werkzeugtool zum Einhängen
- abnehmbare Tragegurte z.B. an Werkzeugen und Gartengeräten, Henkel bei Taschen und Elektrogeräten
- Handschuhe, Schuhe, Golfbags (zum Verschließen oder aneinander Befestigen)
- einen Mückenschutz im Kinderwagen oder Zelt
- ein Kofferband, zum Beispiel als Befestigung von Sachen im Fahrradkorb
- für Komponenten und Zubehör am Fahrrad (Tacho, Licht, Computer, elektronische Geräte etc.).

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Ausführungsbeispiels einer Verbindungsvorrichtung;
- Fig. 2A: eine Explosionsansicht der Verbindungsvorrichtung;
- Fig. 2B: die Explosionsansicht in anderer perspektivischer Darstellung;
- Fig. 3A: eine gesonderte Ansicht eines ersten Verbindungsteils der Verbindungsvorrichtung;
- Fig. 3B: eine andere Ansicht des ersten Verbindungsteils;
- Fig. 4A: eine Draufsicht auf das erste Verbindungsteil;
- Fig. 4B: eine Ansicht des ersten Verbindungsteils von unten;
- Fig. 4C: eine Schnittansicht entlang der Linie G-G gemäß Fig. 4B;
- Fig. 5A: eine Ansicht eines zweiten Verbindungsteils mit einem daran angeordneten Gurt;
- Fig. 5B: eine andere Ansicht des zweiten Verbindungsteils mit dem daran angeordneten Gurt;
- Fig. 6A: eine Ansicht des zweiten Verbindungsteils von unten;
- Fig. 6B: eine Draufsicht auf das zweite Verbindungsteil;
- Fig. 6C: eine Schnittansicht entlang der Linie I-I gemäß Fig. 6B;
- Fig. 7A: eine Ansicht der Verbindungsvorrichtung beim Herstellen der Verbindung der Verbindungsteile;
- Fig. 7B: eine Schnittansicht entlang der Linie B-B gemäß Fig. 7A;
- Fig. 8A: eine Ansicht der Verbindungsvorrichtung beim weiteren Schließen;
- Fig. 8B: eine Schnittansicht entlang der Linie C-C gemäß Fig. 8A;
- Fig. 9A: eine Ansicht der Verbindungsvorrichtung beim weiteren Schließen;
- Fig. 9B: eine Schnittansicht entlang der Linie D-D gemäß Fig. 9A;
- Fig. 10A: eine Ansicht der Verbindungsvorrichtung beim weiteren Schließen;
- Fig. 10B: eine Schnittansicht entlang der Linie E-E gemäß Fig. 10A;
- Fig. 10C: eine Schnittansicht entlang der Linie L-L gemäß Fig. 10A;
- Fig. 11A: eine Ansicht der Verbindungsvorrichtung in einer verbundenen Stellung der Verbindungsteile;
- Fig. 11B: eine Schnittansicht entlang der Linie J-J gemäß Fig. 11A;
- Fig. 11C: eine Schnittansicht entlang der Linie K-K gemäß Fig. 11B;
- Fig. 11D: eine Schnittansicht entlang der Linie F-F gemäß Fig. 11B;
- Fig. 11E: die Schnittansicht gemäß Fig. 11B, in einer vergrößerten Darstellung;
- Fig. 12A: eine Draufsicht auf die Verbindungsvorrichtung in einer gegenüber dem ersten Verbindungsteil verdrehten Stellung des zweiten Verbindungsteils;
- Fig. 12B: eine Seitenansicht der Anordnung gemäß Fig. 12A;
- Fig. 12C: eine Schnittansicht entlang der Linie N-N gemäß Fig. 12A;
- Fig. 12D: eine Seitenansicht der Verbindungsvorrichtung schräg von hinten;
- Fig. 12E: eine Draufsicht auf die Verbindungsvorrichtung;
- Fig. 12F: eine Schnittansicht entlang der Linie M-M gemäß Fig. 12E;
- Fig. 13A: eine Ansicht eines zweiten Verbindungsteils, nach einem anderen Ausführungsbeispiel einer Verbindungsvorrichtung;
- Fig. 13B: eine andere perspektivische Ansicht des zweiten Verbindungsteils;
- Fig. 14A: eine Ansicht des zweiten Verbindungsteils von unten;
- Fig. 14B: eine Draufsicht auf das zweite Verbindungsteil;
- Fig. 14C: eine Schnittansicht entlang der Linie E-E gemäß Fig. 14B;
- Fig. 15A: eine Ansicht eines ersten Verbindungsteils, an das das zweite Verbindungsteil gemäß Fig. 13A, 13B und 14A-14C ansetzbar ist;
- Fig. 15B: eine andere Ansicht des ersten Verbindungsteils;
- Fig. 16A: eine Ansicht des ersten Verbindungsteils von unten;
- Fig. 16B: eine Draufsicht auf das erste Verbindungsteil;
- Fig. 16C: eine Schnittansicht entlang der Linie F-F gemäß Fig. 16B;
- Fig. 17A: eine Ansicht der Verbindungsvorrichtung beim Schließen;
- Fig. 17B: eine Schnittansicht entlang der Linie A-A gemäß Fig. 17A;
- Fig. 18A: eine Ansicht der Verbindungsvorrichtung beim weiteren Schließen;
- Fig. 18B: eine Schnittansicht entlang der Linie B-B gemäß Fig. 18A;
- Fig. 19A: eine Ansicht der Verbindungsvorrichtung beim weiteren Schließen;
- Fig. 19B: eine Schnittansicht entlang der Linie C-C gemäß Fig. 19A;
- Fig. 20A: eine Ansicht der Verbindungsvorrichtung in einer verbundenen Stellung der Verbindungsteile;
- Fig. 20B: eine Schnittansicht entlang der Linie D-D gemäß Fig. 20A;
- Fig. 20C: eine Schnittansicht entlang der Linie G-G gemäß Fig. 20B;
- Fig. 20D: eine Schnittansicht entlang der Linie H-H gemäß Fig. 20B;
- Fig. 21: eine Ansicht eines anderen Ausführungsbeispiels einer Verbindungsvorrichtung;
- Fig. 22A: eine perspektivische Explosionsansicht der Verbindungsvorrichtung;
- Fig. 22B: eine andere Explosionsansicht der Verbindungsvorrichtung;
- Fig. 23A: eine gesonderte Ansicht eines ersten Verbindungsteils der Verbindungsvorrichtung;
- Fig. 23B: eine andere Ansicht des ersten Verbindungsteils;
- Fig. 24A: eine Draufsicht auf das erste Verbindungsteil;
- Fig. 24B: eine Ansicht des ersten Verbindungteils von unten;
- Fig. 24C: eine Schnittansicht entlang der Linie F-F gemäß Fig. 24B;
- Fig. 25A: eine Ansicht eines zweiten Verbindungsteils der Verbindungsvorrichtung;
- Fig. 25B: eine andere Ansicht des zweiten Verbindungsteils;
- Fig. 26A: eine Ansicht des zweiten Verbindungsteils von unten;
- Fig. 26B: eine Draufsicht auf das zweite Verbindungsteil;
- Fig. 26C: eine Schnittansicht entlang der Linie G-G gemäß Fig. 26B;
- Fig. 27A: eine Ansicht der Verbindungsvorrichtung beim Schließen;
- Fig. 27B: eine Schnittansicht der Verbindungsvorrichtung entlang der Linie A-A gemäß Fig. 27A;
- Fig. 28A: eine Ansicht der Verbindungsvorrichtung beim weiteren Schließen;
- Fig. 28B: eine Schnittansicht entlang der Linie B-B gemäß Fig 28A;
- Fig. 29A: eine Ansicht der Verbindungsvorrichtung beim weiteren Schließen;
- Fig. 29B: eine Schnittansicht entlang der Linie C-C gemäß Fig. 29A;
- Fig. 30A: eine Ansicht der Verbindungsvorrichtung in einer verbundenen Stellung der Verbindungsteile;
- Fig. 30B: eine Schnittansicht entlang der Linie O-O gemäß Fig. 30A;
- Fig. 30C: eine Schnittansicht entlang der Linie A-A gemäß Fig. 30B;
- Fig. 30D: eine Schnittansicht entlang der Linie Q-Q gemäß Fig. 30B;
- Fig.31A: eine Explosionsansicht eines wiederum anderen Ausführungsbeispiels einer Verbindungsvorrichtung;
- Fig. 31B: eine Schnittansicht der Verbindungsvorrichtung beim Schließen, entsprechend der Schnittansicht gemäß Fig. 29B;
- Fig. 31C: eine Schnittansicht der Verbindungsvorrichtung in einer verbundenen Stellung der Verbindungsteile, entsprechend der Schnittansicht gemäß Fig. 30B; und
- Fig. 32 bis 58: Ansichten von unterschiedlichen Verwendungsmöglichkeiten der Verbindungsvorrichtung.

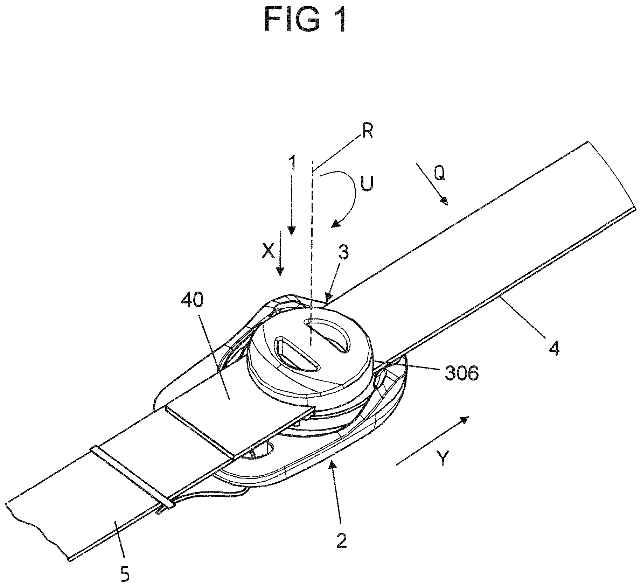

In einem in Fig. 1 bis 12A-12F dargestellten Ausführungsbeispiel weist eine Verbindungsvorrichtung 1 ein erstes Verbindungsteil 2 (sogenanntes Female-Teil) und ein an das erste Verbindungsteil 2 anzusetzendes, zweites Verbindungsteil 3 (sogenanntes Male-Teil) auf.

Die Verbindungsteile 2, 3 können generell entlang einer Schließrichtung X aneinander angesetzt werden, wobei die Verbindungsteile 2, 3 jeweils eine Magneteinrichtung 21, 31 in Form eines Permanentmagneten (oder alternativ einerseits in Form eines Permanentmagneten und andererseits in Form eines magnetischen Ankers) aufweisen, die magnetisch anziehend zusammenwirken und die Verbindungsteile 2, 3 entlang der Schließrichtung X zueinander hinziehen.

Angemerkt sei, dass das Ansetzen der Verbindungsteile 2, 3 auch in eine von der Schließrichtung X abweichende, zum Beispiel schräg zur Schließrichtung X gerichtete Richtung möglich sein kann. Die Magneteinrichtungen 21, 31 wirken entlang der Schließrichtung X magnetisch anziehend zusammen und ziehen die Verbindungsteile 2, 3 entlang der Schließrichtung X zueinander hin.

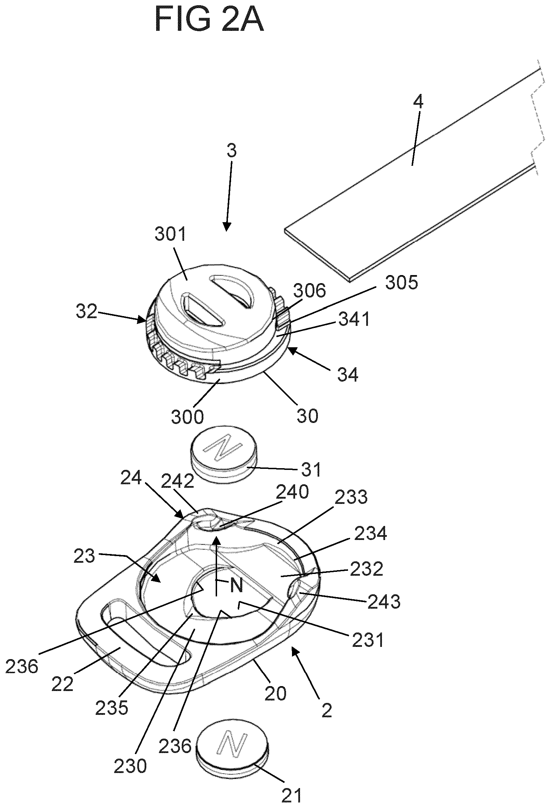

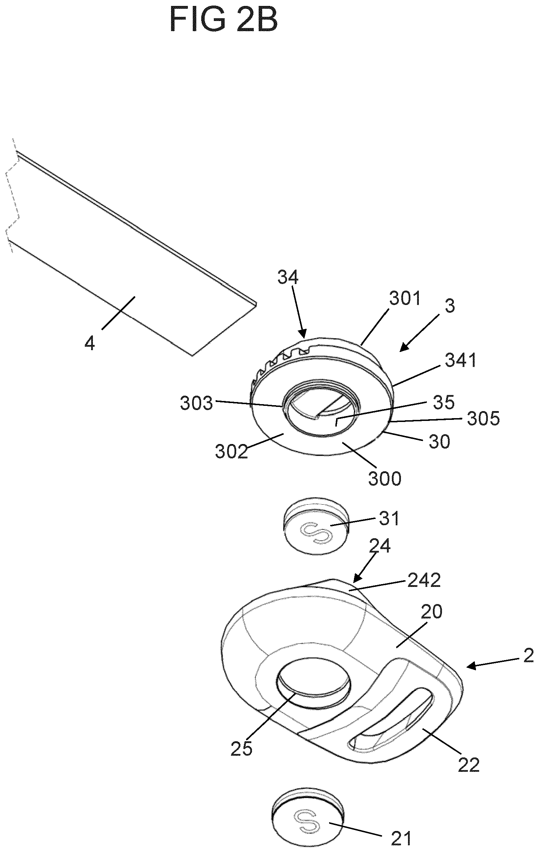

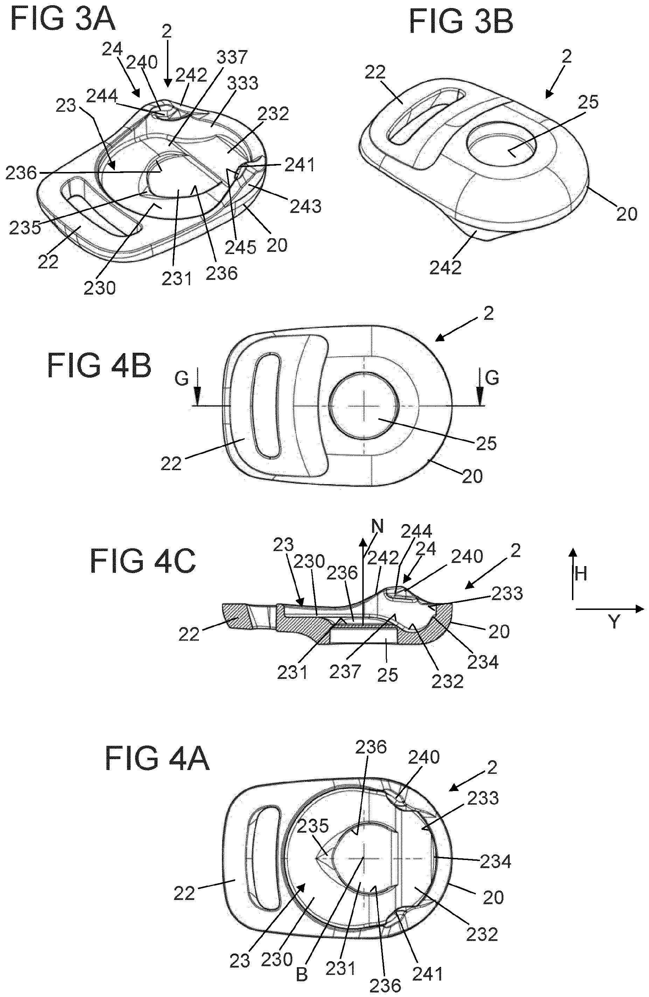

Wie aus den Explosionsansichten gemäß Fig. 2A und 2B sowie den gesonderten Ansichten gemäß Fig. 3A, 3B und 4A-4C ersichtlich, weist das erste Verbindungsteil 2 einen Grundkörper 20 auf, der eine Aufnahmeöffnung 23 zum Aufnehmen des zweiten Verbindungsteils 3 ausbildet. An dem Grundkörper 20 ist eine Gurtbandaufnahme 22 in Form eines Stegs und einer daran anschließenden Öffnung angeordnet, an der ein Gurt 5 befestigt werden kann oder befestigt ist. An einer der Aufnahmeöffnung 23 abgewandten Seite bildet der Grundkörper 20 eine Befestigungsöffnung 25 zum Aufnehmen der Magneteinrichtung 21 aus.

Die Aufnahmeöffnung 23 ist als Vertiefung an dem Grundkörper 20 geformt. Innerhalb der Aufnahmeöffnung 23 ist eine Bodenfläche 230 in Form einer ebenen, senkrecht zur Schließrichtung X erstreckten Fläche ausgebildet, mit der das zweite Verbindungsteil 3 bei Einsetzen in die Aufnahmeöffnung 23 zum Herstellen einer Verbindung der Verbindungsteile 2, 3 in flächige Anlage gebracht werden kann.

In die Bodenfläche 230 ist eine Aussparung 231 in Form einer Vertiefung eingeformt, in die - wie nachfolgend noch beschrieben werden soll - in verbundener Stellung der Verbindungsteile 2, 3 ein Blockierelement 303 an einem Basisabschnitt 300 des zweiten Verbindungsteils 3 eingreift.

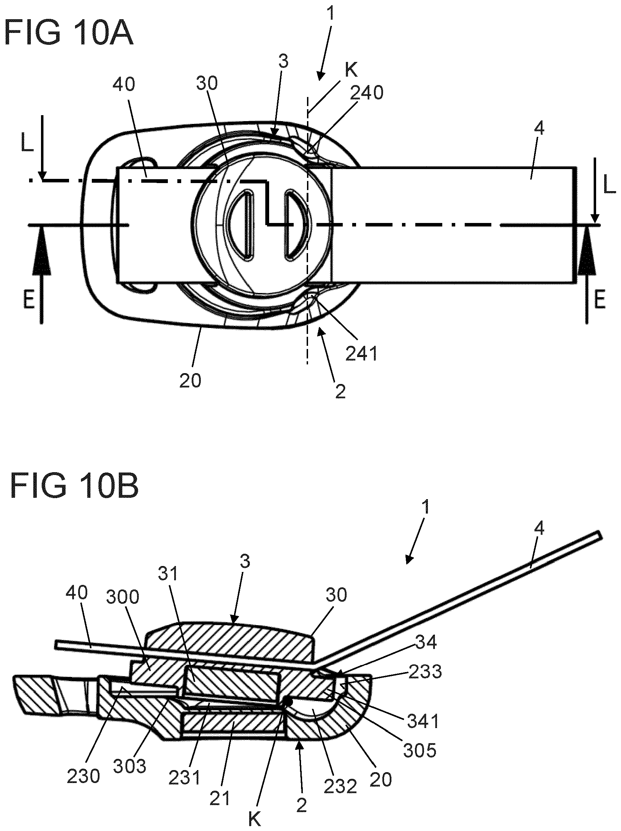

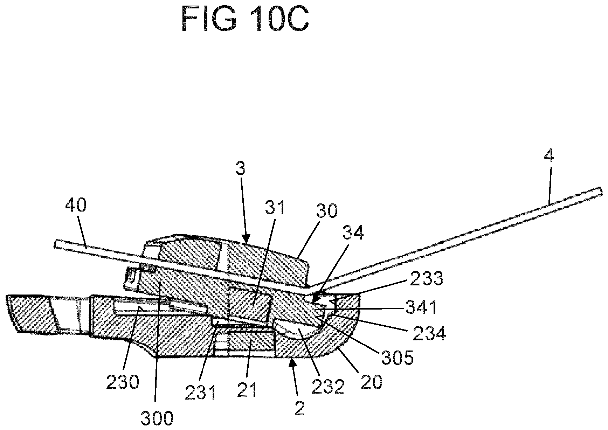

Die Aufnahmeöffnung 23 wird an einem vorderen Ende durch einen Stützabschnitt 233 begrenzt, der als Abstützung und Lastaufnahme für das zweite Verbindungsteil 3 in der verbundenen Stellung dient. Zwischen dem Stützabschnitt 233 und der Bodenfläche 230 ist eine Eintauchöffnung 232 geformt, die dazu dient, das Herstellen der Verbindung genauso wie das Trennen der Verbindungsteile 2, 3 zu erleichtern, indem ein Kantenabschnitt 305 des Basisabschnitts 300 des zweiten Verbindungsteils 3 beim Herstellen der Verbindung und auch beim Trennen der Verbindung in die Eintauchöffnung 232 eintauchen kann, wie dies zum Beispiel in Fig. 10B ersichtlich ist und nachfolgend noch beschrieben werden soll.

Die Eintauchöffnung 232 ist als Vertiefung relativ zur Bodenfläche 230 geformt und schließt derart an die Bodenfläche 230 an, dass die Eintauchöffnung 232 zwischen dem Stützabschnitt 233 und der Bodenfläche 230 gelegen ist. Am Übergang zwischen der Eintauchöffnung 232 und der Bodenfläche 230 ist eine abgeschrägte Übergangsfläche 237 geformt, die als Führung für das zweite Verbindungsteil 3 zum Herstellen der Verbindung genauso wie beim Trennen der Verbindung dient.

An dem starr ausgebildeten Grundkörper 20 sind an zwei seitlichen, erhabenen Abschnitten 242, 243 starr mit dem Grundkörper 20 geformte Eingriffsvorsprünge 240, 241 angeordnet, die - betrachtet entlang einer entlang der Schließrichtung X weisenden Höhenrichtung H - oberhalb der Bodenfläche 230 gelegen sind und dazu dienen, eine formschlüssige oder kraftformschlüssige Verbindung zwischen den Verbindungsteilen 2, 3 in verbundener Stellung herzustellen. Die Eingriffsvorsprünge 240, 241 sind entlang einer Querrichtung Q zueinander beabstandet. Die Eingriffsvorsprünge 240, 241 bilden gemeinsam eine Eingriffseinrichtung 24 aus, die einen formschlüssigen oder kraftformschlüssigen Eingriff mit dem zweiten Verbindungsteil 3 ermöglicht. Wie dies nachfolgend noch erläutert werden soll, ist der Basisabschnitt 300 des zweiten Verbindungsteils 3 in verbundener Stellung mit einem daran geformten Eingriffsabschnitt 341 zwischen den Eingriffsvorsprüngen 240, 241 und der Bodenfläche 230 aufgenommen und zudem an einer vorderen Kante 305 an dem Stützabschnitt 233 abgestützt, sodass darüber die Verbindungsteile 2, 3 sicher und zuverlässig aneinandergehalten sind.

An den Eingriffsvorsprüngen 240, 241 sind Gleitschrägen 244, 245 geformt, die schräg zur Höhenrichtung H geneigt sind und ein Abgleiten des zweiten Verbindungsteils 3 entgegen einer Eingriffsrichtung Y bewirken, wenn die Verbindungsteile 2, 3 entlang der Schließrichtung X aneinander angesetzt werden.

Die Aussparung 231 ist seitlich durch bogenförmige Begrenzungswandungen 236 begrenzt, die gemeinsam einen Blockierabschnitt des ersten Verbindungsteils 2 verwirklichen und senkrecht zu einem Boden der Aussparung 231 und zudem zur Bodenfläche 230 ausgerichtet sind. Die Begrenzungswandungen 236 erstrecken sich kreisbogenförmig um eine zentrale Achse B der Aussparung 231, die entlang einer Normalenrichtung N der Bodenfläche 230 gerichtet ist.

Zwischen den Begrenzungswandungen 236 ist eine Auflaufschräge 235 geformt, die rückwärtig des Stützabschnitts 233 an der Aussparung 231 angeordnet ist und eine Gleitfläche bereitstellt, um das Eingleiten des Blockierelements 303 in die Aussparung 231 und auch das Lösen des Blockierelements 303 aus der Aussparung 231 zu erleichtern.

Die Bodenfläche 230 erstreckt sich eben entlang einer zur Normalenrichtung N senkrechten Ebene.

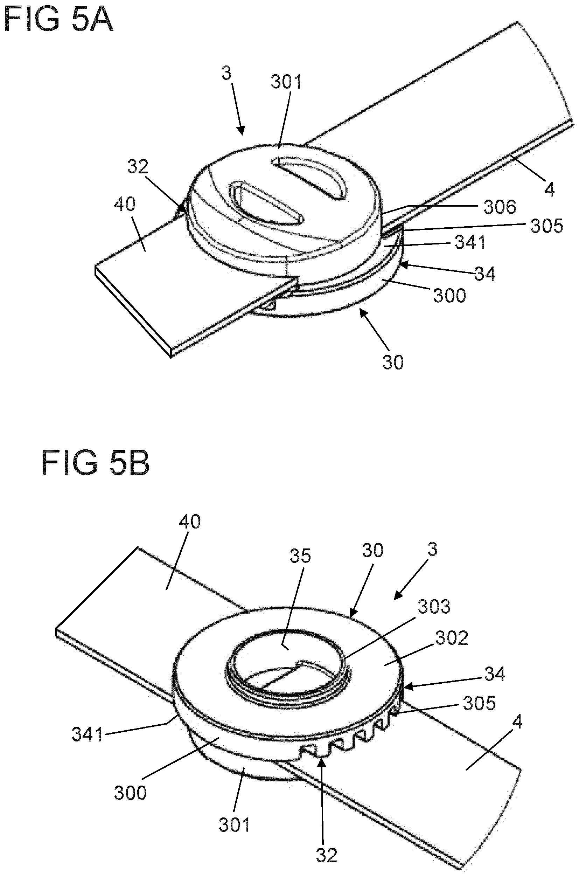

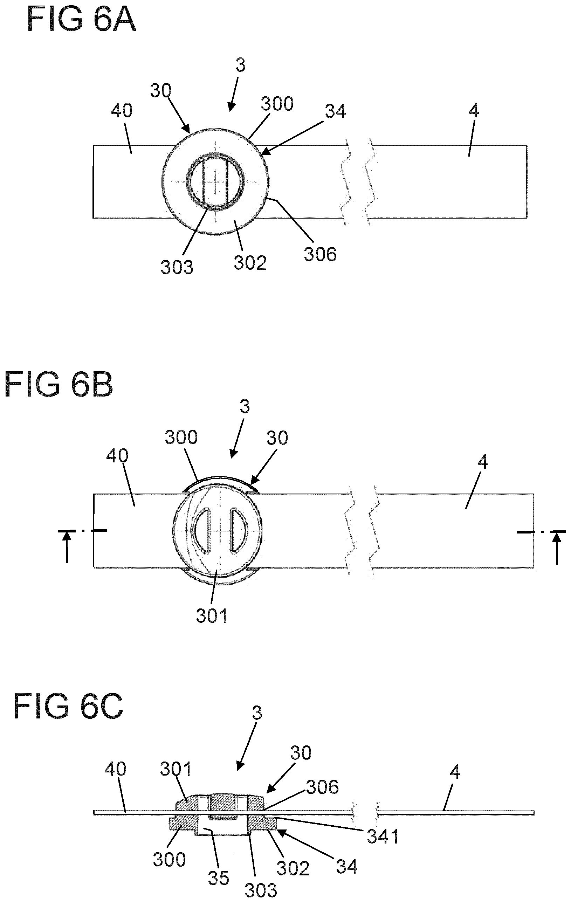

Das zweite Verbindungsteil 3 ist, wie dies aus den Explosionsansichten gemäß Fig. 2A, 2B sowie den gesonderten Ansichten gemäß Fig. 5A, 5B und 6A-6C ersichtlich ist, fest mit einem Gurt 4 verbunden. Das zweite Verbindungsteil 3 weist einen Grundkörper 30 auf, an dem der Gurt 4 fest und nicht verstellbar angeordnet ist, indem der Gurt 4 in einer zwischen einem Basisabschnitt 300 und einem Befestigungsabschnitt 301 geformten Gurtbandaufnahme 32 einliegt und dadurch fest an dem Grundkörper 30 angeordnet ist.

Der Grundkörper 30 kann beispielsweise mit dem Basisabschnitt 300 und dem Befestigungsabschnitt 301 einteilig und integral durch Kunststoffspritzgießen geformt sein, wobei der Gurt 4 abschnittsweise umspritzt ist und somit fest und unverstellbar mit dem Grundkörper 30 verbunden ist.

Der Basisabschnitt 300 weist eine kreiszylindrische Grundform auf und bildet an einer (bei Herstellen der Verbindung) dem ersten Verbindungsteil 2 zugewandten Seite eine Basisfläche 302 aus, die eben erstreckt ist und bei Ansetzen des zweiten Verbindungsteils 3 an das erste Verbindungsteil 2 flächig mit der Bodenfläche 230 in der Aufnahmeöffnung 23 in Anlage gelangt.

Von der Basisfläche 302 steht ein zum kreiszylindrischen Basisabschnitt 300 konzentrisches, im Querschnitt kreisförmiges Blockierelement 303 vor, das zum Eingreifen in die Aussparung 231 an der Bodenfläche 230 des Grundkörpers 20 des ersten Verbindungsteils 2 dient.

innerhalb des Blockierelements 303 ist eine Befestigungsöffnung 35 geformt, die zum Aufnehmen der Magneteinrichtung 31 zum Beispiel in Form eines Permanentmagneten des zweiten Verbindungsteils 3 dient und innerhalb derer die Magneteinrichtung 31 befestigt ist.

Der Basisabschnitt 300 bildet eine Eingriffseinrichtung 34 des zweiten Verbindungsteils 3 mit einem Eingriffsabschnitt 341 aus, der zum Zusammenwirken mit den Eingriffsvorsprüngen 240, 241 der Eingriffseinrichtung 24 des ersten Verbindungsteils 2 dient und bei Herstellen der Verbindung unter die Eingriffsvorsprünge 240, 241 taucht, sodass eine formschlüssige oder kraftformschlüssige Verbindung zwischen den Verbindungsteilen 2, 3 hergestellt wird.

Der Eingriffsabschnitt 341 ist bei dem dargestellten Ausführungsbeispiel durch einen umlaufenden Rand des Basisabschnitts 300 geformt, der radial gegenüber dem Befestigungsabschnitt 301 vorsteht und somit einen Hinterschnitt ausbildet, über den der Eingriffsabschnitt 341 mit den ebenfalls Hinterschnitte ausbildenden Eingriffsvorsprüngen 240, 241 des ersten Verbindungsteils 2 in Eingriff gebracht werden kann, um die Verbindungsteile 2, 3 miteinander zu verbinden.

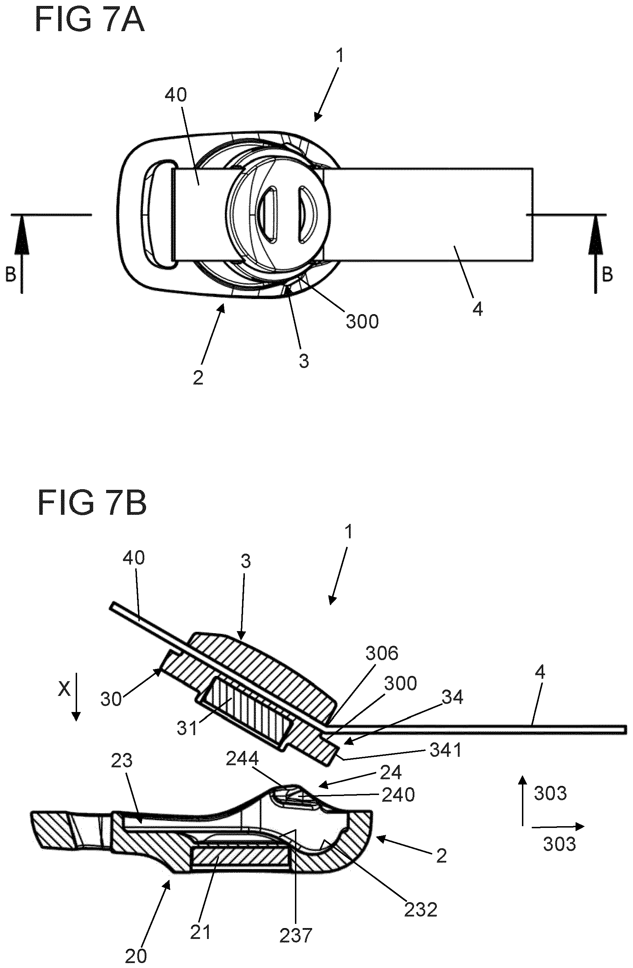

Anhand von Fig. 7A, 7B bis 11A-11D ist ein Verbindungsvorgang der Verbindungsvorrichtung 1 dargestellt.

Das Ansetzen der Verbindungsteile 2, 3 aneinander erfolgt generell entlang der Schließrichtung X, entlang derer die Magneteinrichtungen 21, 31 magnetisch anziehend zusammenwirken und die Verbindungsteile 2, 3 somit magnetisch anziehend zueinander hinziehen. Die Verbindungsteile 2, 3 können hierbei händisch aneinander angenähert werden, wobei ab einer gewissen Annäherung die magnetische Anziehungskraft die Verbindungsteile 2, 3 selbsttätig in Eingriff zieht und somit ein Herstellen der Verbindung der Verbindungsvorrichtung 1 bewirkt. Ein unpräzises Ansetzen der Verbindungsteile 2, 3 aneinander ist somit ausreichend, wobei das Herstellen der Verbindung dann weitestgehend selbsttätig erfolgt.

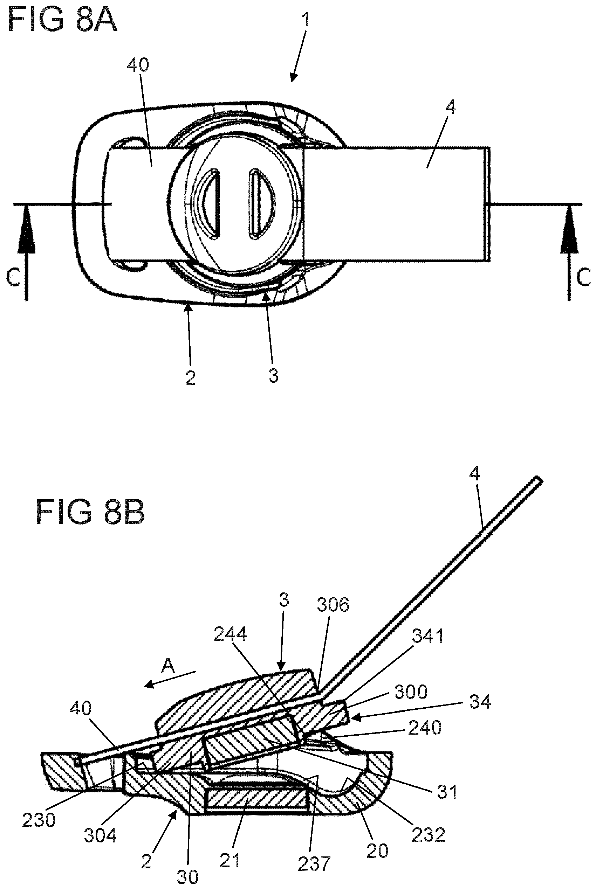

Werden die Verbindungsteile 2, 3 einander angenähert, wie dies aus Fig. 7A und 7B ersichtlich ist, so gelangt der Basisabschnitt 300 des Grundkörpers 30 des zweiten Verbindungsteils 3 entlang der Schließrichtung X von oben in Anlage mit den Eingriffsvorsprüngen 240, 241, wie dies aus Fig. 8A, 8B ersichtlich ist. Aufgrund der an den Eingriffsvorsprüngen 240, 241 geformten, geneigten Gleitschrägen 244, 245 gleitet der Basisabschnitt 300 hierbei entlang einer Abgleitrichtung A an den Eingriffsvorsprüngen 240, 241 ab, wobei der Basisabschnitt 300 mit einer in Fig. 8B ersichtlich hinteren Kante 304 mit der Bodenfläche 230 in der Aufnahmeöffnung 23 des ersten Verbindungsteils 2 in Anlage gelangen kann und dadurch in geführter Weise entlang der Bodenfläche 230 gleitet, ohne dass das Blockierelement sich verfrüht verhakt.

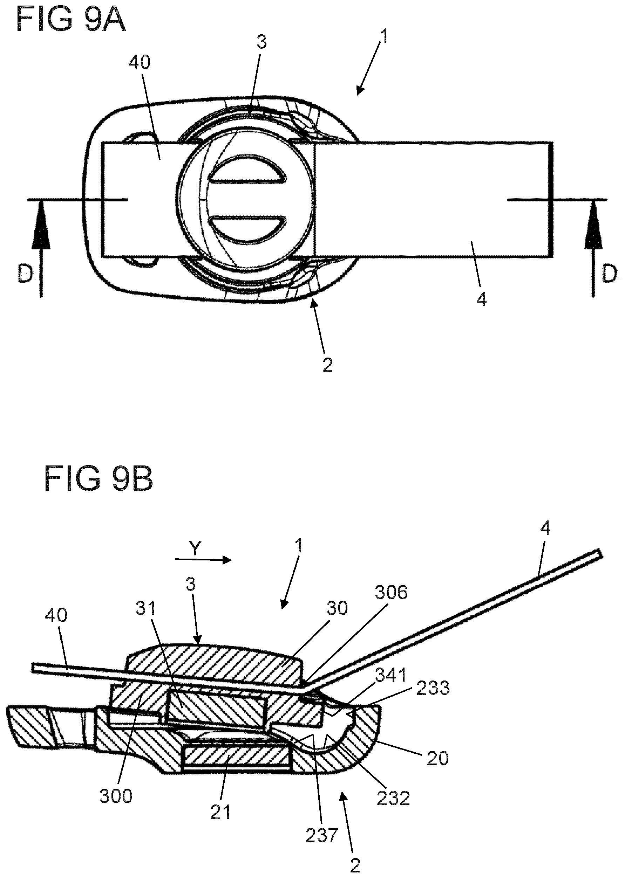

Ist der Basisabschnitt 300 an den Eingriffsvorsprüngen 240, 241 abgeglitten und hat der Basisabschnitt 300 somit die Eingriffsvorsprünge 240, 241 in die Schließrichtung X passiert, so gleitet der an dem umlaufenden Rand des Basisabschnitts 300 geformte Eingriffsabschnitt 341 nunmehr unterstützt durch die magnetische Anziehung der Magneteinrichtungen 21, 31 in eine Eingriffsrichtung Y in Eingriff mit den Eingriffsvorsprüngen 240, 241, wie dies aus Fig. 9A, 9B und 10A, 10B ersichtlich ist. Diese Bewegung entlang (näherungsweise) der Eingriffsrichtung Y erfolgt in magnetisch unterstützter Weise, wobei zusätzlich eine (über den Gurt 4 eingeleitete) Lastkraft das Ineingriffbringen unterstützen kann.

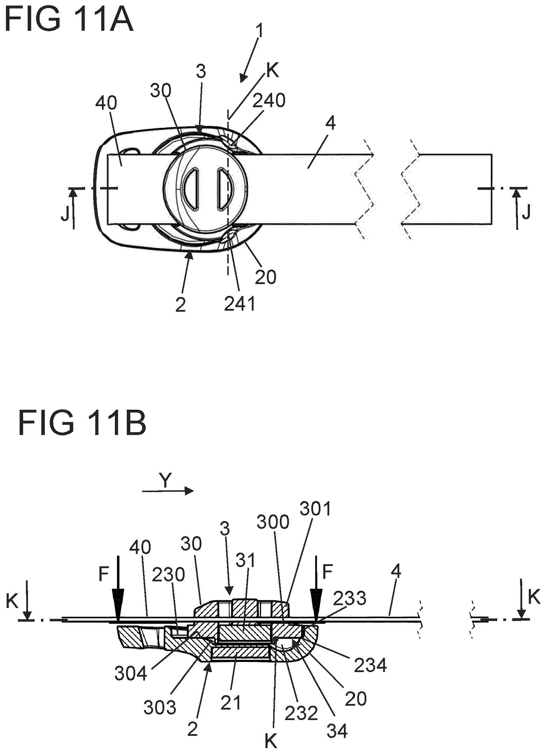

Wenn der Eingriffsabschnitt 341 sich in die Eingriffsrichtung Y in Eingriff mit den Eingriffsvorsprüngen 240, 241 bewegt, gleitet das Blockierelement 303 in die Aussparung 231 in der Aufnahmeöffnung 23 des ersten Verbindungsteils 2 ein, wie dies im Übergang von Fig. 10A, 10B hin zu Fig. 11A-11D ersichtlich ist.

In der in Fig. 11A-11E ersichtlichen, verbundenen Stellung liegt das Blockierelement 303 in der Aussparung 231 ein, und der Basisabschnitt 300 liegt mit der daran geformten Basisfläche 302 flächig an der Bodenfläche 230 innerhalb der Aufnahmeöffnung 23 des ersten Verbindungsteils 2 an, wie dies insbesondere aus der Schnittansicht gemäß Fig. 11B ersichtlich ist.

In der verbundenen Stellung ist der Basisabschnitt 300 mit einem (vorderen) Kantenabschnitt 305 dem Stützabschnitt 233 zugewandt und liegt abstützend an dem Stützabschnitt 233 an. Wird über den Gurt 4 eine Kraft in das zweite Verbindungsteil 3 eingeleitet, so wird diese Kraft durch die abstützende Anlage des Basisabschnitts 300 an dem Stützabschnitt 233 aufgenommen und abgeleitet.

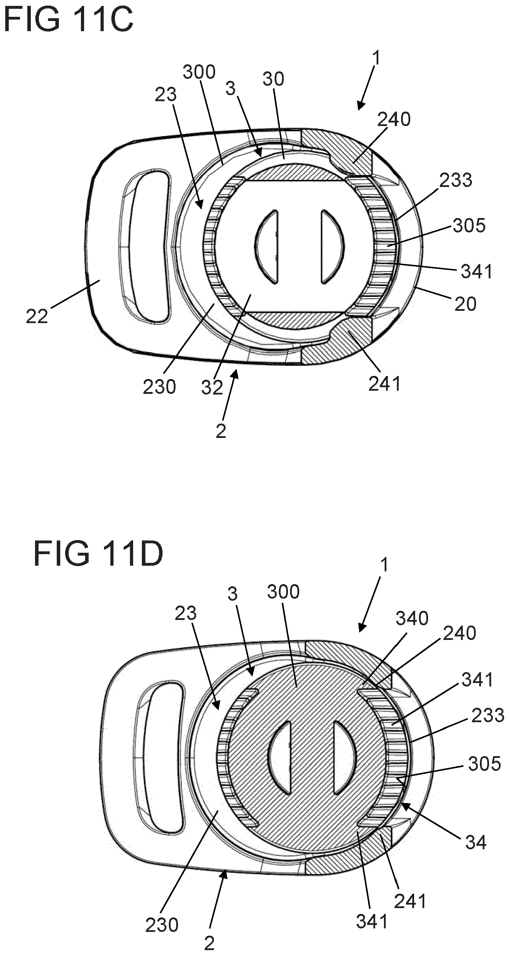

Wie dies aus Fig. 11C und 11D ersichtlich ist, ist der Stützabschnitt 233 hierbei bogenförmig um die Schließrichtung X gekrümmt, entsprechend der Krümmung des kreiszylindrischen Basisabschnitts 300, sodass eine Anlage entlang einer bogenförmigen Stützlinie oder -fläche zwischen dem Kantenabschnitt 305 an dem Basisabschnitt 300 und dem Stützabschnitt 233 besteht.

Der Stützabschnitt 233 ist dabei mit einem mittigen Abschnitt, betrachtet entlang der Querrichtung Q, zwischen den Eingriffsvorsprüngen 240, 241 angeordnet und an dem mittigen Abschnitt entlang der Eingriffsrichtung Y zu den Eingriffsvorsprüngen 240, 241 beabstandet. Der Stützabschnitt 233 erstreckt sich hierbei in der Querschnittsebene gemäß Fig. 11D bogenförmig bis unter die Eingriffsvorsprünge 240, 241 und darüber hinaus, sodass eine flächige Abstützung für den Basisabschnitt 300 mittig zwischen den Eingriffsvorsprüngen 240, 241 und auch unmittelbar im Bereich der Eingriffsvorsprünge 240, 241 geschaffen wird.

In der verbundenen Stellung ist der Gurt 4 an dem Verbindungsteil 3 in etwa auf der Höhe der Eingriffsvorsprünge 240, 241 an dem Verbindungsteil 2 oder unterhalb der Eingriffsvorsprünge 240, 241 angeordnet. Dies bewirkt, dass über den Gurt 4 eingeleitete Gurtkräfte das Verbindungsteil 3 in der Aufnahmeöffnung 23 nicht verkippen können bzw. nur ein geringes Kippmoment erzeugen können, wobei die Eingriffsvorsprünge 240, 241 die Stellung des Verbindungsteils 3 an dem Verbindungsteil 2 insbesondere entlang der Höhenrichtung H sichern.

In der verbundenen Stellung und bei Lastwirkungen zwischen den Verbindungsteilen 2, 3 liegt der Gurt 4 zwischen den erhabenen Abschnitten 242, 243 ein und ist somit zwischen den Eingriffsvorsprüngen 240, 241 angeordnet, sodass die Eingriffsvorsprünge 240, 241 bei einer Krafteinleitung über den Gurt 4 eine zum Gurt 4 symmetrische Abstützung schaffen.

In der verbundenen Stellung wirken die Magneteinrichtungen 21, 31 magnetisch anziehend zusammen und halten die Verbindungsteile 2, 3 somit in der verbundenen Stellung.

Aufgrund des Eingriffs des Blockierelements 303 in die Aussparung 231 ist zudem ein tangentiales Verschieben der Verbindungsteile 2, 3 entgegen der Eingriffsrichtung Y zueinander blockiert. Das Blockierelement 303 liegt in der verbundenen Stellung so in der Aussparung 231 ein, dass das Blockierelement 303 zwischen den den Blockierabschnitt verwirklichenden Begrenzungswandungen 236 aufgenommen und mit den bogenförmigen Begrenzungswandungen 236 in blockierender Anlage ist, sodass das Blockierelement 303 entgegen der Eingriffsrichtung Y nicht zu den Begrenzungswandungen 236 bewegt werden kann.

Aufgrund der rotationssymmetrischen Form des Blockierelements 303 und der kreiszylindrischen Form des Basisabschnitts 300 kann das Verbindungsteil 3 in der verbundenen Stellung entlang einer Umfangsrichtung U (siehe Fig. 1) um eine Rotationsachse R innerhalb der Aufnahmeöffnung 23 des Verbindungsteils 2 um einen beliebigen Winkel verdreht werden, bei Beibehaltung des verbindenden Eingriffs zwischen den Verbindungsteilen 2, 3 und auch der Blockierung des Blockierelements 303 in der Aussparung 231.

Diese Verdrehbarkeit ermöglicht zudem ein Ansetzen der Verbindungsteile 2, 3 in beliebiger Drehstellung aneinander, wobei bei Belastung über den Gurt 4 sich die Verbindungsteile 2, 3 so zueinander ausrichten, dass der Gurt 4 zwischen den Eingriffsvorsprüngen 240, 241 zu liegen kommt und somit das Verbindungsteil 3 symmetrisch an dem Verbindungsteil 2 abgestützt ist. Aufgrund der Verdrehbarkeit können die Verbindungsteile 2, 3 lagetolerant aneinander angesetzt werden, was das Herstellen der Verbindung einfach und komfortabel macht.

Wie dies aus Fig. 10A-10C ersichtlich ist, taucht der Basisabschnitt 300 mit einem vorderen Kantenabschnitt 305 beim Eingleiten unter die Eingriffsvorsprünge 240, 241 in die Eintauchöffnung 232 ein, die sowohl zur Bodenfläche 230 als auch zur Aussparung 231 vertieft ausgebildet ist. Durch das Eintauchen des Kantenabschnitts 305 in die Eintauchöffnung 232 kann das Blockierelement 303 in die Aussparung 231 eingleiten und der Eingriff des am Basisabschnitt 300 geformten Eingriffsabschnitts 341 mit den Eingriffsvorsprüngen 240, 241 hergestellt werden. Außerdem kann so der Winkelbereich einer an dem Betätigungsabschnitt 40 (Lasche) anliegenden Öffnungskraft vergrößert werden und ein Verklemmen des Kantenabschnitts 305 beim Öffnen verhindert werden.

In der verbundenen Stellung liegt der vordere Kantenabschnitt 305 des Basisabschnitts 300 dann auf einem Formschlussabschnitt in Form einer zwischen der Eintauchöffnung 232 und dem Stützabschnitt 233 geformten, auf der Höhe der Bodenfläche 230 gelegenen Stufe 234 auf, wie dies insbesondere aus Fig. 11B ersichtlich ist. Durch Anlage des Basisabschnitts 230 an der Stufen 234 wird das Verbindungsteil 3 zusätzlich entgegen einem Verkippen zu dem Verbindungsteil 2 abgestützt.

Der Formschlussabschnitt kann alternativ auch zum Beispiel durch eine Einkerbung oder dergleichen an dem Stützabschnitt 233 geformt sein, in die der Basisabschnitt 300 mit dem Kantenabschnitt 305 eingreift und dadurch an dem Stützabschnitt 233 gegen ein Verkippen abgestützt ist, das mit einer Bewegung des Kantenabschnitts 305 an dem Stützabschnitt 233 in die Schließrichtung X nach unten einhergeht.

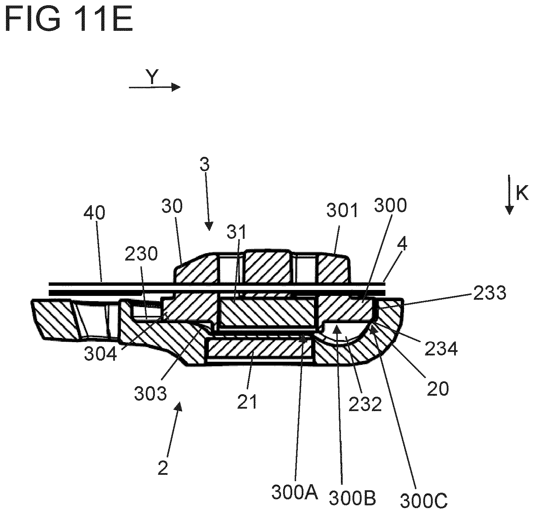

Durch den Formschlussabschnitt in Form der Stufe 234 wird in der verbundenen Stellung gemäß Fig. 11A bis 11E insbesondere einem Verkippen bei einer Belastung an dem Gurt 4 entgegengewirkt. So liegt das zweite Verbindungsteil 3 mit seinem Grundkörper 30 in der verbundenen Stellung mit einem ersten Bereich 300A, gebildet durch den (mit Bezug auf die Eingriffsrichtung Y) hinteren Abschnitt und das Blockierelement 303, auf der Bodenfläche 230 des Grundkörpers 20 des ersten Verbindungsteils 2 auf und in der Aussparung 231 ein (siehe Fig. 11E). In einem zweiten, in die Eingriffsrichtung Y anschließenden Bereich 300B, gebildet durch den Abschnitt oberhalb der Eintauchöffnung 232, liegt der zweite Grundkörper 30 des zweiten Verbindungsteils 3 demgegenüber nicht an dem ersten Grundkörper 20 des ersten Verbindungsteils 2 an. Mit einem in die Eingriffsrichtung Y an den zweiten Bereich 300B anschließenden, dritten Bereich 300C, gebildet durch den vorderen Kantenabschnitt 305 des Basisabschnitts 300, liegt der zweite Grundkörper 30 auf der Stufe 234 auf, sodass in der verbundenen Stellung eine Abstützung nach Art einer Zwei-Punkt-Auflage geschaffen ist, mit einem dazwischen geschaffenen Freiraum im Bereich der Eintauchöffnung 232.

In belasteter Stellung wird der Basisabschnitt 300 mit dem vorderen Kantenabschnitt 305 gegen den Stützabschnitt 233 belastet und somit selbstverstärkend in Auflage mit der Stufe 234 gehalten.

Sollen die Verbindungsteile 2, 3 voneinander getrennt werden, läuft der Bewegungsablauf gemäß Fig. 7A, 7B bis 11A-11D im Wesentlichen umgekehrt ab. Insbesondere kann ein Nutzer zum Trennen der Verbindungsteile 2, 3 an einem Betätigungsabschnitt in Form einer Lasche 40 (gebildet durch einen überstehenden Abschnitt des Gurts 4) auf einer hinteren, den Eingriffsvorsprüngen 240, 241 abgewandten Seite des Verbindungsteils 3 angreifen, dadurch das Verbindungsteil 3 an seinem hinteren Ende von der Bodenfläche 230 abheben und somit das Verbindungsteil 3 aus der verbundenen Stellung gemäß Fig. 11A-11D derart zu dem Verbindungsteil 2 verkippen, dass der Basisabschnitt 300 mit dem vorderen Kantenabschnitt 305 von der Stufe 234 abgleitet und das Blockierelement 303 aus der Aussparung 231 gehoben wird, wie dies aus Fig. 10A und 10B ersichtlich ist. Auf diese Weise ist die Blockierung entgegen der Eingriffsrichtung Y zwischen den Verbindungsteilen 2, 3 aufgehoben, sodass das Verbindungsteil 3 entgegen der Eingriffsrichtung Y außer Eingriff von dem Verbindungsteil 2 gezogen werden kann und die Verbindungsteile 2, 3 somit voneinander gelöst werden können.

Das Verkippen erfolgt hierbei in einer Kippebene, die zur Bodenfläche 230 senkrecht gerichtet ist, nämlich durch die Schließrichtung X und die Eingriffsrichtung Y aufgespannt ist. Das Verkippen erfolgt hierbei näherungsweise um eine Kippachse K (siehe Fig. 10A und 10B) derart, dass das Verbindungsteil 3 eine Schwenkbewegung in der zur Kippachse K senkrechten Kippebene ausführt und somit das Blockierelement 303 aus der Aussparung 231 herausgehoben wird, sodass die Verbindungsteile 2, 3 entgegen der Eingriffsrichtung Y zueinander bewegt und damit voneinander getrennt werden können.

Soll, insbesondere bei unbelasteter Verbindungsvorrichtung 1, die Verbindung der Verbindungsteile 2, 3 gelöst werden, so werden die Verbindungsteile 2, 3 zueinander verkippt und insbesondere auch entgegen der Eingriffsrichtung Y zueinander bewegt, sodass der (den dritten Bereich 300C ausbildende) vordere Kantenabschnitt 305 des Basisabschnitts 300 von der Stufe 234 abgleitet und in den Bereich der Eintauchöffnung 232 eintaucht, wie dies aus Fig. 10B ersichtlich ist. Der durch die Stufe 234 geschaffene Formschlussabschnitt wirkt einem Verkippen somit nicht (mehr) entgegen, sodass die Verbindungsteile 2, 3 komfortabel und einfach bei Verkippen über den Betätigungsabschnitt 40 voneinander getrennt werden können.

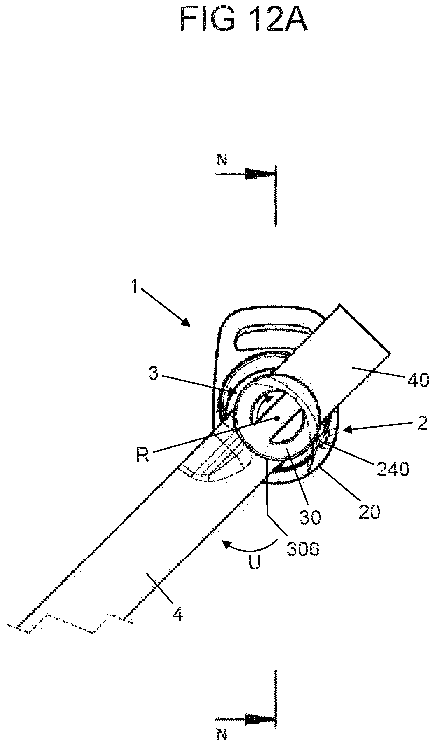

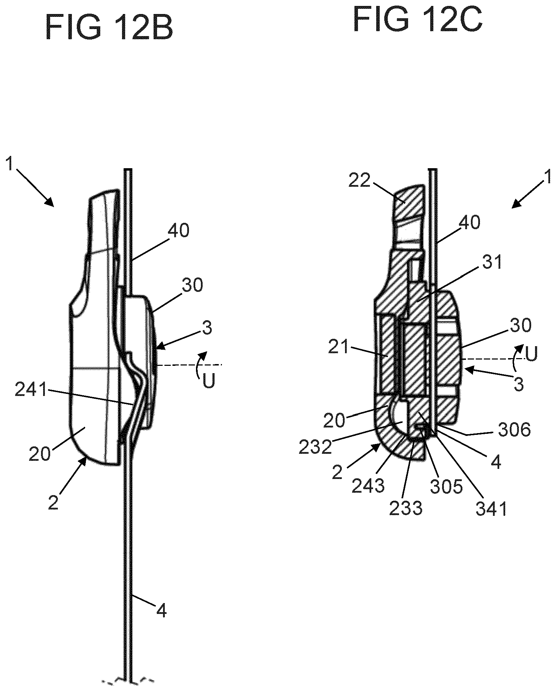

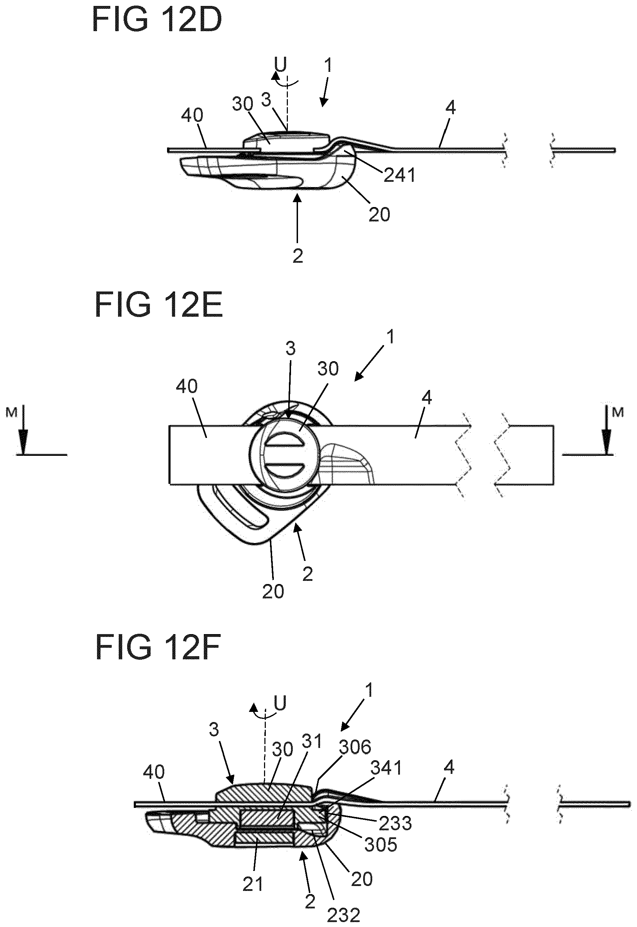

Fig. 12A bis 12F zeigen die Verbindungsvorrichtung 1 in einer verdrehten Stellung des zweiten Verbindungsteils 3 relativ zum ersten Verbindungsteil 2. Das zweite Verbindungsteil 3 kann hierbei in einer (beliebigen) verdrehten Stellung an das erste Verbindungsteil 2 angesetzt werden, und in beliebiger Drehstellung kann der Eingriffsabschnitt 341 des zweiten Verbindungsteils 3 mit den Eingriffsvorsprüngen 240, 241 des ersten Verbindungsteils 2 in Eingriff gebracht werden. In der verbundenen Stellung ist das zweite Verbindungsteil 3 relativ zum ersten Verbindungsteil 2 unter Beibehaltung des Eingriffs des Eingriffsabschnitts 341 mit den Eingriffsvorsprüngen 240, 241 und unter Eingriff des Blockierelements 303 in die Aussparung 231 entlang einer Umfangsrichtung U um die Rotationsachse R drehbar.

Unter Last, wenn in der verbundenen Stellung der Verbindungsvorrichtung 1 Gurtkräfte zwischen den Gurten 4, 5 wirken, liegt der Gurt 4 zwischen den Eingriffsvorsprüngen 240, 241 ein, wie dies aus Fig. 1 ersichtlich ist. Die Eingriffsvorsprünge 240, 241 sind in diesem Fall seitlich des Gurts 4 angeordnet, sodass der Gurt 4 zwischen den Eingriffsvorsprüngen 240, 241 (betrachtet entlang der von Eingriffsvorsprung 240 zu Eingriffsvorsprung 241 weisenden Querrichtung Q) hindurch erstreckt ist.

Ist das zweite Verbindungsteil 3 demgegenüber, wie aus Fig. 12A bis 12F ersichtlich, entlang der Umfangsrichtung U um die Rotationsachse R zu dem ersten Verbindungsteil 2 verdreht, so kann der Gurt 4 sich über einen der Eingriffsvorsprünge 240, 241 hinweg erstrecken, unter flexibler, biegeschlaffer Verformung des Gurts 4, wie dies insbesondere aus Fig. 12B und 12D ersichtlich ist. Beim Verdrehen gleitet der Gurt 4 (abhängig von der Drehrichtung) auf einen der Eingriffsvorsprünge 240, 241 auf und wird dadurch verformt, sodass der Gurt 4 über den jeweiligen Eingriffsvorsprung 240, 241 hinweg bewegt werden kann.

Wie dies aus Fig. 1 zum Beispiel in Zusammenschau mit Fig. 6C ersichtlich ist, tritt der Gurt 4 aus dem Befestigungsabschnitt 301 oberhalb des Basisabschnitts 300 an einer Austrittslinie 306 aus, die entsprechend der zylindrischen Form des Befestigungsabschnitts 301 gekrümmt ist. Der Gurt 4 ist hierbei jenseits der Austrittslinie 306, also außerhalb des Befestigungsabschnitts 301, nicht mit dem Basisabschnitt 300 im Bereich des überstehenden, den Eingriffsabschnitt 341 ausbildenden Randabschnitts verbunden, sondern kann frei gegenüber dem Basisabschnitt 300 bewegt und insbesondere von dem Basisabschnitt 300 abgehoben werden, was das Verformen des Gurts 4 zum Aufgleiten auf den Eingriffsvorsprung 240, 241 beim Verdrehen des Verbindungsteils 3 relativ zum Verbindungsteil 2 in leichtgängiger Weise ermöglicht.

Die Austrittslinie 306 ist gegenüber dem stirnseitigen Kantenabschnitt 305 des Basisabschnitts 300 radial nach innen versetzt und somit radial zum Kantenabschnitt 305 beabstandet. Der Gurt 4 tritt somit entlang einer gegenüber dem Kantenabschnitt 305 zurückversetzten Linie aus dem Befestigungsabschnitt 301 aus.

Aus der Stellung gemäß Fig. 12A bis 12F kann das Verbindungsteil 3 auch noch weiter verdreht werden. Prinzipiell kann das Verbindungsteil 3 um einen beliebigen Winkel zu dem Verbindungsteil 2 verdreht werden.

Unter Last zwischen den Gurten 4, 5 bewegen sich die Verbindungsteile 2, 3 selbsttätig zurück in die Stellung gemäß Fig. 1.

Auch das Ansetzen oder Lösen des Verbindungsteils 3 an das bzw. von dem Verbindungsteil 2 ist grundsätzlich in beliebiger Drehstellung möglich.

Bei dem Ausführungsbeispiel gemäß Fig. 1 bis 12A-12F verwirklicht die Verbindungsvorrichtung 1 einen Gurtbandverschluss, über den Gurte miteinander verbunden werden können. In verbundener Stellung ist eine durch die Gurte bestimmte Lastrichtung im Wesentlichen entlang der Eingriffsrichtung Y gerichtet.

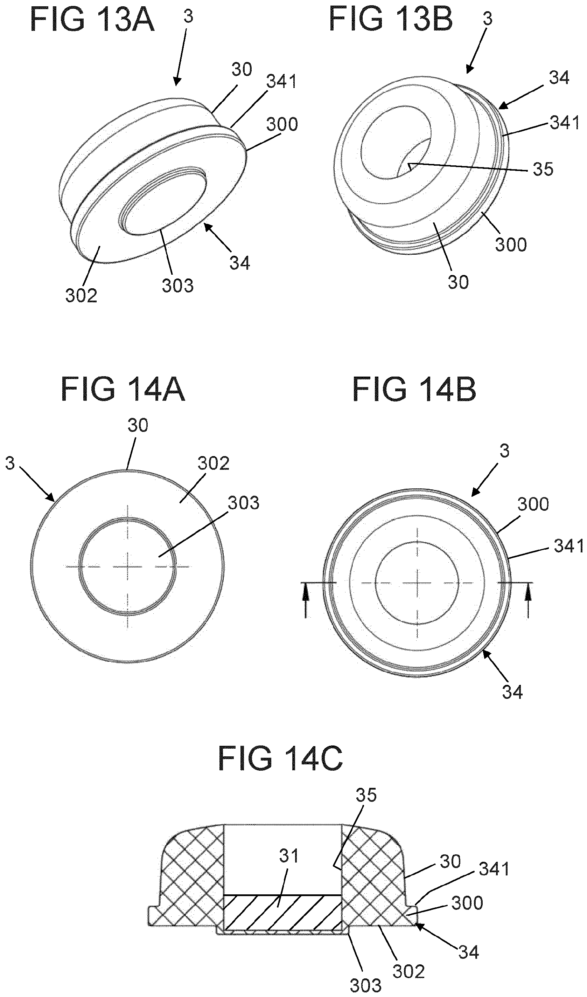

Bei einem anderen, in Fig. 13A, 13B bis 20A-20D dargestellten Ausführungsbeispiel ist die Verbindungsvorrichtung 1 als Objektbefestigungseinrichtung ausgestaltet und dient zum Befestigen eines Objekts an einer zugeordneten Baugruppe. Das Objekt kann hierbei beispielsweise an einem (zweiten) Verbindungsteil 3 angeordnet oder in das Verbindungsteil 3 integriert sein. Auf diese Weise kann zum Beispiel ein elektrisches oder elektronisches Gerät, zum Beispiel ein Kommunikationsgerät, ein Licht oder dergleichen, an einer zugeordneten Baugruppe, zum Beispiel einem Helm oder einem anderen Sportgerät, angeordnet werden.

Bei dem dargestellten Ausführungsbeispiel ist das (zweite) Verbindungsteil 3 rotationssymmetrisch geformt und bildet einen an einem Grundkörper 30 angeordneten Basisabschnitt 300 aus, der kreiszylindrisch geformt ist, wie dies aus Fig. 13A, 13B und14A-14C ersichtlich ist. An einer Unterseite des Basisabschnitts 300 ist eine Basisfläche 302 geformt, von der ein im Querschnitt kreisförmiges und zu der Basisfläche 302 konzentrisches Blockierelement 303 vorsteht.

An einem gegenüber dem Basisabschnitt 300 erhabenen Gehäuseabschnitt ist eine Befestigungsöffnung 35 zur Aufnahme einer Magneteinrichtung 31 geformt.

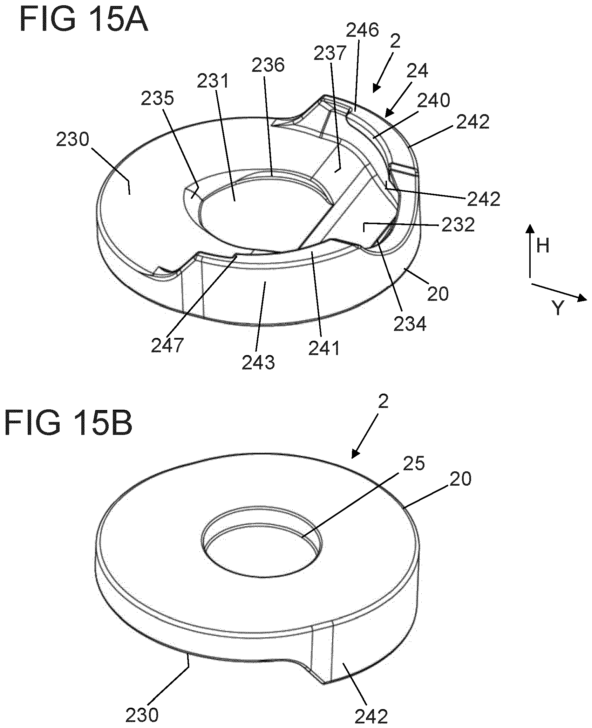

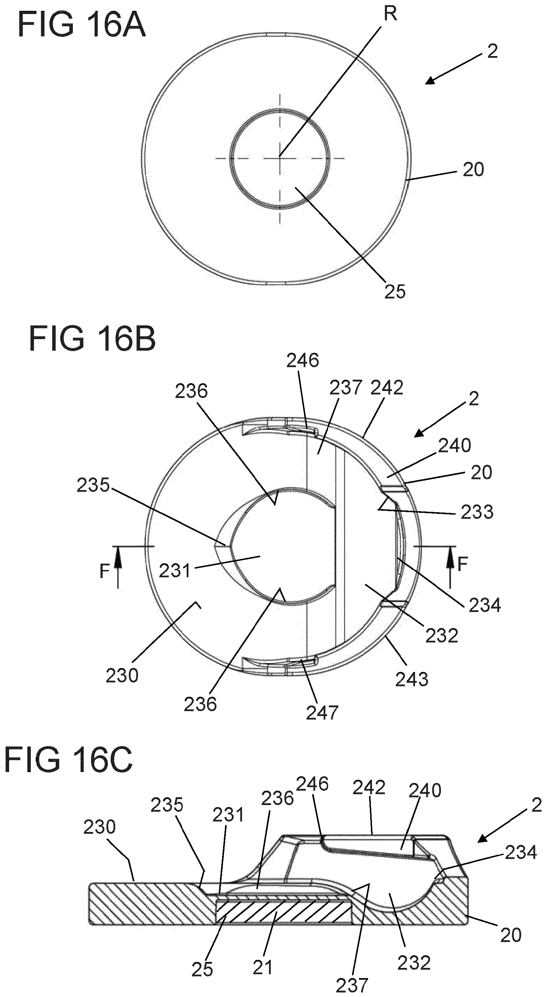

Das (zweite) Verbindungsteil 3 gemäß Fig. 13A, 13B und 14A-14C kann an ein in Fig. 15A, 15B und 16A-16C dargestelltes (erstes) Verbindungsteil 2 angesetzt werden, das einen Grundkörper 20 aufweist, an dem eine Bodenfläche 230 geformt ist, die sich flächig und eben an einer (bei Ansetzen der Verbindungsteile 2, 3 aneinander) dem Verbindungsteil 3 zugewandten Seite des Grundkörpers 20 erstreckt und mit der die Basisfläche 302 am Basisabschnitt 300 des Verbindungsteils 3 flächig in Anlage gelangt, wenn die Verbindungsteile 2, 3 miteinander verbunden werden.

Wie dies anhand des vorangehend beschriebenen Ausführungsbeispiels erläutert worden ist, ist in der Bodenfläche 230 eine Aussparung 231 geformt, die zum Aufnehmen des Blockierelements 303 des Verbindungsteils 3 dient. An die Bodenfläche 230 schließt zudem eine Eintauchöffnung 232 an, die zwischen der Bodenfläche 230 und einem in einem vorderen Bereich des Grundkörpers 20 geformten Stützabschnitt 233 gelegen ist.

An erhabenen Abschnitten 242, 243 sind starr mit dem Grundkörper 20 geformte Eingriffsvorsprünge 240, 241 angeordnet, die betrachtet entlang einer Höhenrichtung H oberhalb der Bodenfläche 230 angeordnet sind. In der verbundenen Stellung der Verbindungsteile 2, 3 ist ein Eingriffsabschnitt 341, der durch einen umlaufenden, radial vorstehenden Rand des Basisabschnitts 300 des Verbindungsteils 3 geformt ist, zwischen der Bodenfläche 230 und den Eingriffsvorsprüngen 240, 241 aufgenommen.

Rückwärtig der Bodenfläche 230 bildet der Grundkörper 20 eine Befestigungsöffnung 25 aus, in der eine Magneteinrichtung 21 zum magnetischen Zusammenwirken mit der Magneteinrichtung 31 des Verbindungsteils 3 angeordnet ist.

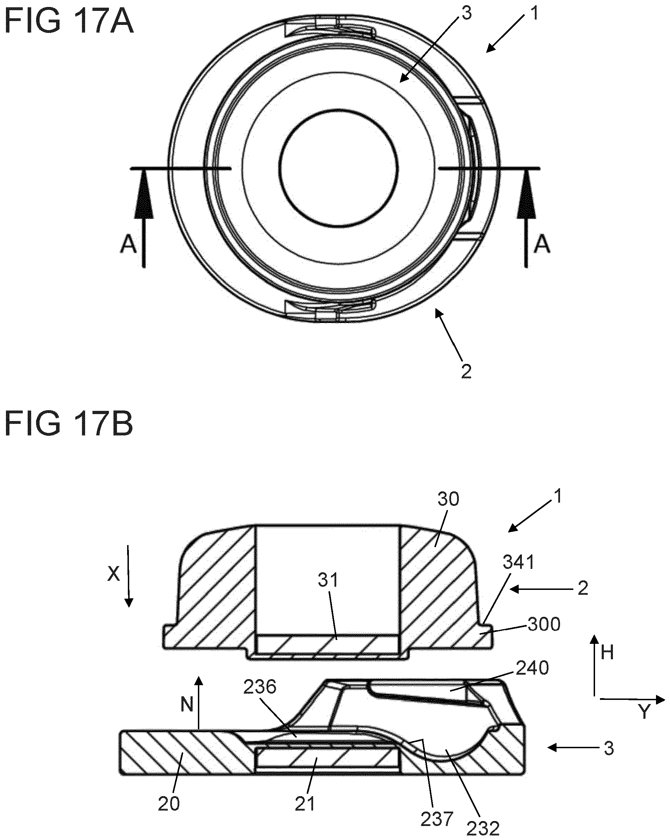

Der Verbindungsvorgang der Verbindungsteile 2, 3, dargestellt in Fig. 17A, 17B bis 20A-20D, läuft ab, wie dies vorangehend für das Ausführungsbeispiel gemäß Fig. 1 bis 12A-12F geschildert worden ist.

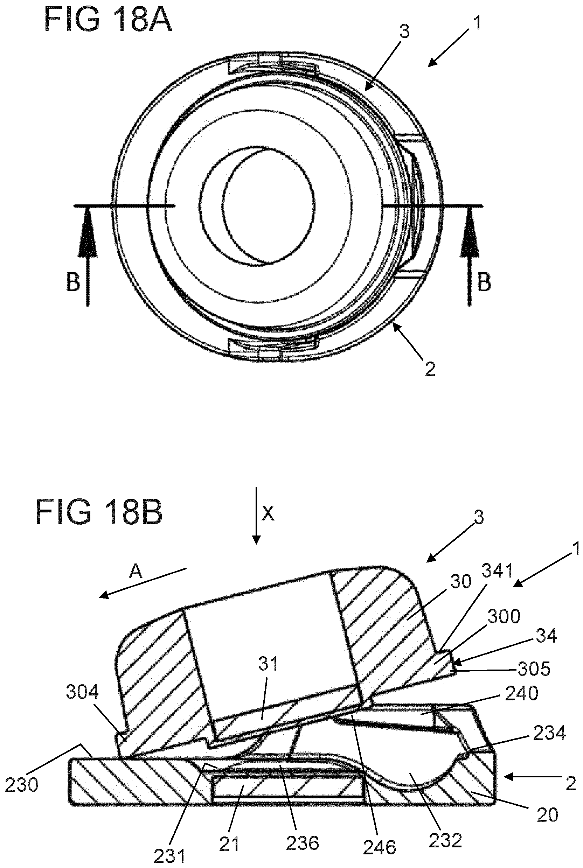

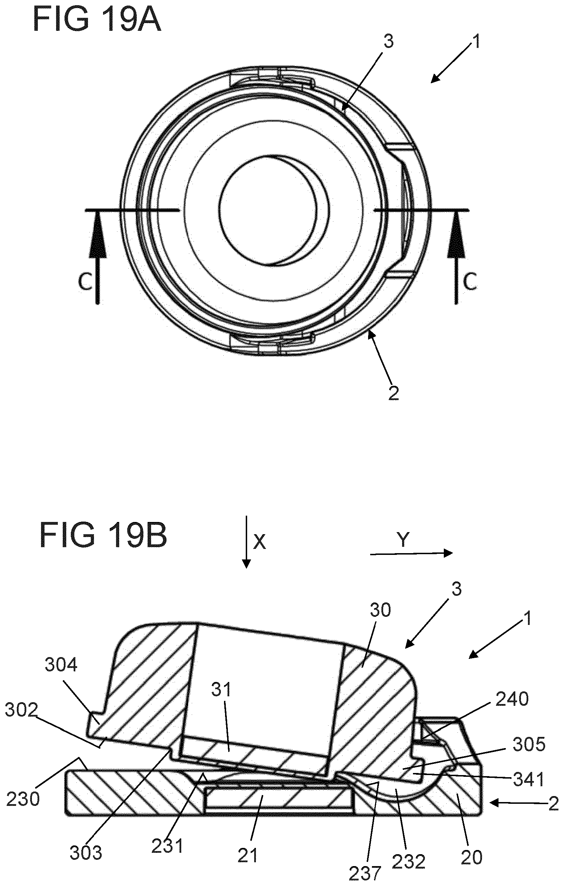

So werden die Verbindungsteile 2, 3 beispielsweise entlang einer Schließrichtung X einander angenähert, die entlang der Höhenrichtung H gerichtet ist, wie dies aus Fig. 17A und 17B ersichtlich ist. Die Magneteinrichtungen 21, 31 wirken hierbei magnetisch anziehend zusammen und ziehen die Verbindungsteile 2, 3 entlang der Schließrichtung X zueinander hin, sodass das Verbindungsteil 3 auf die Eingriffsvorsprünge 240, 241 aufläuft und an hinteren Enden 246, 247 der Eingriffsvorsprünge 240, 241 abgleitet, wie dies aus Fig. 18A und 18B ersichtlich ist. Der Basisabschnitt 300 gelangt hierbei mit einem hinteren Kantenabschnitt 304 mit der Bodenfläche 230 in Anlage, sodass das Verbindungsteil 3 entlang einer Abgleitrichtung A zu dem Verbindungsteil 2 gleitet und der Basisabschnitt 300 somit an den Eingriffsvorsprüngen 240, 241 bewegt wird, bis der Basisabschnitt 300 die Eingriffsvorsprünge 240, 241 passieren kann und das Verbindungsteil 3 somit in die Stellung gemäß Fig. 19A, 19B zu dem Verbindungsteil 2 gelangt und der Blockierabschnitt oberhalb der Aussparung 231 gehalten wird, sodass sich die Verbindungsteile 2, 3 nicht vorzeitig verhaken.

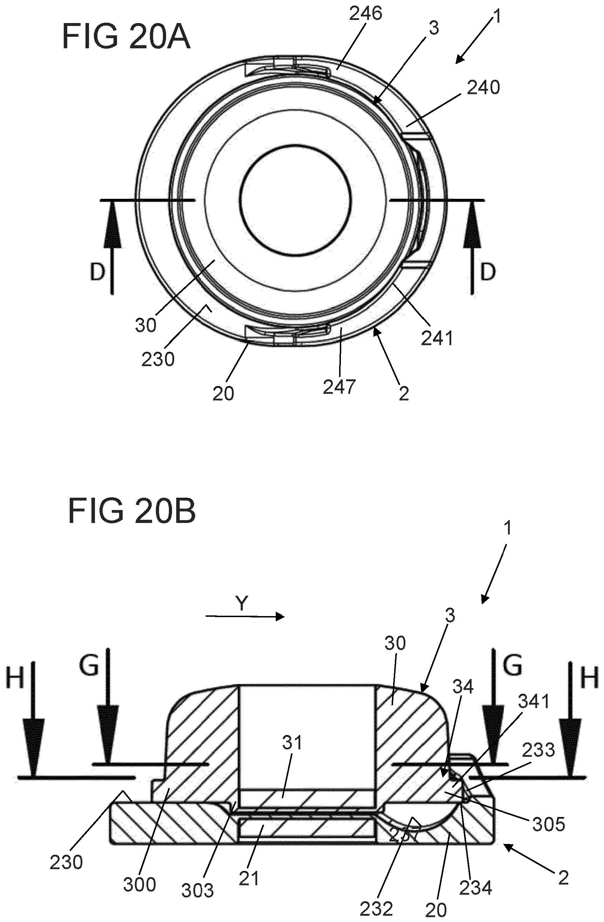

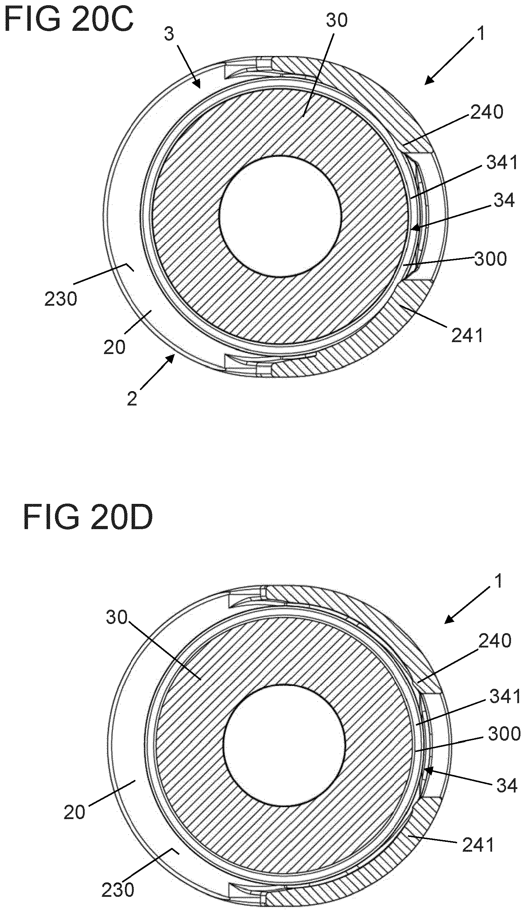

Ist der Basisabschnitt 300 an den Eingriffsvorsprüngen 240, 241 entlang der Schließrichtung X vorbei bewegt worden, so gleitet der an dem Basisabschnitt 300 geformte Eingriffsabschnitt 341 in eine Eingriffsrichtung Y in Eingriff mit den (starren) Eingriffsvorsprüngen 240, 241, wie dies im Übergang von Fig. 19A, 19B hin zu Fig. 20A, 20B ersichtlich ist. Dabei gleitet das Blockierelement 303 in die Aussparung 231 ein, magnetisch unterstützt durch die magnetisch anziehende Wirkung der Magneteinrichtungen 21, 31.

In der verbundenen Stellung gemäß Fig. 20A-20D liegt der Basisabschnitt 300 mit der Basisfläche 302 flächig an der Bodenfläche 230 des Verbindungsteils 2 an. Das Blockierelement 303 liegt in der Aussparung 231 ein. Ein vorderer Kantenabschnitt 305 des Basisabschnitts 300 ist mit dem Stützabschnitt 233 in Anlage, wobei der vordere Kantenabschnitt 305 zudem auf einer Stufe 234 zwischen der Eintauchöffnung 232 und dem Stützabschnitt 233 aufliegt, wie dies aus Fig. 19B ersichtlich ist. Dadurch, dass der am Basisabschnitt 300 geformte Eingriffsabschnitt 341 hierbei in Eingriff mit den Eingriffsvorsprüngen 240, 241 steht, ist das Verbindungsteil 3 formschlüssig oder kraftformschlüssig an dem Verbindungsteil 2 gehalten, wobei die Stellung der Verbindungsteile 2, 3 durch die Magneteinrichtungen 21, 31 gesichert ist und zudem ein Außer-Eingriff-bringen entgegen der Eingriffsrichtung Y durch das Blockierelement 303 blockiert ist.

Aufgrund der Rotationssymmetrie des Verbindungsteils 3 kann das Verbindungsteil 3 in der verbundenen Stellung an dem Verbindungsteile 2 verdreht werden.

Aufgrund der Rotationssymmetrie kann das Verbindungsteil 3 zudem in beliebiger Drehlage an dem Verbindungsteil 2 angeordnet werden, was ein einfaches, komfortables Verbinden der Verbindungsteile 2, 3 miteinander ermöglicht.

Zum Lösen der Verbindung 2, 3 kann das Verbindungsteil 3 in einer durch die Schließrichtung X und die Eingriffsrichtung Y aufgespannten Kippebene zu dem Verbindungsteil 2 verkippt werden, unter Eintauchen des durch den Rand des Basisabschnitts 300 gebildeten Eingriffsabschnitts 341 in die Eintauchöffnung 232, analog wie dies aus Fig. 19B ersichtlich ist. Die Blockierung des Blockierelements 303 in der Aussparung 231 wird somit aufgehoben, sodass die Verbindungsteile 2, 3 voneinander abgenommen werden können.

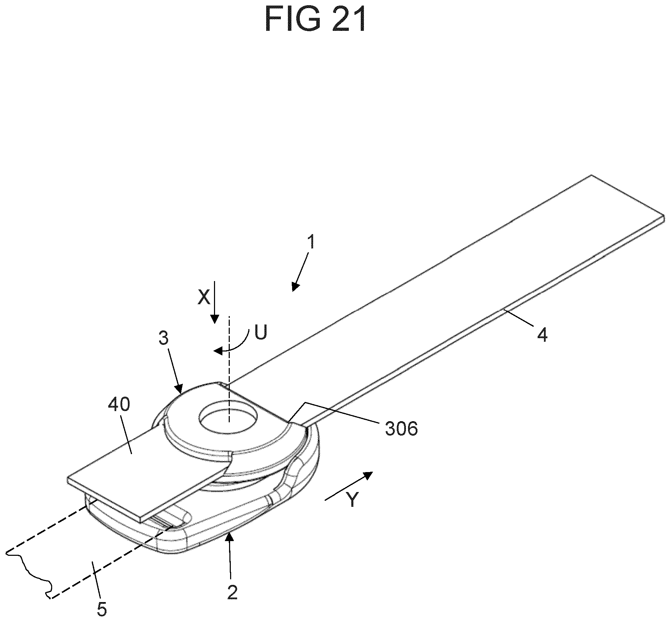

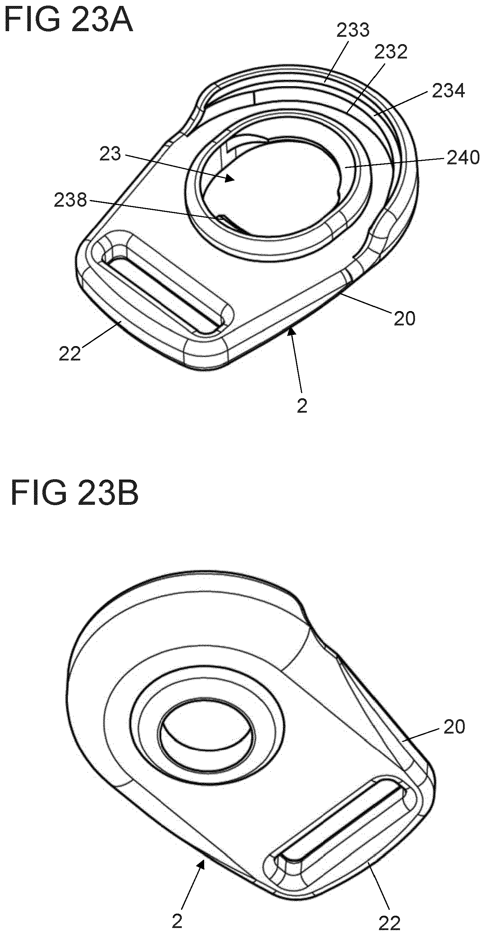

Bei einem weiteren, in Fig. 21 bis 30A-30D dargestellten Ausführungsbeispiel in Form eines Gurtbandverschlusses weist ein erstes Verbindungsteil 2 einen Grundkörper 20 auf, an dem eine Aufnahmeöffnung 23 geformt ist. An das erste Verbindungsteil 2 kann ein zweites Verbindungsteil 3 angesetzt werden, indem ein an einem Basisabschnitt 300 eines Grundkörpers 30 des zweiten Verbindungsteils 3 geformtes Zapfenelement 340 in die Aufnahmeöffnung 23 eingesetzt und über einen umlaufenden Eingriffsabschnitt 341 mit einem bogenförmigen Eingriffsvorsprung 240 an einem Wandungsabschnitt der Aufnahmeöffnung 23 des ersten Verbindungsteils 2 in Eingriff gebracht wird.

Bei dem dargestellten Ausführungsbeispiel ist ein Gurt 4 über einen an dem Basisabschnitt 300 geformten Befestigungsabschnitt 301 fest mit dem Grundkörper 30 des Verbindungsteils 3 verbunden. Der Basisabschnitt 300 weist eine kreiszylindrische, scheibenförmige Grundform auf und bildet an einer dem Verbindungsteil 2 zugewandten Seite eine Basisfläche 302 aus.

Von der Basisfläche 302 steht das Zapfenelement 340 vor, das eine Pilzform aufweist und den umlaufend um die Schließrichtung X erstreckten, eine Eingriffseinrichtung 34 verwirklichenden Eingriffsabschnitt 341 trägt. Bei dem dargestellten Ausführungsbeispiel ist der Eingriffsabschnitt 341 somit räumlich getrennt von dem Basisabschnitt 300, indem der Eingriffsabschnitt 341 entlang der Schließrichtung X zu dem Basisabschnitt 300 beabstandet ist.

An dem Eingriffsabschnitt 341 ist bei dem dargestellten Ausführungsbeispiel eine Schrägfläche 342 in Form einer konischen Fläche geformt, mit der der Eingriffsabschnitt 341 bei Ansetzen des Verbindungsteils 3 an das Verbindungsteil 2 auf den Eingriffsvorsprung 240 innerhalb der Aufnahmeöffnung 23 aufläuft, sodass das Verbindungsteil 3 entgegen der Eingriffsrichtung Y zu dem Verbinderteil 2 versetzt und der Eingriffsabschnitt 341 an dem Eingriffsvorsprung 240 vorbei bewegt wird, bis der Eingriffsabschnitt 341 in die Eingriffsrichtung Y mit dem Eingriffsabschnitt 240 in Eingriff gebracht werden kann.

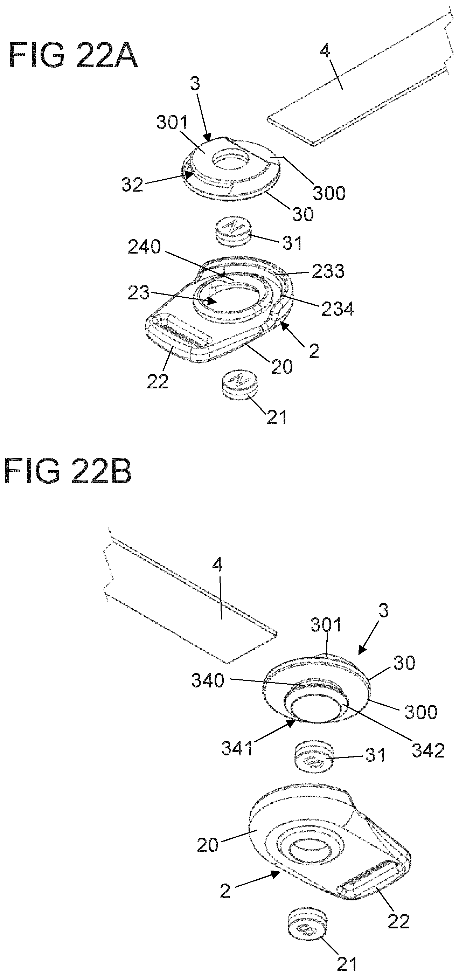

Die Verbindungsteile 2, 3 weisen jeweils eine Magneteinrichtung 21, 31 auf (siehe Fig. 22A, 22B), die sich entlang der Schließrichtung X magnetisch anziehend gegenüberstehen und somit das Ansetzen der Verbindungsteile 2, 3 in die Schließrichtung X magnetisch unterstützen.

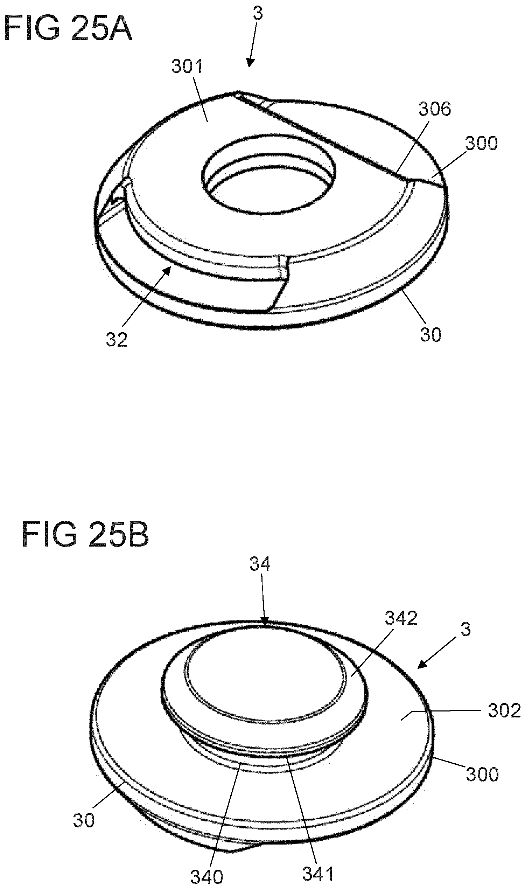

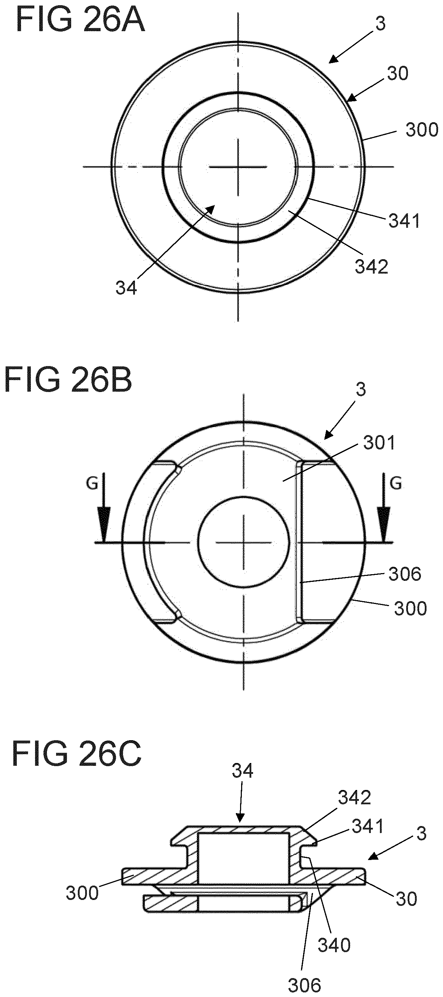

Bei dem dargestellten Ausführungsbeispiel überragt der scheibenförmige Basisabschnitt 300 den Eingriffsabschnitt 341 an dem Zapfenelement 340 radial, wie dies aus Fig. 25A, 25B und 26A-26B ersichtlich ist.

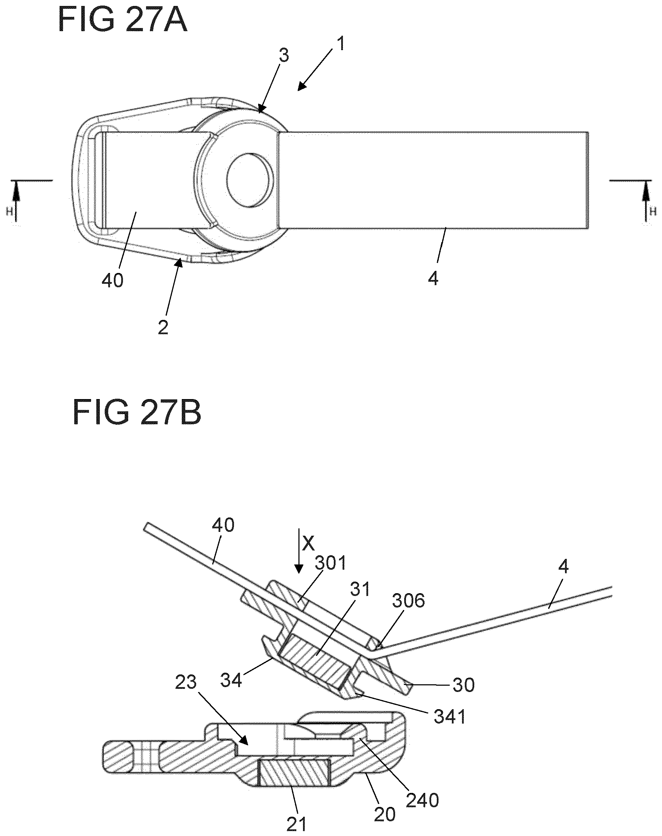

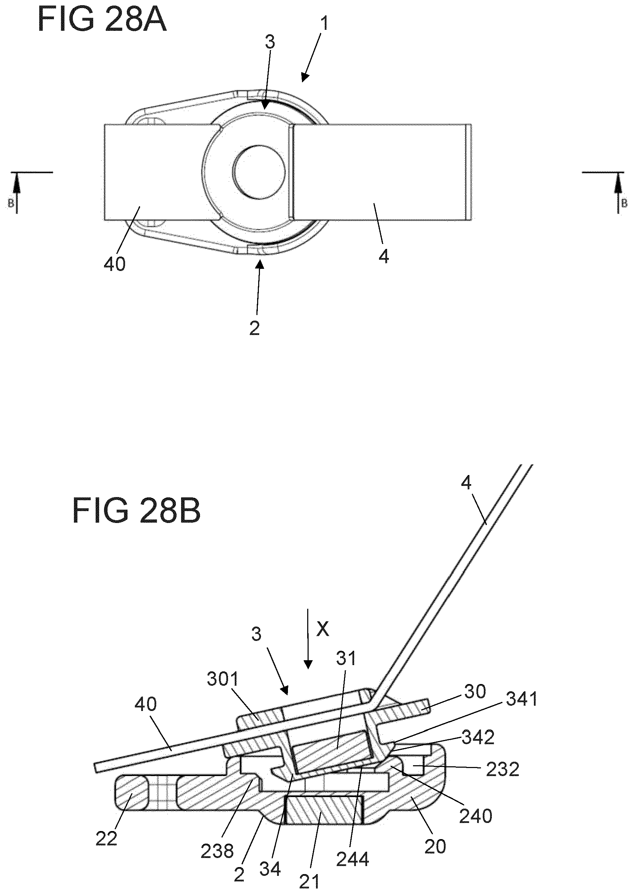

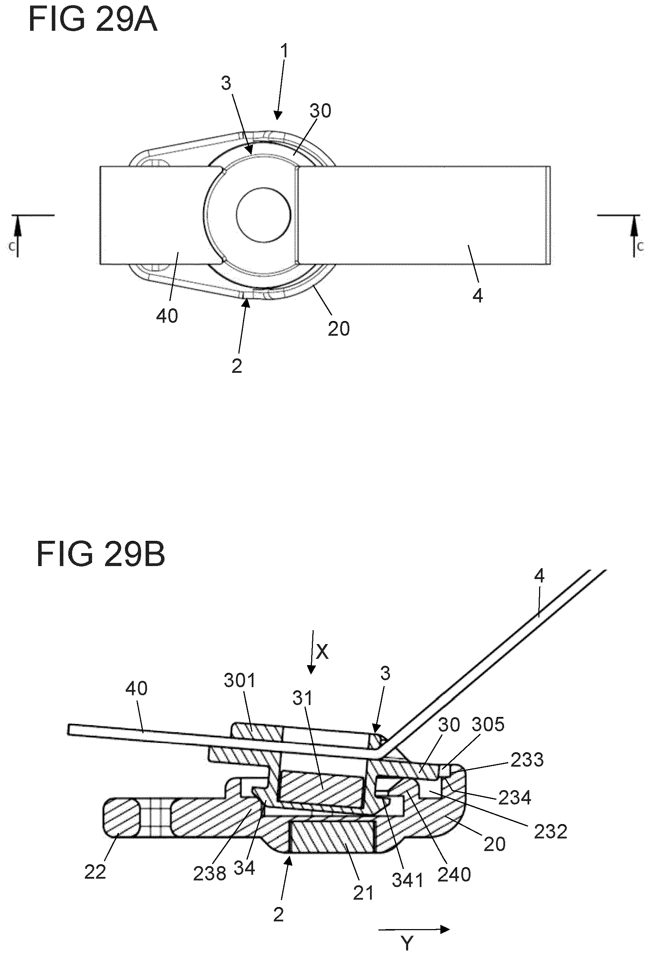

Beim Ansetzen der Verbindungsteile 2, 3 aneinander, dargestellt in der Abfolge gemäß Fig. 27A, 27B bis 30A-30D, wird das Verbindungsteil 3 in die Schließrichtung X dem Verbindungsteil 2 angenähert, wobei das Verbindungsteil 3 eine Taumelbewegung derart ausführen kann, dass zunächst der Eingriffsabschnitt 341 mit der daran geformten Schrägfläche 342 mit dem Eingriffsvorsprung 240 in der Aufnahmeöffnung 23 in Anlage kommt, wie dies aus Fig. 28B ersichtlich ist, und durch Abgleiten an dem Eingriffsvorsprung 240 vorbei bewegt wird, wie dies im Übergang von Fig. 28A, 28B hin zu Fig. 29A, 29B ersichtlich ist.

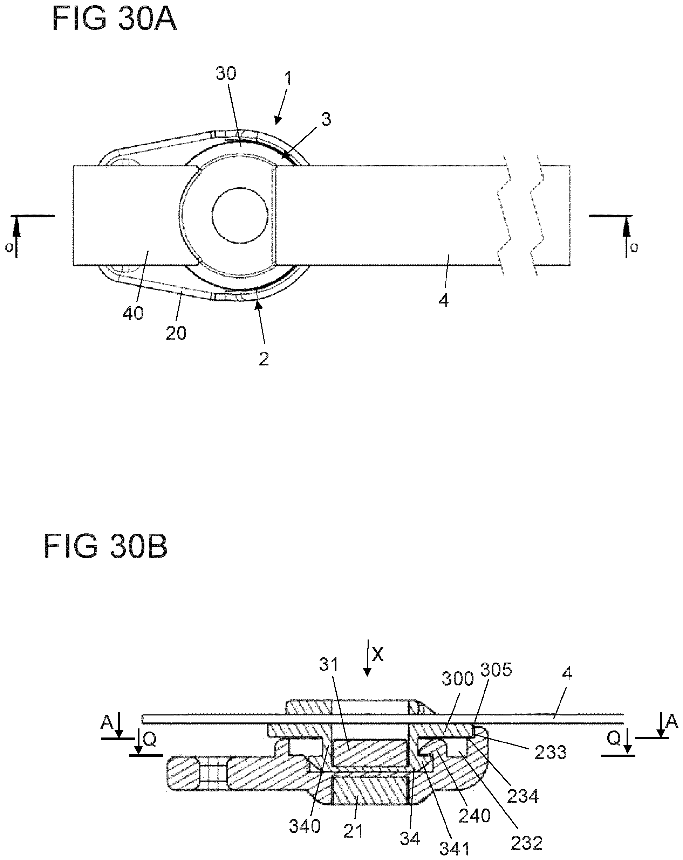

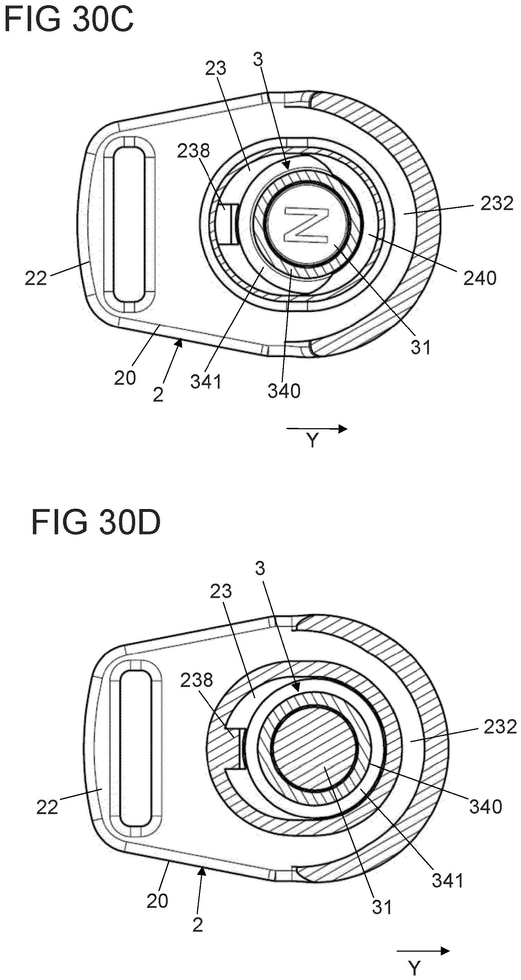

Ist der Eingriffsabschnitt 341 an dem Eingriffsvorsprung 240 vorbei bewegt worden, so gelangt der Eingriffsabschnitt 341 in die Eingriffsrichtung Y aufgrund magnetischer Anziehung zwischen den Magneteinrichtungen 21, 31 in Eingriff mit dem Eingriffsvorsprung 240, sodass die Verbindungsteile 2, 3 in die verbundene Stellung gemäß Fig. 30A-30D gelangen.

In der verbundenen Stellung ist der Eingriffsabschnitt 341 an dem Zapfenelement 340 in Eingriff mit dem bogenförmig gekrümmten Eingriffsvorsprung 240 an der Wandung der Aufnahmeöffnung 23. An einer dem Eingriffsvorsprung 240 abgewandten Seite ist der Eingriffsabschnitt 341 hierbei einem Blockierabschnitt 238 in Form eines in die Eingriffsrichtung Y in die Aufnahmeöffnung 23 vorspringenden Vorsprungelements zugewandt. Der Blockierabschnitt 238 verhindert auf diese Weise eine tangentiale Bewegung des Zapfenelements 340 in der Aufnahmeöffnung 23 entgegen der Eingriffsrichtung Y, sodass der Eingriff zwischen dem Eingriffsabschnitt 341 und dem Eingriffsvorsprung 240 blockiert ist.

In der verbundenen Stellung ist der Basisabschnitt mit einem umfänglichen, äußeren Kantenabschnitt 305 in Anlage mit einem Stützabschnitt 233, der dem Eingriffsvorsprung 240 in die Eingriffsrichtung Y vorgelagert ist, wie dies aus Fig. 30B ersichtlich ist. Über den Stützabschnitt 233 wird somit an dem Basisabschnitt 300 eine Abstützung in die Eingriffsrichtung Y geschaffen, sodass bei einer Belastung zwischen den Verbindungsteilen 2, 3 Kräfte entlang der der Eingriffsrichtung Y entsprechenden Lastrichtung an dem Stützabschnitt 233 aufgenommen und abgeleitet werden.

Wie dies zudem aus Fig. 30B ersichtlich ist, ist im Bereich des Stützabschnitts 233 ein Formschlussabschnitt 234 in Form einer Stufe geformt, auf der der Basisabschnitt 300 mit dem Kantenabschnitt 305 in die Schließrichtung X aufliegt. Über die Stufe wird einem Verkippen des Basisabschnitts 300 und somit des Verbindungsteils 3 gegenüber dem Verbindungsteil 2 entgegengewirkt, um ein ungewolltes Lösen der Verbindungsteile 2, 3 unter Last auszuschließen.

Wie dies aus Fig. 30B in Zusammenschau mit Fig. 29B ersichtlich ist, schließt an die Stufe 234 eine Eintauchöffnung 232 an, die dazu dient, einen Freiraum zur Verfügung zu stellen, in den der Basisabschnitt 300 bei einem Verkippen relativ zu dem Verbindungsteil 2, 3 eintauchen kann, wie dies aus Fig. 29B ersichtlich ist.

Sollen die Verbindungsteile 2, 3 voneinander getrennt werden, kann ein Nutzer an einem Betätigungsabschnitt in Form einer Lasche 40 rückseitig des Verbindungsteils 3 ziehen und somit das Zapfenelement 340 an einer dem Eingriffsvorsprung 240 abgewandten Seite aus der Aufnahmeöffnung 23 ausheben, wie dies aus Fig. 29B ersichtlich ist. Dabei taucht der Basisabschnitt 300 mit einem vorderen, dem Stützabschnitt 233 zugewandten Bereich in die Eintauchöffnung 232 ein, was das Verkippen des Verbindungsteils 3 gegenüber dem Verbindungsteil 2 zum Lösen der Verbindungsteile 2, 3 voneinander erleichtert.

Über die Auflage an der Stufe 234 wird in der verbundenen Stellung, analog wie bei dem Ausgangsbeispiel gemäß Fig. 1 bis 12A-12F, einem Verkippen bei Belastung entgegengewirkt. Über die Eintauchöffnung 232 wird hierbei, in einem entgegen der Eingriffsrichtung Y an die Stufe 234 anschließenden Bereich, ein Freiraum geschaffen, in den der Basisabschnitt 300 mit seinem umlaufenden Kantenabschnitt eintauchen kann, wenn die Verbindungsteile 2, 3 zum Trennen der Verbindung zueinander verkippt werden.

Bei dem in Fig. 21 bis 30A-30D dargestellten Ausführungsbeispiel ist der Eingriffsabschnitt 341 nicht an dem scheibenförmigen Basisabschnitt 300 geformt, sondern an dem von dem Basisabschnitt 300 entlang der Schließrichtung X vorstehenden Zapfenelement 340, sodass der Eingriffsabschnitt 341 entlang der Schließrichtung X von dem Basisabschnitt 300 beabstandet ist und zudem der umlaufende Kantenabschnitt 305 des Basisabschnitts 300 radial außerhalb des Eingriffsabschnitts 241 angeordnet ist.

Räumlich ist der Eingriffsabschnitt 341 somit von dem Basisabschnitt 300 getrennt. Funktional ist zudem die Herstellung eines Formschlusses oder Kraftformschlusses über den Eingriffsabschnitt 341 getrennt von der Abstützung des Basisabschnitts 300 an dem Stützabschnitt 233 und dem Formschlussabschnitt 234. Dies kann zum Beispiel die Abstützung des Basisabschnitts 300 für eine Lastaufnahme an dem Stützabschnitt 233 und zudem für ein Entgegenwirken gegen ein Verkippen über den Formschlussabschnitt 234 begünstigen, indem der Basisabschnitt 300 einen vergleichsweise großen Hebelarm im Vergleich zu dem Eingriffsabschnitt 341 zur Abstützung bereitstellen kann.

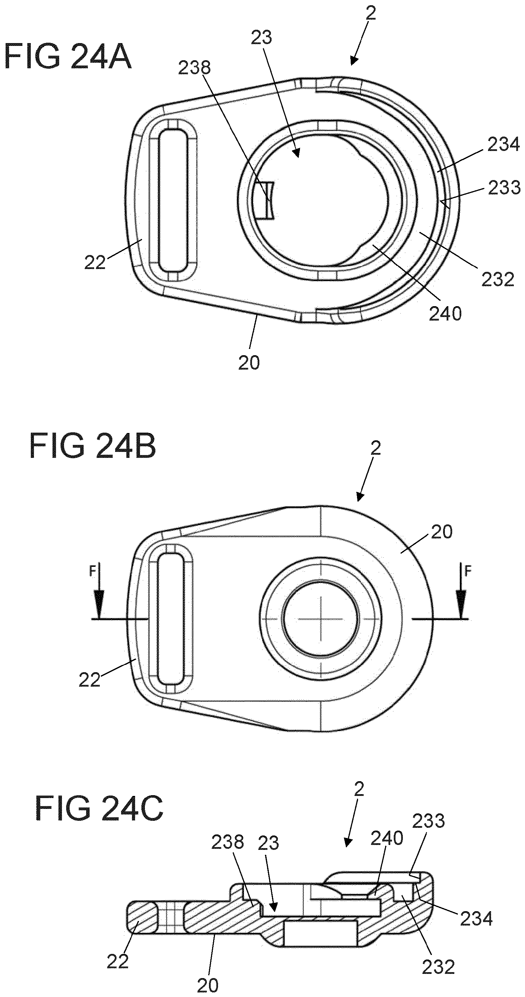

Bei dem Ausführungsbeispiel nach Fig. 21 bis 30A-30D ist der Stützabschnitt 233 starr an dem Grundkörper 20 des Verbindungsteils 2 durch einen Flächenabschnitt geformt, der senkrecht zu einer zur Schließrichtung X radialen Richtung erstreckt ist und dabei bogenförmig um die Schließrichtung X gekrümmt ist, wie dies aus Fig. 30B in Zusammenschau mit Fig. 24A ersichtlich ist. Ebenso ist der Formschlussabschnitt 234 in Form der Stufe bogenförmig gekrümmt und bildet somit eine Auflage für den Kantenabschnitt 305 des Basisabschnitts 300 aus.

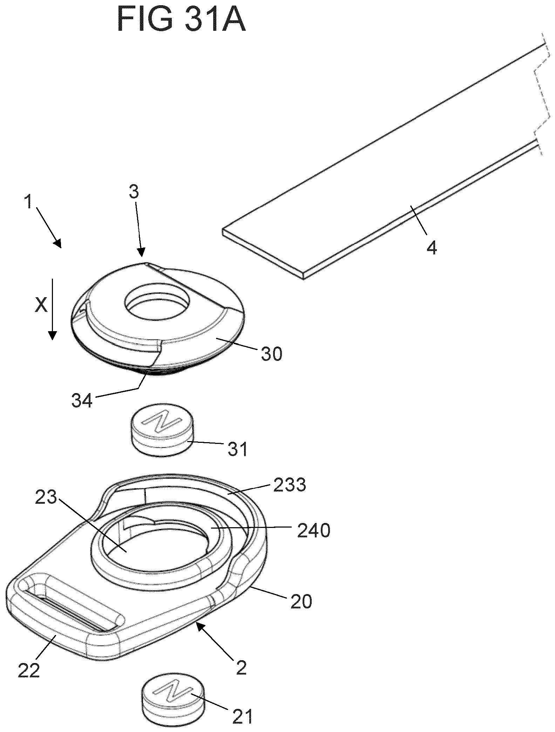

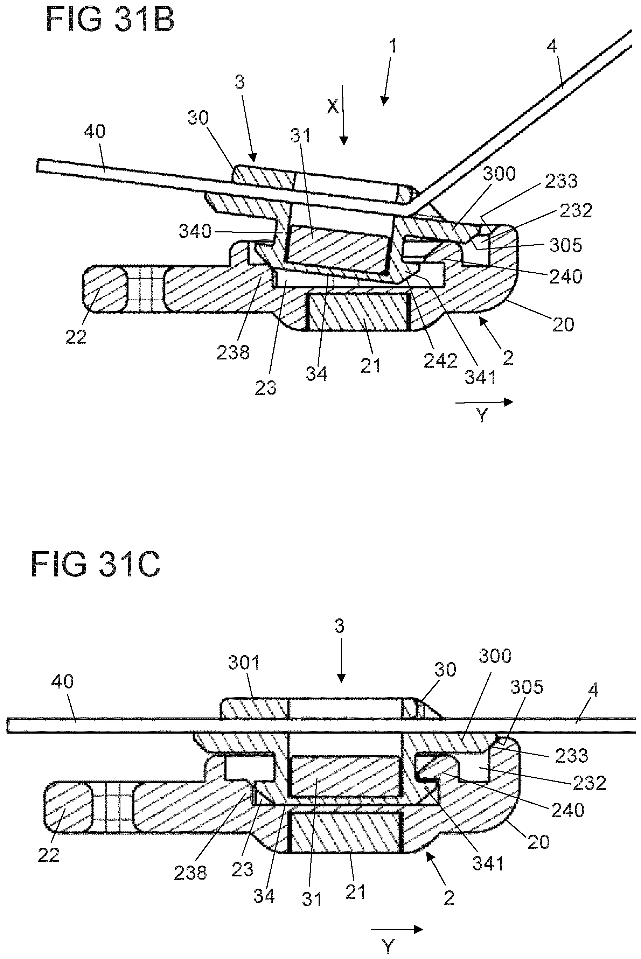

Bei einem abgewandelten, in Fig. 31A-31C dargestellten Ausführungsbeispiel erfüllt ein schräg zur Schließrichtung X erstreckter, bogenförmiger Stützabschnitt 233 demgegenüber gemeinsam die Funktion des Stützabschnitts 233 und des Formschlussabschnitts 234 des Ausführungsbeispiels gemäß Fig. 21 bis 30A-30D. Der schräg erstreckte Stützabschnitt 233 des Ausführungsbeispiels gemäß Fig. 31A-31C bildet eine Auflage für einen schrägen Kantenabschnitt 305 des Basisabschnitts 300 des Verbindungsteils 3, sodass über den Stützabschnitt 233 sowohl eine Abstützung in die Eingriffsrichtung Y als auch eine Abstützung gegen ein Verkippen, also entgegen einer Bewegung des Basisabschnitts 300 im vorderen Bereich in die Schließrichtung X, geschaffen wird.

Ansonsten ist das Ausführungsbeispiel gemäß Fig. 31A-31C identisch dem Ausführungsbeispiel gemäß Fig. 21 bis 30A-30D, sodass auch auf die vorangehenden Erläuterungen verwiesen werden soll.

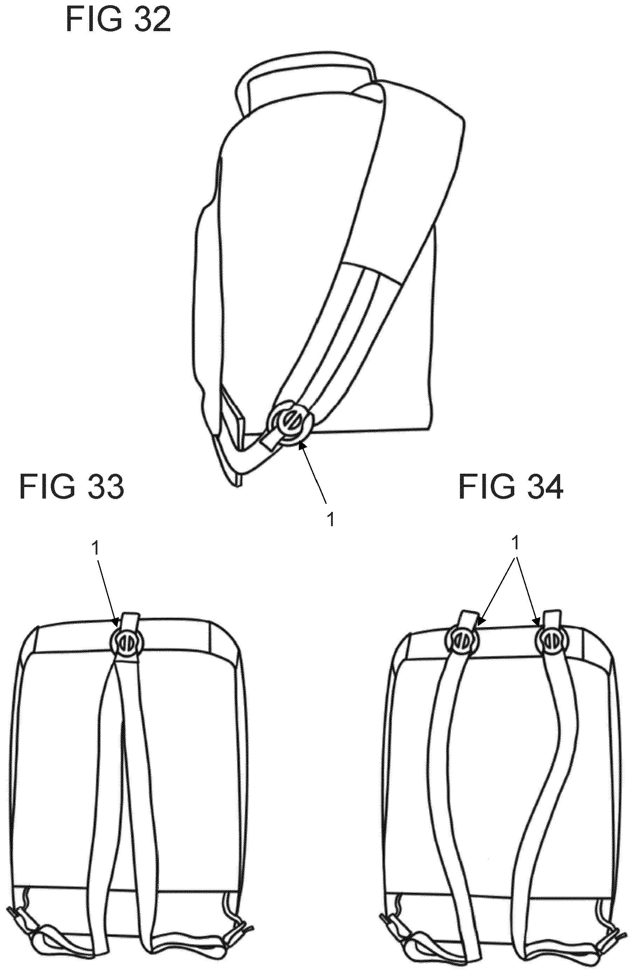

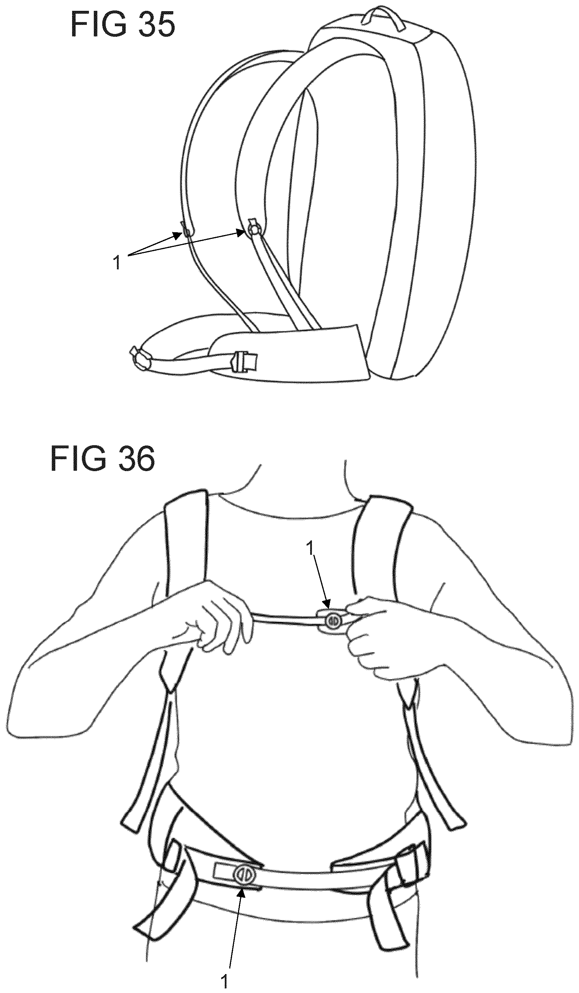

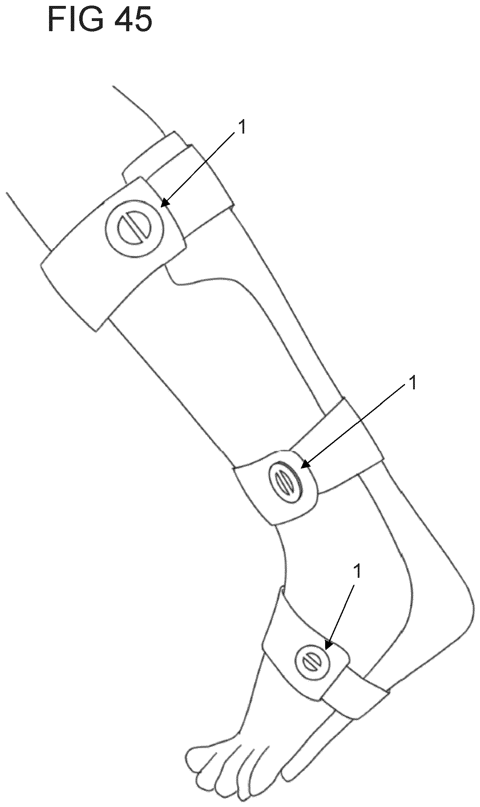

Fig. 32-58 zeigen beispielhafte Verwendungen einer Verbindungsvorrichtung 1, wie sie anhand der Ausführungsbeispiele nach Fig. 1-31 beschrieben worden ist.

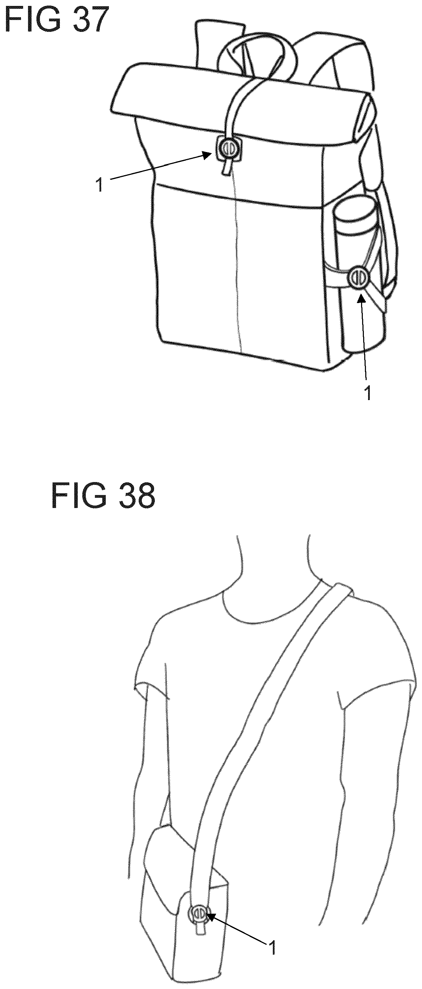

Eine Verbindungsvorrichtung 1 kann beispielsweise an einer Tasche oder einem Rucksack verwendet werden, wie in Fig. 32-39 dargestellt. Die Verbindungsvorrichtung 1 kann hierbei zum Verbinden von Gurtenden (Fig. 32, 35, 36 und 39), zum Verbinden von Gurten mit einem Taschenkörper (Fig. 33, 34 und 38) oder zum Schließen eines Deckels einer Tasche oder eines Rucksacks oder zum Anbringen eines Gegenstands an der Tasche oder dem Rucksack (Fig. 37) dienen.

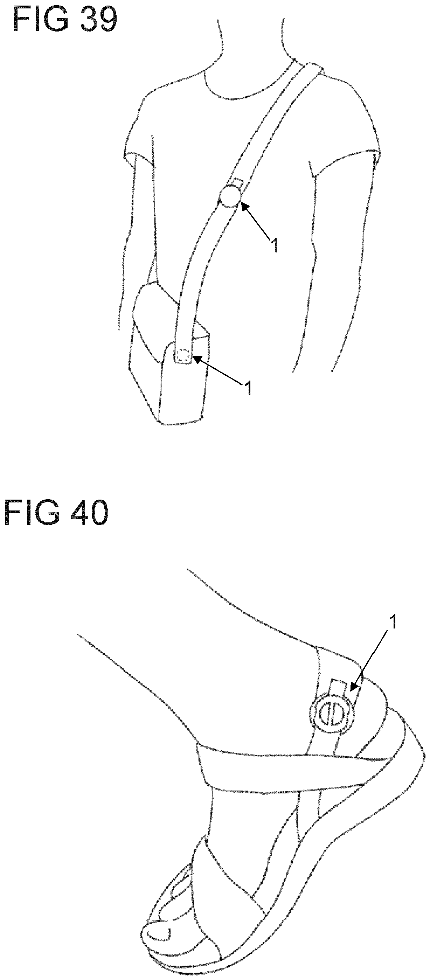

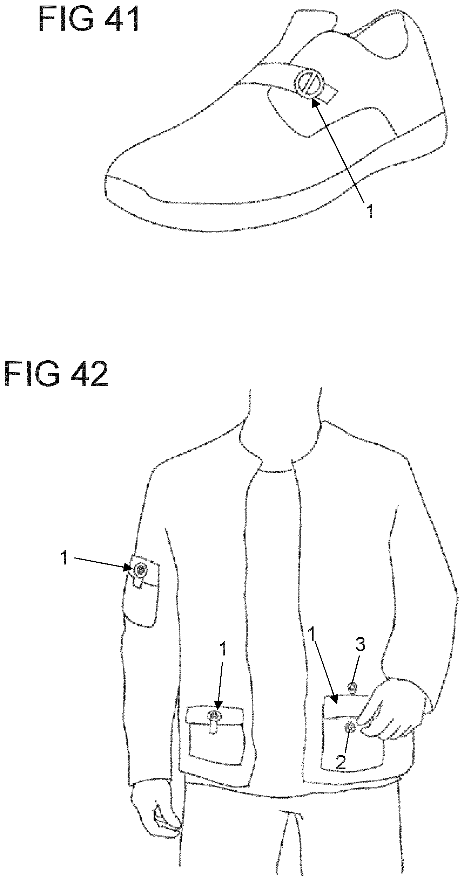

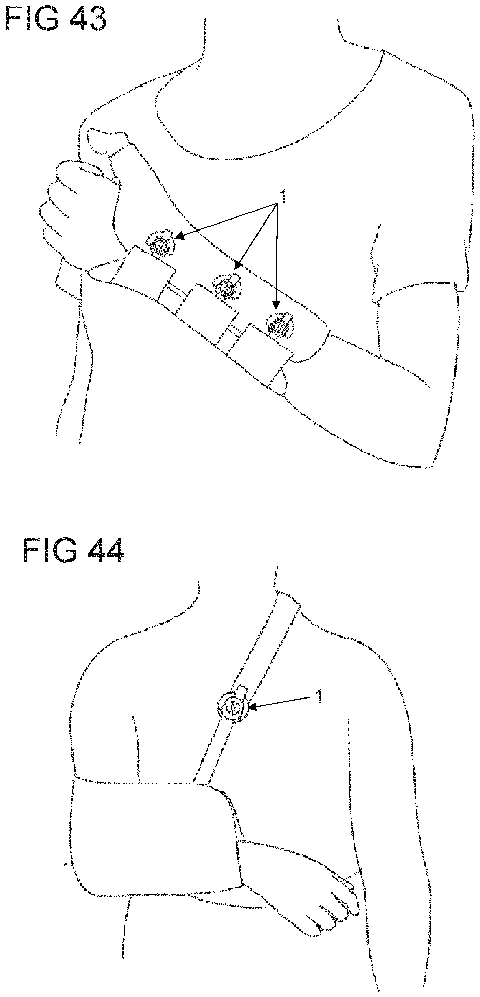

Die Verbindungsvorrichtung 1 kann als Verschluss für einen Schuh (Fig. 40 und 41), als Verschluss für Taschen an einem textilen Gegenstand, zum Beispiel einer Jacke oder Weste (Fig. 42), oder als Verschluss für eine medizinische Bandage (Fig. 43-45) dienen.

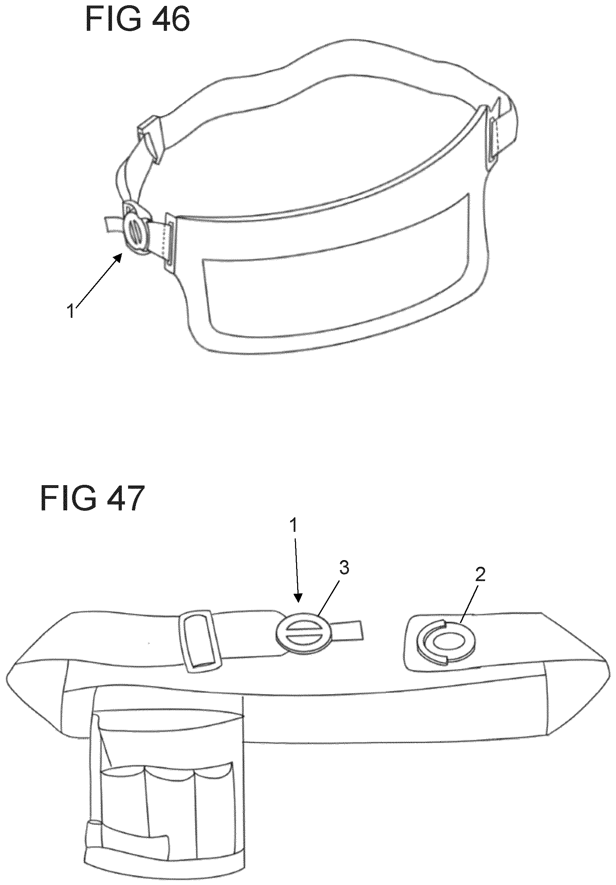

Die Verbindungsvorrichtung 1 kann als Verschluss für eine Bauchtasche (Fig. 46) oder für einen Werkzeuggurt (Fig. 47) dienen.

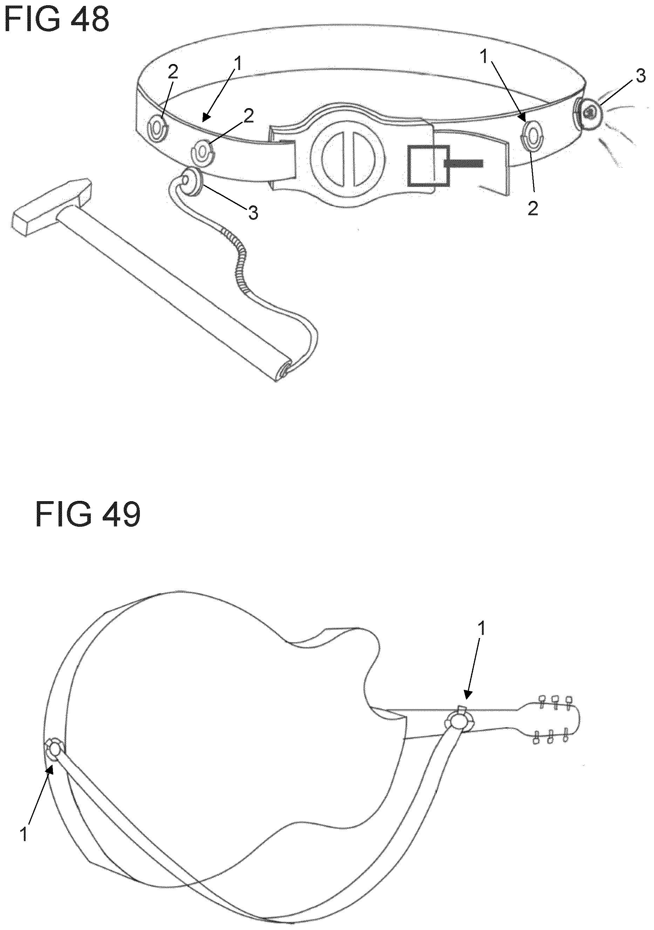

Ebenso kann die Verbindungsvorrichtung 1 als Halterung für Gegenstände, insbesondere von Werkzeugen oder Objekten, zum Beispiel einem elektronischen Gerät, einem Licht oder dergleichen, an einem Gürtel, insbesondere einem Werkzeuggürtel dienen (Fig. 48).

Die Verbindungsvorrichtung 1 kann als Verschluss für einen Gurt an einem Musikinstrument, zum Beispiel einer Gitarre, dienen (Fig. 49).

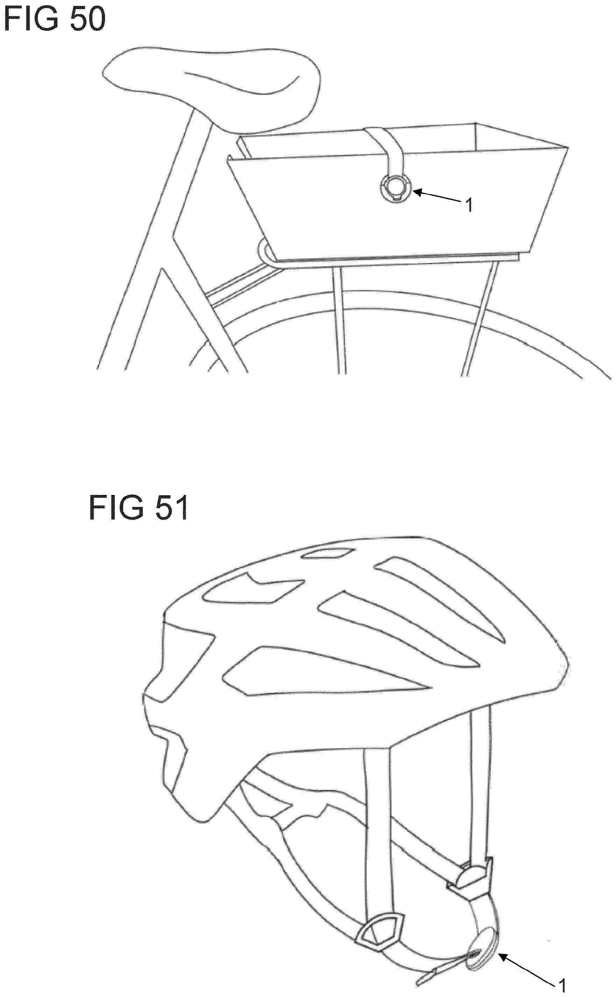

Die Verbindungsvorrichtung 1 kann zum Beispiel zum Befestigen eines Gurts an einem Fahrrad, zum Beispiel an einem Gepäckträger oder einem Korb an einem Fahrrad, dienen (Fig. 50).

Die Verbindungsvorrichtung 1 kann zudem als Verschluss für einen Helm (Fig. 51) dienen.

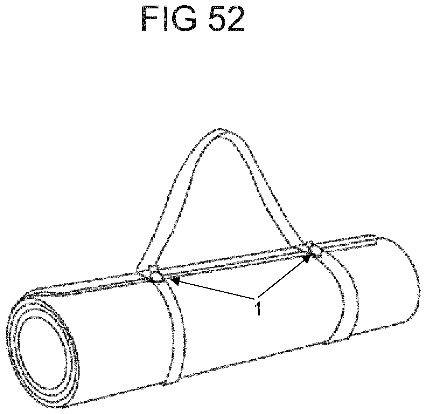

Die Verbindungsvorrichtung 1 kann einen Gurtverschluss zum Verschnüren eines Gegenstands, zum Beispiel einer Matte, bereitstellen (Fig. 52).

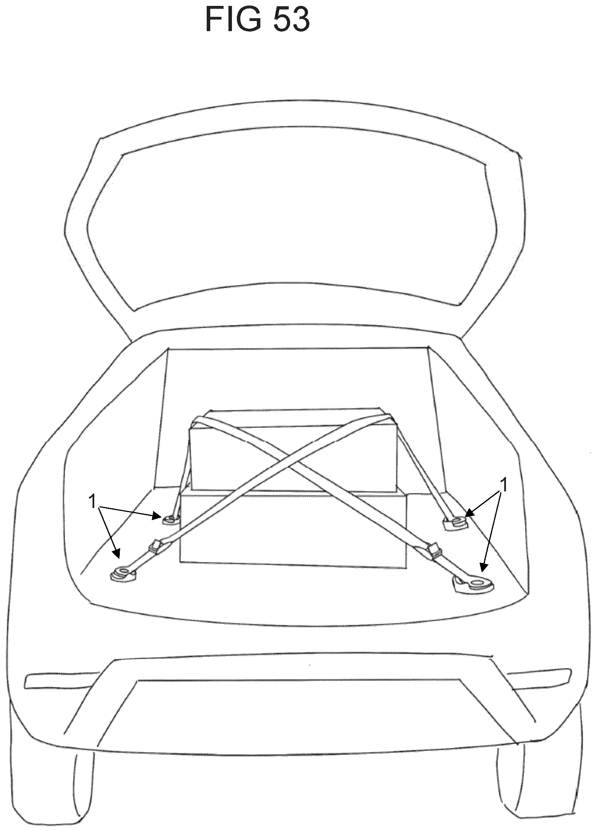

Die Verbindungsvorrichtung 1 kann darüber hinaus einen Verschluss für ein Gurtsystem zum Verstauen von Gepäck in einem Fahrzeug, zum Beispiel einem Pkw, zur Verfügung stellen (Fig. 53).

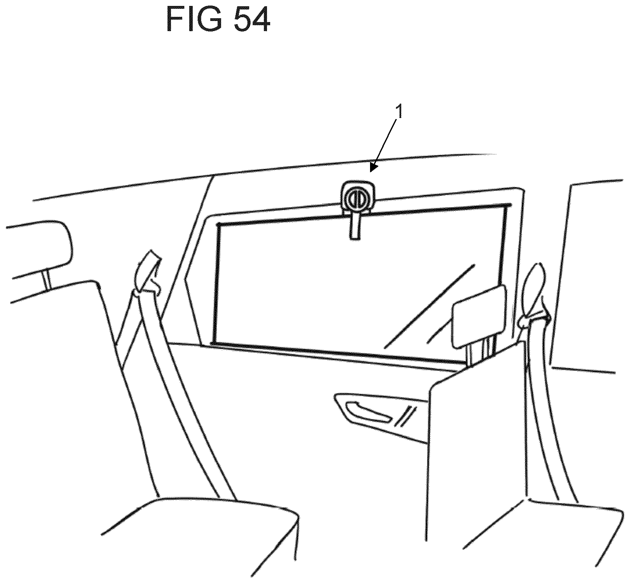

Die Verbindungsvorrichtung 1 kann als Verschluss für ein Verstellsystem im Innenraum eines Fahrzeugs zur Verfügung stellen, zum Beispiel für ein Sonnenrollo (Fig. 54).

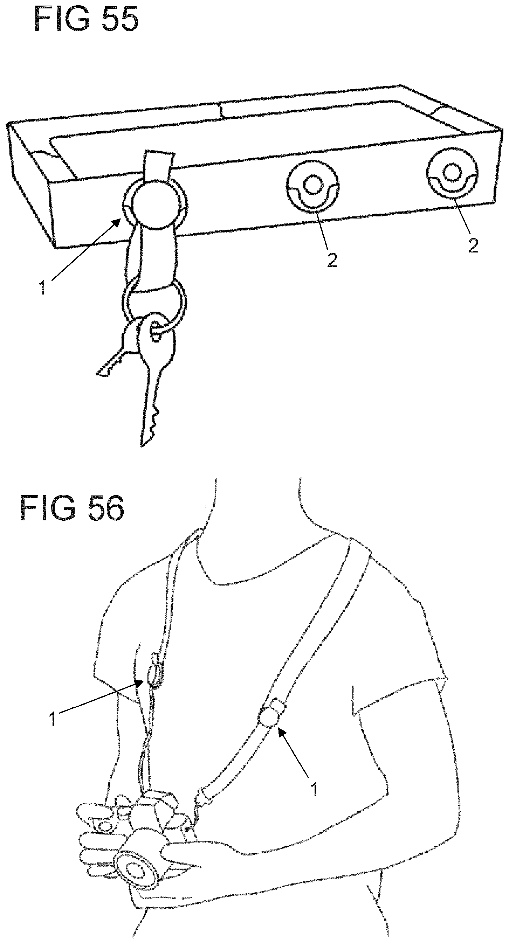

Die Verbindungsvorrichtung 1 kann eine Halterung für Gegenstände an einer Ablage, zum Beispiel für Schlüsselanhänger an einer Schlüsselablage, zur Verfügung stellen (Fig. 55).

Verbindungsvorrichtungen 1 können als Halterung für einen Fotoapparat, zum Beispiel zum Verbinden des Fotoapparats mit Gurten, dienen (Fig. 56).

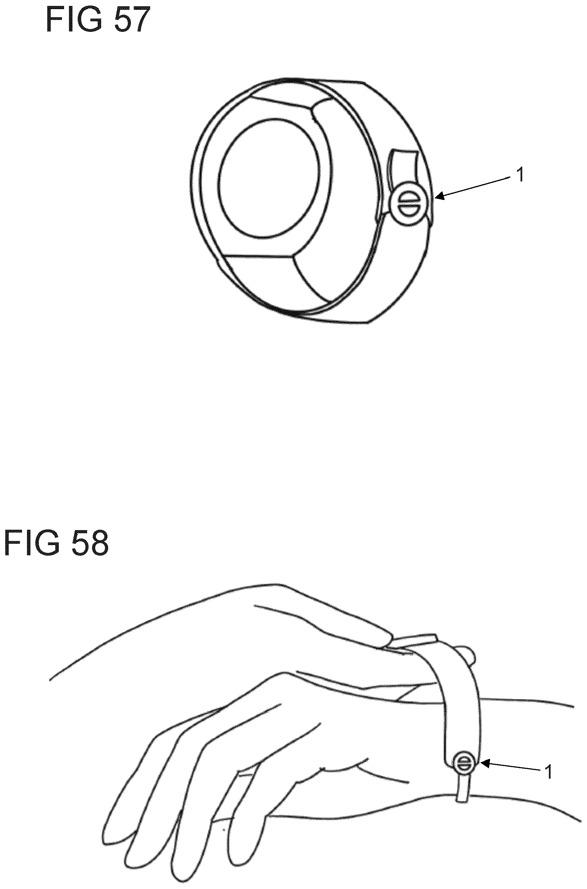

Eine Verbindungsvorrichtung 1 kann als Verschluss für eine Armbanduhr (Fig. 57) oder ein Armband (Fig. 58) dienen.

Bei allen genannten Anwendungen löst die Rotierbarkeit der Verbindungsteile 2, 3 wichtige Aspekte der Anforderung der jeweiligen Anwendung. Herkömmliche Steckverschlüsse, wie sie häufig für derartige Anwendung verwendet werden, sind nicht rotierbar.

Andere Anwendungsmöglichkeiten sind denkbar und möglich.

Der der Erfindung zugrunde liegende Gedanke ist nicht auf die dargestellten Ausführungsbeispiele beschränkt, sondern lässt sich auch in anderer Weise verwirklichen.

Insbesondere kann eine Verbindungsvorrichtung der beschriebenen Art nicht nur als Gurtbandverschluss zum Verbinden von Grundenden oder als Objektbefestigungseinrichtung verwendet werden. Eine Verbindungsvorrichtung der beschriebenen Art kann zum Verbinden ganz beliebiger Baugruppen miteinander eingesetzt werden.

### Bezugszeichenliste

- 1: Verbindungsvorrichtung
- 2: Verbindungsteil (Female-Teil)
- 20: Grundkörper
- 21: Magneteinrichtung
- 22: Gurtbandaufnahme
- 23: Aufnahmeöffnung
- 230: Bodenfläche
- 231: Aussparung
- 232: Eintauchöffnung
- 233: Stützabschnitt
- 234: Stufe
- 235: Auflaufschräge
- 236: Blockierabschnitt (Begrenzungswandung)
- 237: Übergangsfläche
- 238: Blockierabschnitt
- 24: Eingriffseinrichtung
- 240, 241: Eingriffsvorsprung
- 242, 243: Erhabener Abschnitt
- 244, 245: Gleitschräge
- 25: Befestigungsöffnung
- 3: Verbindungsteil (Male-Teil)
- 30: Grundkörper
- 300: Basisabschnitt
- 300A-C: Bereich
- 301: Befestigungsabschnitt
- 302: Basisfläche
- 303: Blockierelement (Bund)
- 304: Kante
- 305: Kantenabschnitt
- 306: Austrittslinie
- 31: Magneteinrichtung
- 32: Gurtbandaufnahme
- 34: Eingriffseinrichtung
- 340: Zapfenelement
- 341: Eingriffsabschnitt
- 342: Schrägfläche (Konus)
- 35: Befestigungsöffnung
- 4: Gurt
- 40: Betätigungsabschnitt
- 5: Gurt
- A: Abgleitbewegung
- B: Achse
- H: Höhenrichtung
- K: Kippachse
- N: Normalenrichtung
- Q: Querrichtung
- R: Rotationsachse
- U: Umfangsrichtung
- X: Schließrichtung
- Y: Eingriffsrichtung

## Patentansprüche

1. Verbindungsvorrichtung (1), mit
einem ersten Verbindungsteil (2), das einen ersten Grundkörper (20) und zumindest einen starr an dem ersten Grundkörper (20) angeordneten Eingriffsvorsprung (240, 241) aufweist, und
einem in eine Schließrichtung (X) an das erste Verbindungsteil (2) ansetzbaren, zweiten Verbindungsteil (3), das einen zweiten Grundkörper (30) mit einem starr an dem zweiten Grundkörper (30) angeordneten Eingriffsabschnitt (341) aufweist, wobei der Eingriffsabschnitt (341) entlang einer von der Schließrichtung (X) unterschiedlichen Eingriffsrichtung (Y) mit dem zumindest einen Eingriffsvorsprung (240, 241) des ersten Verbindungsteils (2) in Eingriff bringbar ist, sodass in einer verbundenen Stellung des ersten Verbindungsteils (2) und des zweiten Verbindungsteils (3) der Eingriffsabschnitt (341) mit dem zumindest einen Eingriffsvorsprung (240, 241) des ersten Verbindungsteils (2) in Eingriff steht,
wobei das erste Verbindungsteil (2) eine erste Magneteinrichtung (21) und das zweite Verbindungsteil (3) eine zweite Magneteinrichtung (31) aufweisen, wobei die erste Magneteinrichtung (21) und die zweite Magneteinrichtung (31) zum Unterstützen des Ansetzens des ersten Verbindungsteils (2) und des zweiten Verbindungsteils (3) aneinander entlang der Schließrichtung (X) magnetisch anziehend zusammenwirken,
**dadurch gekennzeichnet, dass** der erste Grundkörper (20) einen Formschlussabschnitt (234) aufweist, an dem der zweite Grundkörper (30) in der verbundenen Stellung des ersten Verbindungsteils (2) und des zweiten Verbindungsteils (3) zum Entgegenwirken gegen ein Verkippen des zweiten Verbindungsteils (3) relativ zu dem ersten Verbindungsteil (2) anliegt,
wobei der zweite Grundkörper (30) in der verbundenen Stellung in einem ersten Bereich (300A) an dem ersten Grundkörper (20) anliegt, in einem in die Eingriffsrichtung (Y) an den ersten Bereich (300A) anschließenden, zweiten Bereich (300B) nicht an dem ersten Grundkörper (20) anliegt, sodass betrachtet entlang der Schließrichtung (X) ein Freiraum zwischen dem ersten Grundkörper (20) und dem zweiten Grundkörper (30) gebildet ist, und ein in die Eingriffsrichtung (Y) an den zweiten Bereich (300B) anschließender oder beabstandeter, dritter Bereich (300C) an dem Formschlussabschnitt (234) abgestützt ist.

2. Verbindungsvorrichtung (1) nach Anspruch 1, **dadurch gekennzeichnet, dass** in einem belasteten Zustand bei bestimmungsgemäßer Belastung eine Lastkraft zumindest mit einer Richtungsvektorkomponente in die Eingriffsrichtung (Y) auf das zweite Verbindungsteil (3) relativ zu dem ersten Verbindungsteil (2) wirkt.

3. Verbindungsvorrichtung (1) nach Anspruch 1 oder 2, **dadurch gekennzeichnet, dass** der zweite Grundkörper (30) ausgebildet ist, bei einem Verkippen des ersten Verbindungsteils (2) und des zweiten Verbindungsteils (3) relativ zueinander sich mit dem zweiten Bereich (300B) und/oder dem dritten Bereich (300C) in die Schließrichtung (X) dem ersten Grundkörper (20) unter Verkleinerung des Freiraums anzunähern, und/oder
dass der erste Grundkörper (20) eine Eintauchöffnung (232) aufweist, in die der dritte Bereich (300C) des zweiten Grundkörpers (30) bei einem Verkippen des zweiten Verbindungsteils (3) relativ zu dem ersten Verbindungsteil (2) in die Schließrichtung (X) eintaucht, wobei insbesondere die Eintauchöffnung (232) betrachtet entlang der Schließrichtung (X) zumindest teilweise unterhalb des zumindest einen Eingriffsvorsprungs (240, 241) angeordnet ist.

4. Verbindungsvorrichtung (1) nach einem der vorangehenden Ansprüche, **dadurch gekennzeichnet, dass**
- der Formschlussabschnitt (234) durch eine Stufe gebildet ist, auf der der zweite Grundkörper (30) in der verbundenen Stellung aufliegt, und/oder
- der Formschlussabschnitt (234) durch einen senkrecht oder schräg zur Schließrichtung (X) gerichteten Flächenabschnitt ausgebildet ist, und/oder
- der Formschlussabschnitt (234), betrachtet entlang der Schließrichtung (X), zu dem zumindest einen Eingriffsvorsprung (240, 241) beabstandet ist, und/oder
- der Formschlussabschnitt (234), betrachtet entlang der Eingriffsrichtung (Y), zu dem zumindest einen Eingriffsvorsprung (240, 241) beabstandet ist.

5. Verbindungsvorrichtung (1) nach einem der vorangehenden Ansprüche, **dadurch gekennzeichnet, dass** der erste Grundkörper (20) einen starr an dem ersten Grundkörper (20) geformten Stützabschnitt (233) aufweist, wobei in der verbundenen Stellung der zweite Grundkörper (30) an dem Stützabschnitt (233) für eine Lastaufnahme in die Eingriffsrichtung (Y) abgestützt ist.

6. Verbindungsvorrichtung (1) nach Anspruch 5, **dadurch gekennzeichnet, dass**
- der Stützabschnitt (233) um die Schließrichtung (X) bogenförmig gekrümmt ist und/oder
- der Stützabschnitt (233), betrachtet entlang der Schließrichtung (X), zu dem zumindest einen Eingriffsvorsprung (240, 241) beabstandet ist, und/oder
- der Stützabschnitt (233), betrachtet entlang der Eingriffsrichtung (Y), zu dem zumindest einen Eingriffsvorsprung (240, 241) beabstandet ist, und/oder
- der Stützabschnitt (233) durch einen Flächenabschnitt ausgebildet ist, der parallel oder schräg zur Schließrichtung (X) gerichtet ist.

7. Verbindungsvorrichtung (1) nach einem der vorangehenden Ansprüche, **dadurch gekennzeichnet, dass** das zweite Verbindungsteil (3) in der verbundenen Stellung um die Schließrichtung (X) zu dem ersten Verbindungsteil (2) verdrehbar ist und bei einem Verdrehen der Eingriff des Eingriffsabschnitts (341) mit dem zumindest einen Eingriffsvorsprung (240, 241) bestehen bleibt, wobei insbesondere das zweite Verbindungsteil (3) in der verbundenen Stellung um einen Winkel von mindestens 10°, vorzugsweise mindestens 20°, um die Schließrichtung (X) zu dem ersten Verbindungsteil (2) bewegbar ist.

8. Verbindungsvorrichtung (1) nach einem der vorangehenden Ansprüche, **dadurch gekennzeichnet, dass** das erste Verbindungsteil (2) einen starr an dem ersten Grundkörper (20) angeordneten Blockierabschnitt (236, 238) aufweist, der ausgebildet ist, in der verbundenen Stellung mit dem zweiten Verbindungsteil (3) zusammenzuwirken, um den Eingriff des Eingriffsabschnitts (341) mit dem zumindest einen Eingriffsvorsprung (240, 241) entgegen der Eingriffsrichtung (Y) zu blockieren, wobei das zweite Verbindungsteil (3) zu dem ersten Verbindungsteil (2) verkippbar ist, um zum Trennen des ersten Verbindungsteils (2) und des zweiten Verbindungsteils (3) voneinander die Blockierung entgegen der Eingriffsrichtung (Y) aufzuheben und ein Außereingriffbringen des Eingriffsabschnitts (341) und des zumindest einen Eingriffsvorsprungs (240, 241) zu ermöglichen.

9. Verbindungsvorrichtung (1) nach Anspruch 8, **dadurch gekennzeichnet, dass** das zweite Verbindungsteil (3) ein starr an dem zweiten Grundkörper (30) angeordnetes Blockierelement (303) zum Zusammenwirken mit dem Blockierabschnitt (236, 238) des ersten Verbindungsteils (2) aufweist, wobei insbesondere
- das Blockierelement (303) in der verbundenen Stellung relativ zu dem Blockierabschnitt (236, 238) des ersten Verbindungsteils (2) um die Schließrichtung (X) verdrehbar ist, wobei bei einem Verdrehen die Blockierung des Eingriffs des Eingriffsabschnitts (341) mit dem zumindest einen Eingriffsvorsprung (240, 241) bestehen bleibt, und/oder
- der erste Grundkörper (20) eine Aussparung (231) aufweist, die zumindest abschnittsweise durch den Blockierabschnitt (236, 238) begrenzt ist, wobei in der verbundenen Stellung das Blockierelement (303) in der Aussparung (231) angeordnet ist, sodass der Eingriff des Eingriffsabschnitts (341) mit dem zumindest einen Eingriffsvorsprung (240, 241) blockiert ist, und/oder
- der Blockierabschnitt (236, 238) eine Auflaufschräge (235) aufweist, wobei die Auflaufschräge (235) ausgebildet ist, eine Gleitführung für das Blockierelement (303) entgegen der Eingriffsrichtung (Y) bei einem Verkippen des zweiten Verbindungsteils (3) relativ zu dem ersten Verbindungsteil (2) bereitzustellen.

10. Verbindungsvorrichtung (1) nach einem der vorangehenden Ansprüche, **dadurch gekennzeichnet, dass** der Eingriffsabschnitt (341) sich umfänglich um die Schließrichtung (X) erstreckt, wobei insbesondere der Eingriffsabschnitt (341) mit Bezug auf die Schließrichtung (X) rotationssymmetrisch ausgebildet ist.

11. Verbindungsvorrichtung (1) nach einem der vorangehenden Ansprüche, **dadurch gekennzeichnet, dass** der zweite Grundkörper (30) des zweiten Verbindungsteils (3) einen Basisabschnitt (300) aufweist, der den Eingriffsabschnitt (341) ausbildet oder zu dem der Eingriffsabschnitt (341) entlang der Schließrichtung (X) beabstandet ist.

12. Verbindungsvorrichtung (1) nach Anspruch 11, **dadurch gekennzeichnet, dass**
- der zweite Grundkörper (30) einen von dem Basisabschnitt (300) entlang der Schließrichtung (X) vorstehendes Zapfenelement (340) aufweist, an dem der Eingriffsabschnitt (341) angeordnet ist und zu dem der Eingriffsabschnitt (341) entlang der Eingriffsrichtung (Y) vorspringt und/oder
- der Basisabschnitt (300) den Eingriffsabschnitt (341) radial zur Schließrichtung (X) überragt und/oder
- der Basisabschnitt (300) scheibenförmig ist und/oder
- der Basisabschnitt (300) einen Kantenabschnitt (305) aufweist, wobei in der verbundenen Stellung der Kantenabschnitt (305) des Basisabschnitts (300) an dem Formschlussabschnitt (234) abgestützt ist, und/oder
- der Kantenabschnitt (305) sich kreisförmig um die Schließrichtung (X) umfänglich an dem Basisabschnitt (300) erstreckt und/oder
- der Basisabschnitt (300) eine Basisfläche (302) und der erste Grundkörper (20) eine Bodenfläche (230) ausbilden, wobei die Basisfläche (302) in der verbundenen Stellung der Bodenfläche (230) entlang der Schließrichtung (X) zugewandt ist, und/oder
- zum Verkippen des zweiten Verbindungsteils (3) relativ zu dem ersten Verbindungsteil (2) der Basisabschnitt (300) um eine zur Schließrichtung (X) und zur Eingriffsrichtung (Y) senkrechte Kippachse (K) zu dem ersten Verbindungsteil (2) verkippbar ist.

13. Gurtbandverschluss mit einer Verbindungsvorrichtung (1) nach einem der vorangehenden Ansprüche.

14. Gurtbandverschluss nach Anspruch 13, **gekennzeichnet durch** einen Gurt (4), der mit dem zweiten Verbindungsteil (3) verbunden ist, wobei insbesondere
- der Gurt (4) fest und nicht verstellbar mit dem zweiten Verbindungsteil (3) verbunden ist und/oder
- das erste Verbindungsteil (2) zwei Eingriffsvorsprünge (240, 241) aufweist, die derart zueinander beabstandet sind, dass der Gurt (4) in der verbundenen Stellung des ersten Verbindungsteils (2) und des zweiten Verbindungsteils (3) zwischen den Eingriffsvorsprüngen (240, 241) hindurchführbar ist.

15. Objektbefestigungseinrichtung zum Befestigen eines Objekts an einer Baugruppe, mit einer Verbindungsvorrichtung (1) nach einem der Ansprüche 1 bis 12, wobei das Objekt an einem der Verbindungsteile (2, 3) und das andere der Verbindungsteile (2, 3) an der Baugruppe angeordnet ist.

## Claims

1. Connecting device (1), comprising
a first connecting part (2) which comprises has a first base body (20) and at least one engagement protrusion (240, 241) arranged rigidly on the first base body (20), and
a second connecting part (3) which can be placed against the first connecting part (2) in a closing direction (X) and comprises a second base body (30) with an engagement section (341) arranged rigidly on the second base body (30), wherein the engagement section (341) is engageable along an engagement direction (Y) different from the closing direction (X) with the at least one engagement protrusion (240, 241) of the first connecting part (2), so that in a connected position of the first connecting part (2) and the second connecting part (3) the engagement section (341) is engaged with the at least one engagement protrusion (240, 241) of the first connecting part (2),
wherein the first connecting part (2) comprises a first magnetic device (21) and the second connecting part (3) comprises a second magnetic device (31), wherein the first magnetic device (21) and the second magnetic device (31) cooperate in a magnetically attracting manner to support the attachment of the first connecting part (2) and the second connecting part (3) to one another along the closing direction (X),
**characterized in that** the first base body (20) comprise a positive-locking section (234) against which the second base body (30) abuts in the connected position of the first connecting part (2) and the second connecting part (3) in order to counteract tilting of the second connecting part (3) relative to the first connecting part (2),
wherein the second base body (30) in the connected position abuts against the first base body (20) in a first region (300A) and does not abut against the first base body (20) in a second region (300B) adjoining the first region (300A) in the engagement direction (Y), so that, viewed along the closing direction (X), a free space is formed between the first base body (20) and the second base body (30), and a third region (300C), which is adjacent to or spaced from the second region (300B) in the engagement direction (Y), is supported on the positive-locking section (234).

2. Connecting device (1) according to claim 1, **characterized in that,** in a loaded state, when loaded as intended, a load force acts on the second connecting part (3) relative to the first connecting part (2) at least with a directional vector component in the engagement direction (Y).

3. Connecting device (1) according to claim 1 or 2, **characterized in that** the second base body (30) is configured to approach the first base body (20) with the second region (300B) and/or the third region (300C) in the closing direction (X) while reducing the free space when the first connecting part (2) and the second connecting part (3) are tilted relative to one another, and /or the first base body (20) comprises a plunge opening (232) into which the third region (300C) of the second base body (30) plunges when the second connecting part (3) is tilted relative to the first connecting part (2) in the closing direction (X), wherein the plunge opening (232) is arranged at least partially below the at least one engagement protrusion (240, 241) when viewed along the closing direction.

4. Connecting device (1) according to any one of the preceding claims, **characterized in that**
- the positive-locking section (234) is formed by a step on which the second base body (30) rests in the connected position, and/or
- the positive-locking section (234) is formed by a surface section directed perpendicularly or obliquely to the closing direction (X), and/or
- the positive-locking section (234), viewed along the closing direction (X), is spaced apart from the at least one engagement protrusion (240, 241), and/or
- the positive-locking section (234), viewed along the engagement direction (Y), is spaced apart from the at least one engagement protrusion (240, 241).

5. Connecting device (1) according to any one of the preceding claims, **characterized in that** the first base body (20) comprises a support section (233) rigidly formed on the first base body (20), wherein, in the connected position, the second base body (30) is supported on the support section (233) for receiving a load in the engagement direction (Y).

6. Connecting device (1) according to claim 5, **characterized in that**
- the support section (233) is curved in an arcuate manner around the closing direction (X), and/or
- the support section (233), viewed along the closing direction (X), is spaced apart from the at least one engagement protrusion (240, 241), and/or
- the support section (233), viewed along the engagement direction (Y), is spaced apart from the at least one engagement protrusion (240, 241), and/or
- the support section (233) is formed by a surface section which is directed parallel or obliquely to the closing direction (X).

7. Connecting device (1) according to any one of the preceding claims, **characterized in that** the second connecting part (3) is twistable about the closing direction (X) with respect to the first connecting part (2) in the connected position and the engagement of the engagement section (341) with the at least one engagement protrusion (240, 241) is maintained in the event of a twisting, wherein in particular the second connecting part (3) can be moved in the connected position by an angle of at least 10°, preferably at least 20°, about the closing direction (X) relative to the first connecting part (2).

8. Connecting device (1) according to any one of the preceding claims, **characterized in that** the first connecting part (2) comprises a blocking section (236, 238) which is arranged rigidly on the first base body (20) and is configured to interact with the second connecting part (3) in the connected position in order to block the engagement of the engagement section (341) with the at least one engagement protrusion (240, 241) against the engagement direction (Y), wherein the second connecting part (3) is tiltable relative to the first connecting part (2) in order to release the blocking against the engagement direction (Y) in order to separate the first connecting part (2) and the second connecting part (3) from one another and to enable the engagement section (341) and the at least one engagement protrusion (240, 241) to be disengaged.

9. Connecting device (1) according to claim 8, **characterized in that** the second connecting part (3) comprises a blocking element (303) arranged rigidly on the second base body (30) for cooperating with the blocking section (236, 238) of the first connecting part (2), wherein in particular
- the blocking element (303), in the connected position, is twistable about the closing direction (X) relative to the blocking section (236, 238) of the first connecting part (2), wherein, in the event of a twisting, the blocking of the engagement of the engagement section (341) with the at least one engagement protrusion (240, 241) is maintained, and/or
- the first base body (20) comprises a recess (231) which is delimited at least in sections by the blocking section (236, 238), wherein the blocking element (303) is arranged in the recess (231) in the connected position so that the engagement of the engagement section (341) with the at least one engagement protrusion (240, 241) is blocked, and/or
- the blocking section (236, 238) comprises a run-up slope (235), wherein the run-up slope (235) is configured to provide a sliding guide for the blocking element (303) against the engagement direction (Y) when the second connecting part (3) is tilted relative to the first connecting part (2).

10. Connecting device (1) according to any one of the preceding claims, **characterized in that** the engagement section (341) extends circumferentially around the closing direction (X), wherein in particular the engagement section (341) is configured to be rotationally symmetrical with respect to the closing direction (X).

11. Connecting device (1) according to any one of the preceding claims, **characterized in that** the second base body (30) of the second connecting part (3) comprises a base section (300) which forms the engagement section (341) or to which the engagement section (341) is spaced along the closing direction (X).

12. Connecting device (1) according to claim 11, **characterized in that**
- the second base body (30) comprises a pin element (340) protruding from the base section (300) along the closing direction (X), on which the engagement section (341) is arranged and to which the engagement section (341) protrudes along the engagement direction (Y), and/or
- the base section (300) protrudes radially beyond the engagement section (341) with respect to the closing direction (X) and/or
- the base section (300) is disc-shaped and/or
- the base section (300) comprises an edge section (305), wherein, in the connected position, the edge section (305) of the base section (300) is supported on the positive-locking section (234) and/or
- the edge section (305) extends circumferentially around the closing direction (X) at the base section (300) and/or
- the base section (300) forms a base surface (302) and the first base body (20) forms a bottom surface (230), wherein the base surface (302) in the connected position faces the bottom surface (230) along the closing direction (X) and/or
- for tilting the second connecting part (3) relative to the first connecting part (2), the base section (300) can be tilted about a tilting axis (K) perpendicular to the closing direction (X) and to the engagement direction (Y) relative to the first connecting part (2).

13. Strap fastener, comprising a connecting device (1) according to any one of the preceding claims.

14. Strap fastener according to claim 13, **characterized by** a strap (4) which is connected to the second connecting part (3), wherein in particular
- the strap (4) is fixedly and non-adjustably connected to the second connecting part (3) and/or
- the first connecting part (2) comprises two engagement protrusions (240, 241) which are spaced apart from one another in such a way that the strap (4) can be guided-through between the engagement protrusions (240, 241) in the connected position of the first connecting part (2) and the second connecting part (3).

15. Object fastening device for fastening an object to an assembly, comprising a connecting device (1) according to any one of claims 1 to 12, wherein the object is arranged on one of the connecting parts (2, 3) and the other of the connecting parts (2, 3) is arranged on the assembly.

## Revendications

1. Dispositif de raccordement (1) avec
une première partie de raccordement (2), qui présente un premier corps de base (20) et au moins une partie faisant saillie de prise (240, 241) disposée de manière rigide sur le premier corps de base (20), et
une seconde partie de raccordement (3) pouvant être placée sur la première partie de raccordement (2) dans une direction de fermeture (X), laquelle présente un second corps de base (30) avec une section de prise (341) disposée de manière rigide sur le second corps de base (30), dans lequel la section de prise (341) peut être amenée en prise avec l'au moins une partie faisant saillie de prise (240, 241) de la première partie de raccordement (2) le long d'une direction de prise (Y) différente de la direction de fermeture (X) si bien que dans une position raccordée de la première partie de raccordement (2) et de la seconde partie de raccordement (3), la section de prise (341) est en prise avec l'au moins une partie faisant saillie de prise (240, 241) de la première partie de raccordement (2),
dans lequel la première partie de raccordement (2) présente un premier système magnétique (21) et la seconde partie de raccordement (3) présente un deuxième système magnétique (31), dans lequel le premier système magnétique (21) et le deuxième système magnétique (31) coopèrent de manière attractive magnétiquement le long de la direction de fermeture (X) pour soutenir le placement de la première partie de raccordement (2) et de la seconde partie de raccordement (3) l'une sur l'autre,
**caractérisé en ce que** le premier corps de base (20) présente une section à complémentarité de forme (234), sur laquelle le second corps de base (30) repose pour contrecarrer tout basculement de la seconde partie de raccordement (3) par rapport à la première partie de raccordement (2) dans la position raccordée de la première partie de raccordement (2) et de la seconde partie de raccordement (3),
dans lequel le second corps de base (30) repose sur le premier corps de base (20) dans la position raccordée dans une première zone (300A), ne repose pas sur le premier corps de base (20) dans une deuxième zone (300B) se raccordant à la première zone (300A) dans la direction de prise (Y) si bien que vu le long de la direction de fermeture (X), un espace libre est formé entre le premier corps de base (20) et le second corps de base (30) ; et une troisième zone (300C) se raccordant à la deuxième zone (300B) ou tenue à distance dans la direction de prise (Y) est soutenue sur la section à complémentarité de forme (234).

2. Dispositif de raccordement (1) selon la revendication 1, **caractérisé en ce que** dans un état sous contrainte, lors d'une contrainte conforme à l'usage prévu, une force de charge au moins avec une composante de vecteur de direction agit sur la seconde partie de raccordement (3) par rapport à la première partie de raccordement (2) dans la direction de prise (Y).

3. Dispositif de raccordement (1) selon la revendication 1 ou 2, **caractérisé en ce que** le second corps de base (30) est réalisé pour se rapprocher du premier corps de base (20) tout en réduisant l'espace libre dans la direction de fermeture (X) avec la deuxième zone (300B) et/ou la troisième zone (300C) lors d'un basculement de la première partie de raccordement (2) et de la seconde partie de raccordement (3) l'une par rapport à l'autre, et/ou
**que** le premier corps de base (20) présente une ouverture d'enfoncement (232), dans laquelle la troisième zone (300C) du second corps de base (30) s'enfonce dans la direction de fermeture (X) lors d'un basculement de la seconde partie de raccordement (3) par rapport à la première partie de raccordement (2), dans lequel en particulier l'ouverture d'enfoncement (232) est disposée au moins en partie sous l'au moins une partie faisant saillie de prise (240, 241) vue le long de la direction de fermeture (X).

4. Dispositif de raccordement (1) selon l'une quelconque des revendications précédentes, **caractérisé en ce que**
- la section à complémentarité de forme (234) est formée par un gradin, sur lequel le second corps de base (30) repose dans la position raccordée, et/ou
- la section à complémentarité de forme (234) est réalisée par une section de face dirigée de manière perpendiculaire ou à l'oblique par rapport à la direction de fermeture (X), et/ou
- la section à complémentarité de forme (234), vue le long de la direction de fermeture (X), est tenue à distance par rapport à l'au moins une partie faisant saillie de prise (240, 241), et/ou
- la section à complémentarité de forme (234), vue le long de la direction de prise (Y), est tenue à distance par rapport à l'au moins une partie faisant saillie de prise (240, 241).

5. Dispositif de raccordement (1) selon l'une quelconque des revendications précédentes, **caractérisé en ce que** le premier corps de base (20) présente une section d'appui (233) formée de manière rigide sur le premier corps de base (20), dans lequel dans la position raccordée, le second corps de base (30) est soutenu sur la section d'appui (233) pour une absorption de charge dans la direction de prise (Y).

6. Dispositif de raccordement (1) selon la revendication 5, **caractérisé en ce que**
- la section d'appui (233) est incurvée en forme d'arc autour de la direction de fermeture (X)
et/ou
- la section d'appui (233), vue le long de la direction de fermeture (X), est tenue à distance par rapport à l'au moins une partie faisant saillie de prise (240, 241), et/ou
- la section d'appui (233), vue le long de la direction de prise (Y), est tenue à distance par rapport à l'au moins une partie faisant saillie de prise (240, 241), et/ou
- la section d'appui (233) est réalisée par une section de face, qui est dirigée de manière parallèle ou à l'oblique par rapport à la direction de fermeture (X).

7. Dispositif de raccordement (1) selon l'une quelconque des revendications précédentes, **caractérisé en ce que** la seconde partie de raccordement (3) peut tourner par rapport à la première partie de raccordement (2) autour de la direction de fermeture (X) dans la position raccordée et lors d'une rotation, la prise de la section de prise (341) avec l'au moins une partie faisant saillie de prise (240, 241) demeure, dans lequel en particulier la seconde partie de raccordement (3) peut être déplacée par rapport à la première partie de raccordement (2) d'un angle d'au moins 10°, de préférence d'au moins 20°, autour de la direction de fermeture (X) dans la position raccordée.

8. Dispositif de raccordement (1) selon l'une quelconque des revendications précédentes, **caractérisé en ce que** la première partie de raccordement (2) présente une section de blocage (236, 238) disposée de manière rigide sur le premier corps de base (20), qui est réalisée pour coopérer avec la seconde partie de raccordement (3) dans la position raccordée pour bloquer la prise de la section de prise (341) avec l'au moins une partie faisant saillie de prise (240, 241) à l'encontre de la direction de prise (Y), dans lequel la seconde partie de raccordement (3) peut être basculée par rapport à la première partie de raccordement (2) pour annuler le blocage à l'encontre de la direction de prise (Y) pour séparer la première partie de raccordement (2) et la seconde partie de raccordement (3) l'une de l'autre et pour permettre une mise hors prise de la section de prise (341) et de l'au moins une partie faisant saillie de prise (240, 241).

9. Dispositif de raccordement (1) selon la revendication 8, **caractérisé en ce que** la seconde partie de raccordement (3) présente un élément de blocage (303) disposé de manière rigide sur le second corps de base (30) pour coopérer avec la section de blocage (236, 238) de la première partie de raccordement (2), dans lequel en particulier,
- l'élément de blocage (303) peut tourner autour de la direction de fermeture (X) par rapport à la section de blocage (236, 238) de la première partie de raccordement (2) dans la position raccordée, dans lequel lors d'une rotation, le blocage de la prise de la section de prise (341) avec l'au moins une partie faisant saillie de prise (240, 241) demeure, et/ou
- le premier corps de base (20) présente un évidement (231), qui est limité au moins par endroits par la section de blocage (236, 238), dans lequel dans la position raccordée, l'élément de blocage (303) est disposé dans l'évidement (231) si bien que la prise de la section de prise (341) avec l'au moins une partie faisant saillie de prise (240, 241) est bloquée, et/ou
- la section de blocage (236, 238) présente un chanfrein de contact (235), dans lequel le chanfrein de contact (235) est réalisé pour fournir un guidage glissant pour l'élément de blocage (303) à l'encontre de la direction de prise (Y) lors d'un basculement de la seconde partie de raccordement (3) par rapport à la première partie de raccordement (2).

10. Dispositif de raccordement (1) selon l'une quelconque des revendications précédentes, **caractérisé en ce que** la section de prise (341) s'étend en périphérie autour de la direction de fermeture (X), dans lequel en particulier la section de prise (341) est réalisée de manière symétrique en rotation par rapport à la direction de fermeture (X).

11. Dispositif de raccordement (1) selon l'une quelconque des revendications précédentes, **caractérisé en ce que** le second corps de base (30) de la seconde partie de raccordement (3) présente une section de base (300), qui réalise la section de prise (341) ou par rapport à laquelle la section de prise (341) est tenue à distance le long de la direction de fermeture (X).

12. Dispositif de raccordement (1) selon la revendication 11, **caractérisé en ce que**
- le second corps de base (30) présente un élément de tourillon (340) faisant saillie de la section de base (300) le long de la direction de fermeture (X), sur lequel la section de prise (341) est disposée et par rapport auquel la section de prise (341) fait saillie le long de la direction de prise (Y), et/ou
- la section de base (300) dépasse de la section de prise (341) de manière radiale par rapport à la direction de fermeture (X), et/ou
- la section de base (300) est en forme de disque, et/ou
- la section de base (300) présente une section de bord (305), dans lequel dans la position raccordée, la section de bord (305) de la section de base (300) est soutenue sur la section à complémentarité de forme (234), et/ou
- la section de bord (305) s'étend sur la section de base (300) en périphérie en forme de cercle autour de la direction de fermeture (X), et/ou
- la section de base (300) réalise une surface de base (302) et le premier corps de base (20) réalise une surface au sol (230), dans lequel la surface de base (302) est tournée vers la surface au sol (230) le long de la direction de fermeture (X) dans la position raccordée, et/ou
- la section de base (300) peut être basculée par rapport à la première partie de raccordement (2) autour d'un axe de basculement (K) perpendiculaire à la direction de fermeture (X) et à la direction de prise (Y) pour basculer la seconde partie de raccordement (3) par rapport à la première partie de raccordement (2).

13. Fermeture de sangle avec un dispositif de raccordement (1) selon l'une quelconque des revendications précédentes.

14. Fermeture de sangle selon la revendication 13, **caractérisée par** une ceinture (4), qui est raccordée à la seconde partie de raccordement (3), dans laquelle en particulier
- la ceinture (4) est raccordée de manière fixe et de manière non ajustable à la seconde partie de raccordement (3), et/ou
- la première partie de raccordement (2) présente deux parties faisant saillie de prise (240, 241), qui sont tenues à distance l'une de l'autre de telle manière que la ceinture (4) peut être guidée au travers entre les parties faisant saillie de prise (240, 241) dans la position raccordée de la première partie de raccordement (2) et de la seconde partie de raccordement (3).

15. Système de fixation d'objet destiné à fixer un objet sur un module, avec un dispositif de raccordement (1) selon l'une quelconque des revendications 1 à 12, dans lequel l'objet est disposé sur une des parties de raccordement (2, 3) et l'autre des parties de raccordement (2, 3) est disposée sur le module.
